Europäisches Patentamt

European Patent Office

Office européen des brevets

(19)

(11) **EP 1 492 259 A1**

(12) **EUROPEAN PATENT APPLICATION**
published in accordance with Art. 158(3) EPC

(43) Date of publication:
**29.12.2004 Bulletin 2004/53**

(51) Int Cl.⁷: **H04J 11/00**

(21) Application number: **03780893.8**

(86) International application number:
**PCT/JP2003/016260**

(22) Date of filing: **18.12.2003**

(87) International publication number:
**WO 2004/062149 (22.07.2004 Gazette 2004/30)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **27.12.2002 JP 2002382212**

(71) Applicant: **Sony Corporation
Tokyo 141-0001 (JP)**

(72) Inventors:
• **FUNAMOTO, Kazuhisa,
c/o SONY CORPORATION
Tokyo 141-0001 (JP)**

• **OKADA, Takahiro, c/o SONY CORPORATION
Tokyo 141-0001 (JP)**
• **IKEDA, Tamotsu, c/o SONY CORPORATION
Tokyo 141-0001 (JP)**
• **YAJIMA, Atsushi, c/o SONY CORPORATION
Tokyo 141-0001 (JP)**
• **IKEDA, Yasunari, c/o SONY CORPORATION
Tokyo 141-0001 (JP)**

(74) Representative: **Smith, Samuel Leonard
J.A. Kemp & Co.,
14 South Square,
Gray's Inn
London WC1R 5JJ (GB)**

(54) **OFDM DEMODULATION APPARATUS**

(57)    An OFDM demodulation (1) is provided which includes a guard correlation/peak time detection circuit (12) to generate a peak timing Np of a guard interval correlation value, and a timing synchronization circuit (13) to estimate a symbol-boundary time Nx from the peak timing Np. The timing synchronization circuit (13) calculates the symbol-boundary time Nx by filtering the peak time Np by a DLL (delay locked loop) filter (43). Further, the DLL filter (43) includes a limiter (52) to limit the range of phase-error component and an asymmetric gain circuit (53) to change the magnitude of the gain correspondingly to the polarity of the phase error to prevent the timing from being pulled out due to a fading or multipath.

FIG.27

EP 1 492 259 A1

**Description**

Technical Field

The present invention relates to a demodulator destined for demodulation of an OFDM (orthogonal frequency division multiplex) modulated signal.

This application claims the priority of the Japanese Patent Application No. 2002-382212 filed on December 27, 2002, the entirety of which is incorporated by reference herein.

Background Art

For transmission of digital signals, there is available a modulation technique called "OFDM" (orthogonal frequency division multiplex). The OFDM technique is such that data is digitally modulated for transmission by dividing a transmission frequency band into many orthogonal sub-carriers and assigning the data to the amplitude and phase of each of the sub-carriers by the phase shift keying (PSK) and quadrature amplitude modulation (QAM).

The OFDM technique is characterized in that since a transmission frequency band is divided into many sub-carriers, so the band per sub-carrier is narrower and the modulation rate is lower, while the transmission rate is not totally so different from that in the conventional modulation technique. The OFDM technique is also characterized in that since many sub-carriers are transmitted in parallel, so the symbol rate is lower and the time length of a multipath in relation to that of a symbol can be reduced so that the OFDM technique will not easily be affected by the multipath fading.

Also, the OFDM technique is characterized in that since data is assigned to a plurality of sub-carriers, so a transmission/reception circuit can be formed from an inverse fast Fourier transform (IFFT) calculation circuit in order to modulate the data, while it can be formed from a fast Fourier transform (FFT) calculation circuit in order to demodulate the modulated data.

Because of the above-mentioned characteristics, the OFDM technique is frequently applied to the digital terrestrial broadcasting which is critically affected by the multipath fading. To the digital terrestrial broadcasting adopting the OFDM technique, there is applied the Digital Video Broadcasting-Terrestrial (DVB-T) standard, Integrated Services Digital Broadcasting-Terrestrial (ISDB-T) standard or the like, for example.

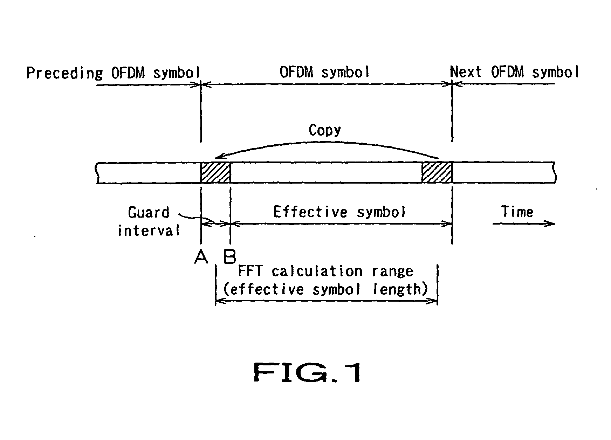

As shown in FIG. 1, the transmission symbol used in the OFDM technique (will be referred to as "OFDM symbol" hereunder) is formed from an effective symbol as a signal duration for which IFFT is effected for transmission of data, and a guard interval as a copy of the waveform of an end portion of the effective symbol. The guard interval is provided in the leading portion of the OFDM symbol. Owing to such a guard interval, the OFDM technique allows a multipath-caused inter-symbol fading and improves the multipath resistance.

In the mode 3 of the ISDB-$T_{SB}$ standard (broadcasting standard for the digital terrestrial broadcasting, adopted in Japan), the effective symbol includes 512 sub-carriers spaced 125/126 kHz ($\approx$ 0.992 kHz) from one to a next one. Also in the mode 3 of the ISDB-$T_{SB}$ standard, transmission data is modulated to 433 of the 512 sub-carriers in the effective symbol. Further in the mode 3 of the ISDB-$T_{SB}$ standard, the length of time of the guard interval is 1/4, 1/8, 1/16 or 1/32 of that of the effective symbol.

Here a conventional OFDM transmitter will be illustrated and described.

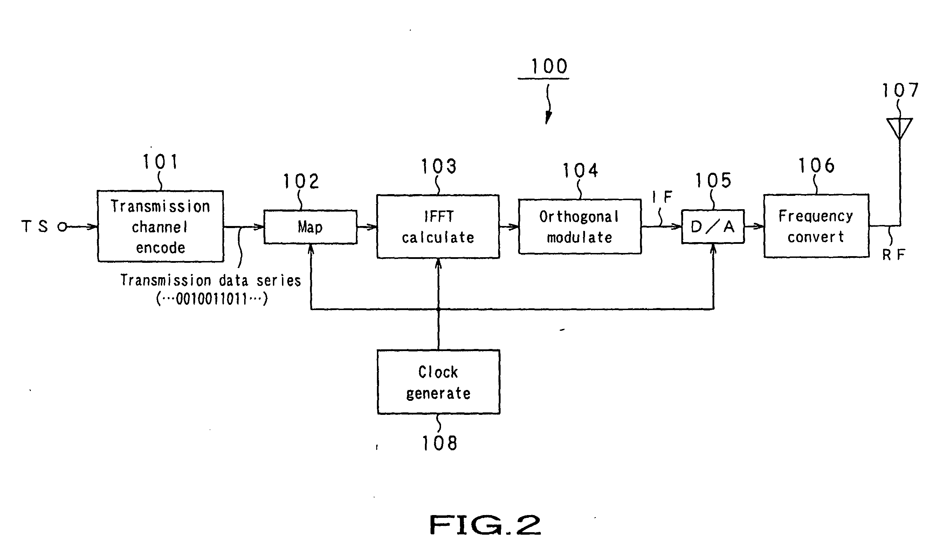

The conventional OFDM transmitter is schematically illustrated in the form of a block diagram in FIG. 2.

The OFDM transmitter, generally indicated with a reference 100, includes a transmission-channel encoding circuit 101, mapping circuit 102, IFFT calculation circuit 103, orthogonal modulation circuit 104, D-A (digital-to-analog) conversion circuit 105, frequency conversion circuit 106, antenna 107, and a clock generation circuit 108, as shown in FIG. 2.

The transmission-channel encoding circuit 101 is supplied with the transport stream (TS) defined in the MPEG-2 Systems, for example. In the transmission-channel encoding circuit 101, the supplied TS is subjected to Reed-Solomon coding, energy spreading, interleaving, convolution coding, OFDM framing, etc. to provide a series of transmission data series The transmission data series generated by the transmission-channel encoding circuit 101 is supplied to the mapping circuit 102.

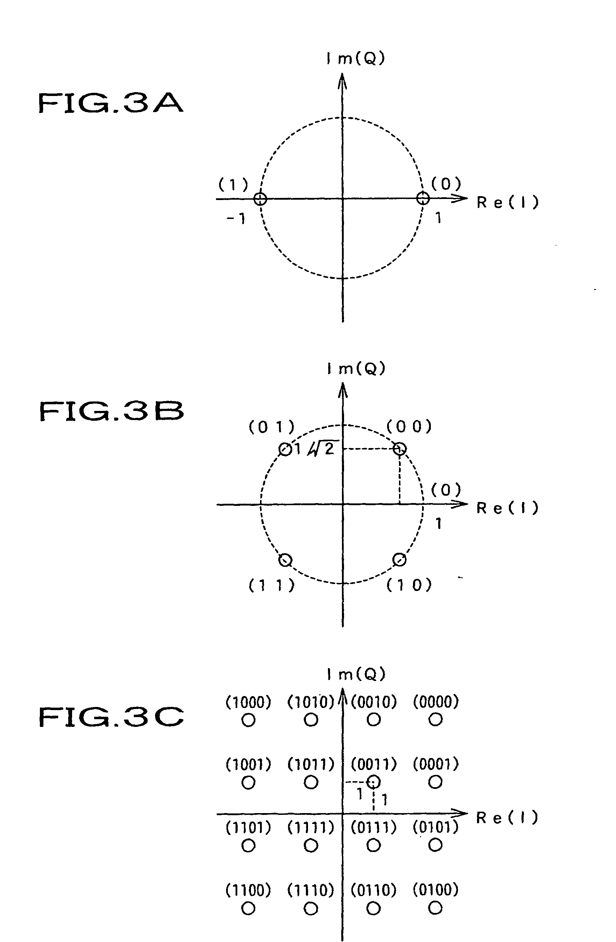

The mapping circuit 102 divides the supplied transmission data series in units of *k* bits, and maps the transmission data series to a complex signal at every *k* bits by BPSK, QPSK, 16QAM or 64QAM technique. With the BPSK technique, for example, the transmission data series is divided in units of *k* (= 1) bits and the value of the quotient of one bit (0 or 1, binary) is assigned to $\pm 1$ of the complex signal as shown in FIG. 3A. With the QPSK technique, the transmission data series is divided in units of *k* (= 2) bits and the value of the quotient of 2 bits (00 to 11, binary) is assigned to $(1/\sqrt{2}) \pm j(1/\sqrt{2})$ of the complex signal as shown in FIG. 3B. With the 16QAM technique, the transmission data series is divided in units of *k* (= 4) bits and the value of the quotient of 4 bits (0000 to 1111, binary) is assigned to $(a + jb)$ : a, b$\in$ {$\pm 3$, $\pm 3$} as shown in FIG. 3C. The complex signal is supplied from the mapping circuit 102 to the IFFT calculation circuit 103.

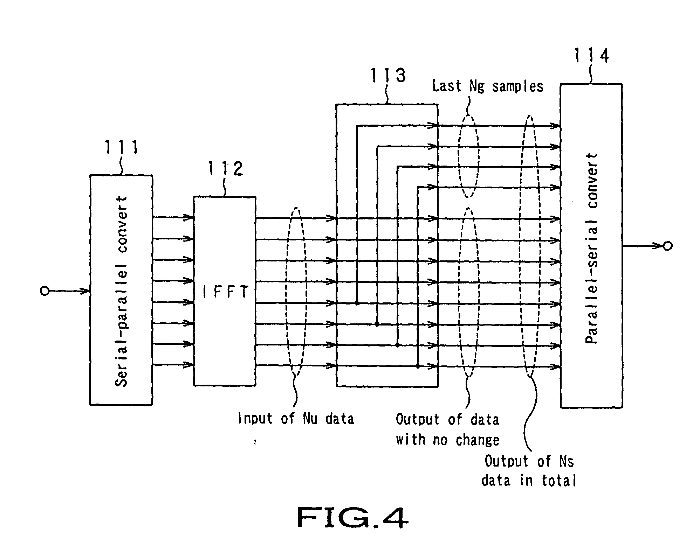

As shown in FIG. 4, the IFFT calculation circuit 103 includes a serial-parallel converter 111, IFFT calculator 112, guard interval adder 113, and a parallel-serial converter 114.

The serial-parallel converter 111 extracts the complex signal supplied from the mapping circuit 102 in a predetermined position, and divides it into parallel signals at every Nu samples. The "*Nu*" is the number of samples of the effective symbol. The IFFT calculator 112 makes IFFT calculation at every *Nu* samples to provide *Nu* data which are signal components of the effective symbol. The guard interval adder 113 is supplied with the effective symbol (in units of *Nu* data) from the IFFT calculator 112, and adds a guard interval by copying data for *Ng* samples in the end portion of the effective symbol as it is to the leading portion of the effective symbol to generate an OFDM symbol composed of *Ns* (= *Nu* + *Ng*) data. The parallel-series converter 114 serializes the OFDM symbol composed of the *Ns* data, and provides the serial OFDM symbol as an output.

The orthogonal modulation circuit 104 makes orthogonal modulation of the complex signal supplied from the IFFT calculation circuit 103 into an IF signal of a predetermined frequency. The orthogonal-modulated IF signal is supplied to the D-A conversion circuit 105.

The D-A conversion circuit 105 converts the orthogonal-modulated IF signal into an analog signal. The analog IF signal thus produced is supplied to the frequency conversion circuit 106.

The frequency conversion circuit 106 generates a transmission signal of a frequency in the RF signal band by making frequency shift of the analog IF signal.

The transmission signal generated by the frequency conversion circuit 106 is sent via the antenna 107.

The clock generation circuit 108 supplies an operation clock to the mapping circuit 102, IFFT calculation circuit 103, D-A conversion circuit 105, etc.

Next, a conventional OFDM receiver will be illustrated and described.

The conventional OFDM receiver is constructed as disclosed in the Japanese Published Unexamined Patent Application, for example. The conventional OFDM receiver constructed according to the above Japanese Published Unexamined Patent Application will be described in the following.

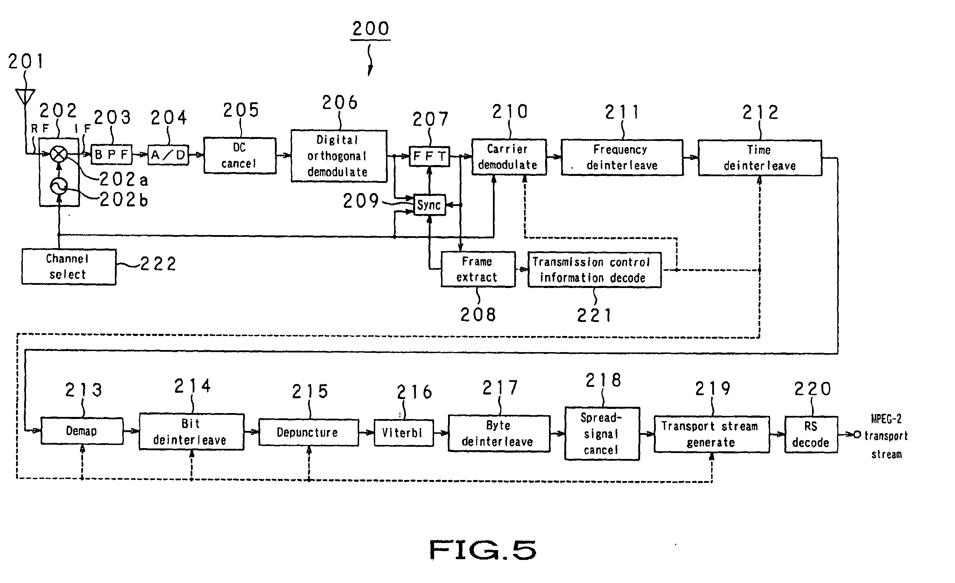

FIG. 5 schematically illustrates the conventional OFDM receiver in the form of a block diagram.

As shown in FIG. 5, the conventional OFDM receiver, generally indicated with a reference 200, includes an antenna 201, tuner 202, band-pass filter (BPF) 203, A-D conversion circuit 204, DC canceling circuit 205, digital orthogonal demodulation circuit 206, FFT calculation circuit 207, frame extraction circuit 208, synchronization circuit 209, carrier demodulation circuit 210, frequency deinterleaving circuit 211, time deinterleaving circuit 212, demapping circuit 213, bit deinterleaving circuit 214, depuncture circuit 215, Viterbi circuit 216, byte deinterleaving circuit 217, spread-signal canceling circuit 218, transport stream generation circuit 219, RS decoding circuit 220, transmission-control information decoding circuit 221, and a channel selection circuit 222.

A transmission wave sent from the OFDM transmitter 100 is received by the antenna 201 of the OFDM receiver 200 and supplied as an RF signal to the tuner 202.

The RF signal received by the antenna 201 is converted in frequency by the tuner 202 composed of a multiplier 202a and local oscillator 202b into an IF signal, and the IF signal is supplied to the BPF 203. The oscillation frequency of a reception carrier signal generated by the local oscillator 202b is changed correspondingly to a channel select frequency supplied from the channel selection circuit 222.

The IF signal from the tuner 202 is filtered by the BPF 203, and then digitized by the A-D conversion circuit 204. The digital IF signal thus produced has the DC component thereof canceled by the DC canceling circuit 205, and is supplied to the digital orthogonal demodulation circuit 206.

The digital orthogonal demodulation circuit 206 makes orthogonal demodulation of the digital IF signal with the use of a carrier signal of a predetermined frequency (carrier frequency) to provide a base-band OFDM signal. The orthogonal demodulation of the base-band OFDM signal provides a complex signal composed of a real-axis component (I-channel signal) and an imaginary-axis signal (Q-channel signal). The base-band OFDM signal from the digital orthogonal demodulation circuit 206 is supplied to the FFT calculation circuit 207 and synchronization circuit 209.

The FFT calculation circuit 207 makes FFT calculation of the base-band OFDM signal to extract a signal having been orthogonal-modulated to each sub-carrier, and provides it as an output.

The FFT calculation circuit 207 extracts a signal having an effective symbol length from one OFDM symbol and makes FFT calculation of the extracted signal. More specifically, the FFT calculation circuit 207 removes a signal having a guard interval length from one OFDM symbol, and makes FFT calculation of the residual of the OFDM symbol. Signals for FFT calculation may be extracted from any arbitrary positions in one OFDM symbol if the signal extraction points are consecutive. Namely, the signal extraction will start at any position in a range from the leading boundary of the OFDM symbol (indicated with a reference A in FIG. 1) to the end of the guard interval (indicated with a reference B in FIG. 1) as shown in FIG.1.

A signal extracted by the FFT calculation circuit 207 and having been modulated to each sub-carrier is a complex signal composed of a real-axis component (I-channel signal) and an imaginary-axis component (Q-channel signal). The signal extracted by the FFT calculation circuit 207 is supplied to the frame extraction circuit 208, synchronization circuit 209 and carrier demodulation circuit 210.

Based on the signal demodulated by the FFT calculation circuit 207, the frame extraction circuit 208 extracts boundaries of an OFDM transmission frame, while demodulating pilot signals such as CP, SP, etc. included in the OFDM transmission frame and transmission-control information such as TMCC, TPS, etc., and supplies the demodulated pilot signals and transmission-control information to the synchronization circuit 209 and transmission-control information demodulation circuit 221.

Using the base-band OFDM signal, signals having been modulated to the sub-carriers after demodulated by the FFT calculation circuit 207, pilot signals such as CP, SP, etc. detected by the frame extraction circuit 208 and channel select signal supplied from the channel selection circuit 222, the synchronization circuit 209 calculates boundaries of the OFDM symbol, and sets an FFT calculation range and timing for the FFT calculation circuit 207.

The carrier demodulation circuit 210 is supplied with signals demodulated from the sub-carrier outputs from the FFT calculation circuit 207, and makes carrier demodulation of the supplied signal. For demodulation of an ISDB-$T_{SB}$-based OFDM signal, for example, the carrier demodulation circuit 210 will makes differential demodulation of the signal by the DQPSK technique or synchronous demodulation by the QPSK, 16QAM or 64QAM technique.

The carrier-demodulated signal undergoes frequency-directional deinterleaving by the frequency deinterleaving circuit 211, then time-directional deinterleaving by the time deinterleaving circuit 212, and is supplied o the demapping circuit 213.

The demapping circuit 213 makes demapping of the carrier-demodulated signal (complex signal) to restore the transmission data series. For demodulation of an ISDB-$T_{SB}$-based OFDM signal, for example, the demapping circuit 213 will make demapping corresponding to the QPSK, 16QAM or 64QAM technique.

Being passed through the bit deinterleaving circuit 214, depuncture circuit 215, Viterbi circuit 216, byte deinterleaving circuit 217 and spread-signal canceling circuit 218, the transmission data series output from the demapping circuit 213 undergoes deinterleaving corresponding to a bit deinterleaving for distribution of a multi-valued symbol error, puncturing for reduction of transmission bits, Viterbi decoding for decoding a convolution-encoded bit string, deinterleaving in bytes, and energy despreading corresponding to the energy spreading, and the transmission data series thus processed is supplied to the transport stream generation circuit 219.

The transport stream generation circuit 219 inserts data defined by each broadcasting technique, such as null packet, in a predetermined position in a data stream. Also, the transport stream generation circuit 219 "smoothes" bit spaces in an intermittently supplied data stream to provide a temporally continuous stream. The transmission data series thus smoothed is supplied to the RS decoding circuit 220.

The RS decoding circuit 220 makes Reed-Solomon decoding of the supplied transmission data series, and provides the transmission data series thus decoded as a transport stream defined in the MPEG-2 Systems.

The transmission-control information decoding circuit 221 decodes transmission-control information having been modulated in a predetermined position in the OFDM transmission frame, such as TMCC or TPS. The decoded transmission-control information is supplied to the carrier demodulation circuit 210, time deinterleaving circuit 212, demapping circuit 213, bit deinterleaving circuit 214 and transport stream generation circuit 219, and used to control the demodulation, reproduction, etc. effected in these circuits.

Note that for demodulation of an OFDM signal, it is necessary to correctly detect boundaries of the OFDM symbol and make FFT calculation synchronously with the boundary positions. The correct detection of boundary positions of an OFDM symbol to generate sync signals is called "symbol synchronization".

The symbol synchronization is done using either a guard interval or a pilot signal inserted in a transmission data series. The synchronization of symbols using the guard interval is such that it is judged based on the correlation of a signal series between a guard interval and copy source of the guard interval that a portion of the symbol where the autocorrelation value of a received OFDM signal is highest is a symbol boundary. The symbol synchronization using a pilot signal is such that based on the fact that if the synchronization position is off a correct symbol boundary, a signal component demodulated correspondingly to the shift of the synchronization position from the correct symbol boundary will show a phase rotation, the amount of the phase rotation of the pilot signal is detected and a symbol-boundary position is detected based on the detected amount of phase rotation.

Generally, the symbol synchronization using a guard interval is advantageous in that the pull-in for synchronization is rapid while it is not advantageous in that the pull-in accuracy is low. On the other hand, the symbol synchronization using a pilot signal is advantageous in that the pull-in accuracy is high while it is not advantageous in that the pull-in for synchronization is slow.

On this account, the conventional OFDM receiver effects the symbol synchronization operation in two phases: pull-in and holding, and uses a guard interval in the pull-in phase and a pilot signal in the holding phase.

However, if both the operations of symbol synchronization based on a guard interval and pilot signal are done, the circuit scale will of course be larger. Especially, the symbol synchronization using a pilot signal needs feed-back of the FFT-calculated signal before the FFT calculation, which requires a longer control pass. The long control pass needs a complicate control.

Disclosure of the Invention

Accordingly, the present invention has an object to overcome the above-mentioned drawbacks of the related art by providing an OFDM demodulator that implements a symbol synchronization with only the guard interval autocorrelation with an improved accuracy.

The above object can be attained by providing an OFDM demodulator for demodulating an orthogonal frequency division multiplex (OFDM) signal whose unit of transmission is a transmission symbol including an effective symbol generated by making time division of an information series and modulating the information into a plurality of sub-carriers and a guard interval generated by copying the signal waveform of a part of the effective symbol.

The above OFDM demodulator includes, according to the present invention, a reference time generating means for generating a reference time on the basis of a reference clock; a guard correlation peak time detecting means for detecting a timing in which the autocorrelation of the guard interval portion of the OFDM signal attains to its peak and generating the timing (peak time) synchronous with the reference time; and a symbol-boundary time calculating means for calculating, on the basis of the peak time, a symbol-boundary time that is a boundary time of the transmission symbol synchronous with the reference time.

The above symbol-boundary time calculating means includes a symbol-boundary time generator for generating a symbol-boundary time synchronous with the reference time; a time difference detector for detecting a difference between the symbol-boundary time and peak time; and an averaging unit for calculating a mean time difference by low-pass filtering of the time difference, the symbol-boundary time generator calculating the symbol-boundary time on the basis of the mean time difference.

Thus, the OFDM demodulator according to the present invention can implement the symbol synchronization with only the guard interval autocorrelation with an improved accuracy.

Also, in the OFDM demodulator according to the present invention, the symbol-boundary time calculating means includes an asymmetric gain unit which multiplies the time difference by a gain and supplies the product to the averaging unit. The asymmetric gain unit makes discrimination between when the peak time is earlier than the symbol-boundary time and when the peak time is later than the symbol-boundary time, and makes the gain when the peak time is later than the symbol-boundary time larger than that when the peak time is earlier than the symbol-boundary time.

Also, in the OFDM demodulator according to the present invention, the symbol-boundary time calculating means includes a limiter that limits the level of the time difference and supplies the limited level to the averaging unit. The limiter has upper and lower limits set therefor, and outputs the upper limit as a time difference when the latter is above the upper limit, the lower limit as a time difference when the latter is below the lower limit, and the time difference when the latter has a value between the lower and upper limits.

Also, the OFDM demodulator according to the present invention is an apparatus for demodulating an orthogonal frequency division multiplex (OFDM) signal using, as a unit of transmission, a transmission symbol including an effective symbol generated by making time division of an information series and modulating the information into a plurality of sub-carriers and a guard interval generated by copying the signal waveform of a part of the effective symbol.

The above OFDM demodulator includes, according to the present invention, a reference time generating means for generating a reference time on the basis of a reference clock; a guard correlation peak time detecting means for detecting a timing in which the autocorrelation of the guard interval portion of the OFDM signal attains to its peak and generating the timing (peak time) synchronous with the reference time; and a symbol-boundary time calculating means for calculating, on the basis of the peak time, a symbol-boundary time that is a boundary time of the transmission symbol synchronous with the reference time.

The above symbol-boundary time calculating means includes an asymmetric gain unit that makes discrimination between when the peak time is earlier than the symbol-boundary time and when the peak time is later than the symbol-boundary time, makes the gain when the peak time is later than the symbol-boundary time larger than that when the peak time is earlier than the symbol-boundary time, and multiplies the peak time by the gain, and an averaging unit for calculating a symbol-boundary time by low-pass filtering of the peak time multiplied by the gain by the asymmetric gain unit.

Thus, the OFDM demodulator according to the present invention can implement the symbol synchronization with only the guard interval autocorrelation with an improved accuracy.

These objects and other objects, features and advantages of the present invention will become more apparent from the following detailed description of the best mode for carrying out the present invention when taken in conjunction with the accompanying drawings.

Brief Description of the Drawings

FIG. 1 explains the transmission symbol used in the OFDM technique.

FIG. 2 is a block diagram of the conventional OFDM transmitter.

FIG. 3A explains the BPSK modulation technique, FIG. 3B explains the QPSK modulation technique and FIG. 3C explains the 16QAM modulation technique.

FIG. 4 shows the internal construction of the IFFT calculation circuit.

FIG. 5 is a block diagram of the conventional OFDM receiver.

FIG. 6 is a block diagram of an OFDM receiver as a first embodiment of the present invention.

FIG. 7 shows the construction of an FFT calculation circuit.

FIG. 8 explains a positional shift of a start flag indicating the start position of an FFT calculation from an OFDM symbol-boundary position.

FIG. 9 is a block diagram of a guard correlation/peak detection circuit.

FIG. 10 is a timing diagram of each signal in the guard correlation/peak detection circuit.

FIG. 11 shows a multipath environment.

FIG. 12 is a timing diagram of each signal in the guard correlation/peak detection circuit in the multipath environment.

FIG. 13 shows peak-timing values in the multipath environment.

FIG. 14 is a timing diagram of each signal in the guard correlation/peak detection circuit in a flat-fading environment.

FIG. 15 shows peak-timing values in the flat-fading environment.

FIG. 16 is a timing diagram of each signal in the guard correlation/peak detection circuit in a frequency-selective fading environment.

FIG. 17 shows peak-timing values in the frequency-selective fading environment.

FIG. 18 shows an output variation of a free-running counter when a transmission clock for a received OFDM signal is synchronous with a clock for the receiver.

FIG. 19 shows an output variation of the free-running counter when the clock for the receiver is earlier than the transmission dock for the received OFDM signal.

FIG. 20 shows an output variation of the free-running counter when the clock for the receiver is later than the transmission clock for the received OFDM signal.

FIG. 21 is a block diagram of a timing synchronization circuit.

FIG. 22 is a circuit diagram of a clock-frequency error calculation circuit.

FIG. 23 is a circuit diagram of an initial phase calculation circuit.

FIG. 24 is a circuit diagram of the initial phase calculation circuit with a moving-averaging function.

FIG. 25 is a circuit diagram of the initial phase calculation circuit with a low-pass filtering function.

FIG. 26 is a block diagram of the initial phase calculation circuit with a median-selecting function.

FIG. 27 is a block diagram of a symbol-boundary calculation circuit.

FIG. 28 is a circuit diagram of a phase comparison circuit included in the symbol-boundary calculation circuit.

FIG. 29 is a circuit diagram of a limiter included in the symbol-boundary calculation circuit.

FIG. 30 is a circuit diagram of an asymmetric gain circuit included in the symbol-boundary calculation circuit.

FIG. 31 is a circuit diagram of a low-pass filter included in the symbol-boundary calculation circuit.

FIG. 32 is a circuit diagram of a clock-frequency error correction circuit included in the symbol-boundary calculation circuit.

FIG. 33 is a circuit diagram of a phase generation circuit included in the symbol-boundary calculation circuit.

FIG. 34 is a circuit diagram of a symbol-boundary correction circuit and start-flag generation circuit.

FIG. 35 is a block diagram of a symbol-boundary calculation circuit included in an OFDM receiver as a second embodiment of the present invention.

FIG. 36 is a circuit diagram of a gain circuit and asymmetric low-pass filter included in the symbol-boundary calculation circuit in the OFDM receiver as the second embodiment of the present invention.

FIG. 37 is a circuit diagram of a guard correlation/peak detection circuit included in an OFDM receiver as a third embodiment of the present invention.

FIG. 38 is a timing diagram of each signal in the guard correlation/peak detection circuit included in the OFDM receiver as the third embodiment of the present invention.

FIG. 39 is a circuit diagram of a symbol-boundary calculation circuit included in the OFDM receiver as the third embodiment of the present invention.

FIG. 40 is a circuit diagram of a clock-frequency error correction circuit included in the symbol-boundary calculation circuit in the OFDM receiver as the third embodiment of the present invention.

FIG. 41 is a circuit diagram of a phase generation circuit and output circuit included in the symbol-boundary calculation circuit in the OFDM receiver as the third embodiment of the present invention.

FIG. 42 is a block diagram of a timing synchronization circuit included in an OFDM receiver as a fourth embodiment of the present invention.

FIG. 43 is a block diagram of a symbol-boundary calculation circuit in the OFDM receiver as the fourth embodiment of the present invention.

FIG. 44 is a block diagram of a timing synchronization circuit included in an OFDM receiver as a fifth embodiment of the present invention.

FIG. 45 is a block diagram of a symbol-boundary calculation circuit included in the OFDM receiver as the fifth embodiment of the present invention.

FIG. 46 is a block diagram of a variant of the timing synchronization circuit included in the OFDM receiver as the fifth embodiment of the present invention.

FIG. 47 is a block diagram of a timing synchronization circuit included in an OFDM receiver as a sixth embodiment of the present invention.

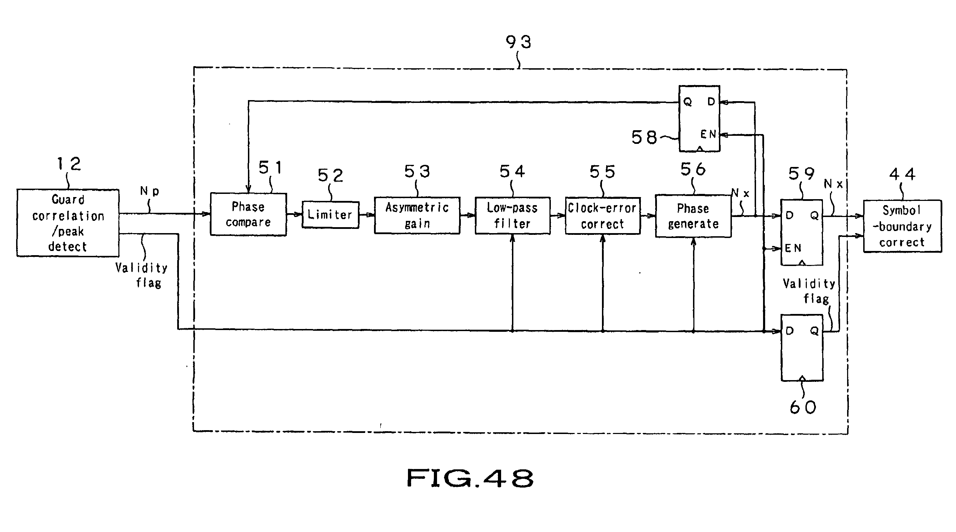

FIG. 48 is a block diagram of a symbol-boundary calculation circuit included in the OFDM receiver as the sixth embodiment of the present invention.

FIG. 49 is a circuit diagram of a clock-frequency error calculation circuit included in the timing synchronization circuit in the OFDM receiver as the sixth embodiment of the present invention.

FIG. 50 is a circuit diagram of a phase generation circuit included in the symbol-boundary calculation circuit in the OFDM receiver as the sixth embodiment of the present invention.

FIG. 51 is a block diagram of a clock-frequency error calculation circuit included in the OFDM receiver as the sixth embodiment of the present invention.

Best Mode for Carrying Out the Invention

First embodiment

The present invention will be described in detail below concerning the OFDM receiver as the first embodiment thereof.

Overview of the OFDM receiver

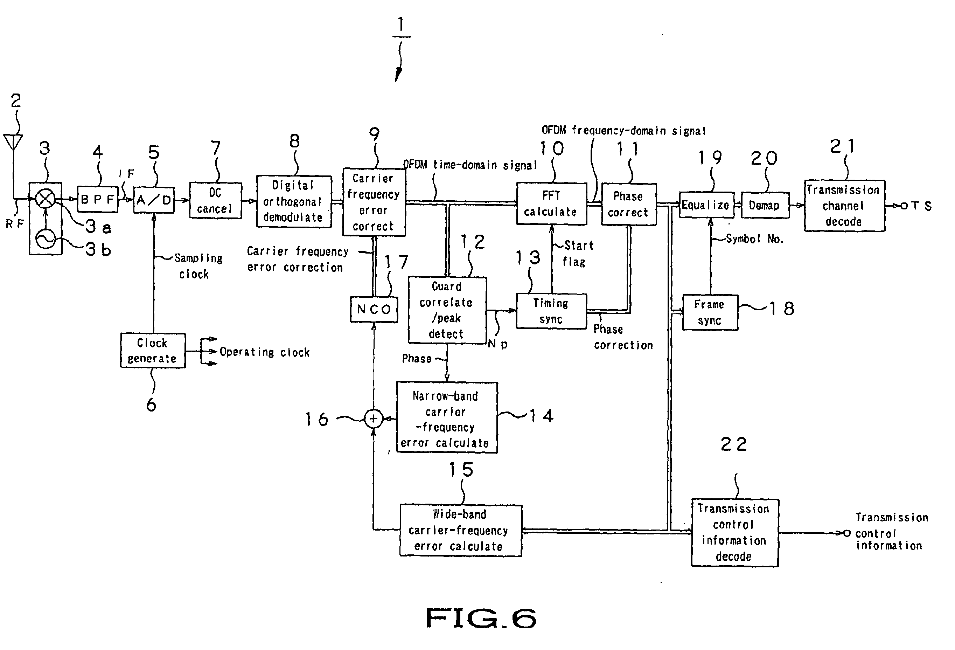

FIG. 6 is a block diagram of the OFDM receiver according to the first embodiment of the present invention.

As show in FIG. 6, the OFDM receiver, generally indicated with a reference 1, as the first embodiment of the present invention includes an antenna 2, tuner 3, band-pass filter (BPF) 4, A-D conversion circuit 5, clock generation circuit 6, DC canceling circuit 7, digital orthogonal demodulation circuit 8, carrier-frequency error correction circuit 9, FFT calculation circuit 10, phase correction circuit 11, guard correlation/peak detection circuit 12, timing synchronization circuit 13, narrow-band carrier error calculation circuit 14, wide-band carrier error calculation circuit 15, addition circuit 16, numerical-control oscillation (NCO) circuit 17, frame synchronization circuit 18, equalization circuit 19, demapping circuit 20, transmission-channel decoding circuit 21, and a transmission-control information decoding circuit 22.

Digital broadcast waves from a broadcast station are received by the antenna 2 of the OFDM receiver 1, and supplied as a RF signal to the tuner 3.

The RF signal received by the antenna 2 is converted in frequency to an IF signal by the tuner 3 including the multiplier 3a and local oscillator 3b, and supplied to the BPF 4. The IF signal output from the tuner 3 is filtered by the BPF 4 and then supplied to the A-D conversion circuit 5.

The A-D conversion circuit 5 samples the IF signal with a clock supplied from the clock generation circuit 6, and digitizes the IF signal. The IF signal thus digitized by the A-D conversion circuit 5 is supplied to the DC canceling circuit 7 where it will have the DC component thereof canceled, and the signal is supplied to the digital orthogonal demodulation circuit 8. The digital orthogonal demodulation circuit 8 makes orthogonal demodulation of the digital IF signal with the use of a two-phase carrier signal of a predetermined carrier frequency, and provides a base-band OFDM signal as an output. An OFDM time-domain signal output from the digital orthogonal demodulation circuit 8 is supplied to the carrier-frequency error correction circuit 9.

Note here that for the digital orthogonal demodulation, the digital orthogonal demodulation circuit 8 needs a two-phase signal having a -Sin component and Cos component as a carrier signal. On this account, in the OFDM receiver 1, the frequency of the sampling clock supplied to the A-D conversion circuit 5 is made four times higher than the center frequency $f_{1F}$ of the IF signal to generate a two-phase carrier signal for supply to the digital orthogonal demodulation circuit 8.

Also, in the OFDM receiver 1, after completion of the digital orthogonal demodulation, a data series of a clock of $4f_{1F}$ is down-sampled to 1/4 to equalize the number of samples of the effective symbol having undergone the digital orthogonal demodulation to the number (*Nu*) of sub-carriers. That is, the clock for the data series subjected to the digital orthogonal demodulation has a frequency that is 1/sub-carrier space. Also, the down-sampling rate after the digital orthogonal demodulation may be 1/2 to make FFT calculation with the number of samples, double the normal one, and the data series be further down-sampled to 1/2 after completion of the FFT calculation. By making the FFT calculation with the number of samples, double the normal one, it is possible to extract, by the FFT calculation, a signal in a two-time wider frequency band and thus reduce the circuit scale of the low-pass filter circuit for the digital orthogonal demodulation. It should be noted that for each of the downstream circuits to process the over-sampled data series, the number (*Nu*) of samples of the effective symbol having undergone the digital orthogonal demodulation may be $2^n$ times (n is a natural number) larger than the number of sub-carriers.

The clock generation circuit 6 supplies the A-D conversion circuit 5 with a clock of the aforementioned frequency, and each of the circuits of the OFDM receiver 1 with an operation clock for the data series having undergone the digital orthogonal demodulation (a clock of a frequency equal to a quarter of the frequency of the clock for supply to the A-D conversion circuit 5, for example, a clock of a frequency equal to 1/sub-carrier space).

Note that the operation clock generated by the clock generation circuit 6 is a free-running clock not synchronous with a transmission clock for the received OFDM signal. That is, the operation clock from the clock generation circuit 6 free-runs without synchronization in frequency and phase with the transmission clock by PLL or the like. The operation clock can free-run because the timing synchronization circuit 13 detects a frequency error between the OFDM signal transmission clock and the operation clock, and cancels the frequency error on the basis of the frequency error component by a feed-forwarding made in the system downstream of the timing synchronization circuit 13. Although in this OFDM receiver 1, the clock generation circuit 6 generates an asynchronous free-running clock as above, the present invention is applicable to a device that can vary the operation flock frequency by a feed-back control.

Also, the base-band OFDM signal output from the digital orthogonal demodulation circuit 8 is a so-called time-domain signal not yet subject to FFT calculation. Thus, the yet-to-FFT-calculated base-band signal will be referred to as "OFDM time-domain signal" hereunder. The OFDM time-domain signal is orthogonal-demodulated to provide a complex signal composed of a real-axis component (I-channel signal) and an imaginary-axis component (Q-channel signal).

The carrier-frequency error correction circuit 9 makes complex multiplication of a carrier-frequency error correction signal output from the NCO 17 by the OFDM time-domain signal having undergone the digital orthogonal demodulation to correct a carrier-frequency error of the OFDM time-domain signal. The OFDM time-domain signal having the carrier-frequency error thereof corrected by the carrier-frequency error correction circuit 9 is supplied to the FFT calculation circuit 10 and guard correlation/peak detection circuit 12.

The FFT calculation circuit 10 makes FFT calculation of the number (*Nu*) of samples of the effective symbol by extracting a signal having the effective symbol length from one OFDM symbol, that is, extracting a signal resulted from canceling of the number (*Ng*) of samples of a guard interval from the total number (*Ns*) of samples of the one OFDM symbol. The FFT calculation circuit 10 is supplied with the start flag (start timing of the FFT calculation) which identifies a range of extraction from the timing synchronization circuit 13, and makes FFT calculation in timing of the start flag.

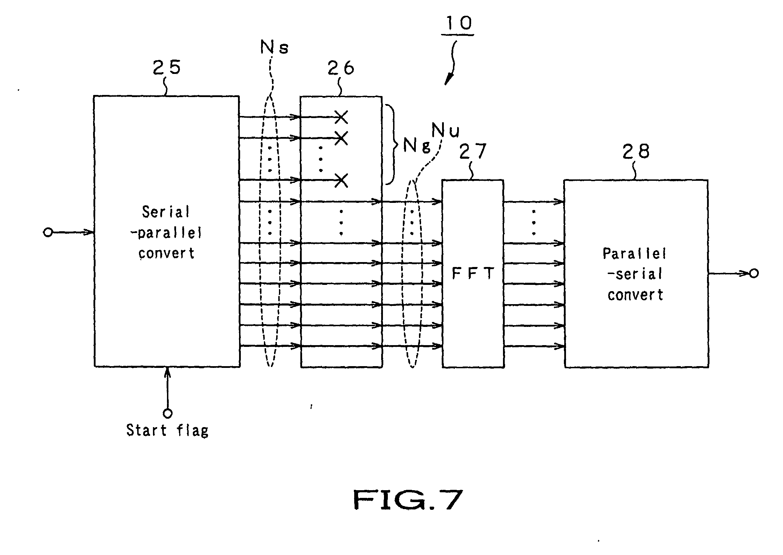

As shown in FIG. 7, the FFT calculation circuit 10 includes a serial-parallel conversion circuit 25, guard interval canceller 26, FFT calculator 27, and a parallel-serial conversion circuit 28, for example.

The serial-parallel converter 25 starts counting at a start flag supplied from the timing synchronization circuit 13, extracts data for the number (*Ns*) of samples of the OFDM symbol, and outputs parallel data whose one word is *Ns*. The guard interval canceller 26 allows the top *Nu* data of the parallel data whose one word is *Ns* samples to pass by without outputting the *Ng* data next to the word. The FFT calculator 27 make FFT calculation of data for the number (*Nu*) of samples of the effective symbol supplied from the guard interval canceller 26. The parallel-serial converter 28 is supplied with data for the number (*Nu*) of sub-carriers from the FFT calculator 27. The parallel-serial converter 28 outputs the *Nu* data after serializing the latter.

The FFT calculation circuit 10 extracts a signal component having been modulated in sub-carriers in one OFDM symbol by extracting data for the number of samples in the effective symbol from the OFDM symbol and making FFT calculation of the data.

The signal output from the FFT calculation circuit 10 is a so-called frequency-domain signal having undergone the FFT calculation. Thus, the FFT-calculated signal will be referred to as "OFDM frequency-domain signal" hereunder. Also, the OFDM frequency-domain signal output from the FFT calculation circuit 10 is a complex signal composed of a real-axis component (I-channel signal) and imaginary-axis signal (Q-channel signal) similarly to the OFDM time-domain signal. The OFDM frequency-domain signal is supplied to the phase correction circuit 11.

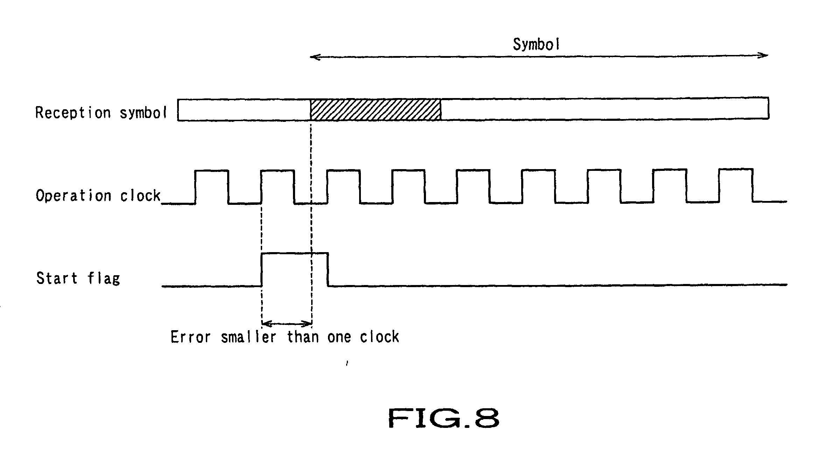

The phase correction circuit 11 corrects a phase-rotated component that will be caused in the OFDM frequency-domain signal by a shift of an actual boundary position of an OFDM symbol from the start timing of the FFT calculation. The phase correction circuit 11 corrects a phase shift caused with a lower precision than the sampling cycle. That is, the start timing of the FFT calculation can only be controlled in units of the operation clock for the OFDM receiver 1 as shown in FIG. 8. On the contrary, the symbol-boundary position of an actually received OFDM signal is not always coincident with the operation clock. On this account, a precision error smaller than the operation clock cycle will take place even if the symbol synchronization is controlled with a however high a precision. The phase correction circuit 11 corrects a phase shift whose precision is lower than the operation clock cycle.

More specifically, the phase correction circuit 11 corrects a phase rotation of the PFDM frequency-domain signal output from the FFT calculation circuit 10 by making complex multiplication of a phase correction signal (complex signal) supplied from the timing synchronization circuit 13. The OFDM frequency-domain signal corrected in phase rotation is supplied to the wide-band carrier error calculation circuit 15, frame synchronization circuit 18, equalization circuit 19 and transmission-control information decoding circuit 22.

The guard correlation/peak detection circuit 12 is supplied with the OFDM time-domain signal. The guard correlation/peak detection circuit 12 will determine the value of a correlation between the supplied OFDM time-domain signal and OFDM time-domain signal delayed by the effective symbol. It should be noted that the length of time for which the correlation is to be determined is set to the length of the guard interval time. Thus, the signal indicating the correlation value (will be referred to as "guard correlation signal" hereunder) has a peak precisely in the boundary position of the OFDM symbol. The guard correlation/peak detection circuit 12 detects the position where the guard correlation signal has a peak, and outputs a value (peak timing value Np) identifying the timing of the peak position.

The peak timing value Np from the guard correlation/peak detection circuit 12 is supplied to the timing synchronization circuit 13, and the phase of the correlation value in the peak timing is supplied to the narrow-band carrier-error calculation circuit 14.

The timing synchronization circuit 13 determines a start timing of FFT calculation on the basis of a boundary position of the OFDM symbol, estimated by filtering, for example, the peak timing value Np from the guard correlation/peak detection circuit 12. The FFT-calculation start timing is supplied as a start flag to the FFT calculation circuit 10. The FFT calculation circuit 10 will make FFT calculation by extracting a signal within the range of FFT calculation from the supplied OFDM time-domain signal on the basis of the start flag. Also, the timing synchronization circuit 13 calculates the amount of a phase rotation taking place due to a time lag between the estimated boundary position of the OFDM symbol and the timing in which the FFT calculation is to be started, generates a phase correction signal (complex signal) on the basis of the calculated amount of phase rotation, and supplies the phase correction signal to the phase correction circuit 11.

The narrow-band carrier-error calculation circuit 14 calculates, based on the phase of the correlation value in the boundary position of the OFDM symbol, a narrow-band carrier-frequency error component indicating a narrow-band component of a shift of the center frequency used for the digital orthogonal demodulation. More particularly, the narrow-band carrier-frequency error component is a shift of the center frequency, whose precision is less than $\pm 1/2$ of the frequency space of the sub-carrier. The narrow-band carrier-frequency error component determined by the narrow-band carrier-error calculation circuit 14 is supplied to the addition circuit 16.

The wide-band carrier-error calculation circuit 15 calculates, based on the OFDM frequency-domain signal from the phase correction circuit 11, a narrow-band carrier-frequency error component indicating a wide-band component of a shift of the center frequency used for the digital orthogonal demodulation. The wide-band carrier-frequency error component is a shift of the center frequency, whose precision is the sub-carrier frequency space.

The wide-band carrier-frequency error component determined by the wide-band carrier-error calculation circuit 15 is supplied to the addition circuit 16.

The addition circuit 16 adds the narrow-band carrier-frequency error component calculated by the narrow-band carrier-error detection circuit 14 and the wide-band carrier-frequency error component calculated by the wide-band carrier-error calculation circuit 15 to calculate a total shift of the center frequency of the base-band OFDM signal supplied from the carrier-frequency error correction circuit 9. The addition circuit 16 outputs the calculated total shift of the center frequency as a frequency error value. The frequency error value from the addition circuit 16 is supplied to the NCO 17.

The NCO 17 is a so-called numerical-controlled oscillator, and generates a carrier-frequency error correction signal of which the oscillation frequency is increased or decreased correspondingly to the value of a frequency error from the addition circuit 16. The NCO 17 increases the oscillation frequency of a carrier-frequency error correction signal when the supplied frequency-error value is positive, and decreases the oscillation frequency when the supplied frequency-error value is negative. The NCO 17 provides the above control to generate a carrier-frequency error correction signal of which the oscillation frequency becomes stable when the frequency-error value is zero.

The frame synchronization circuit 18 detects a synchronization word inserted in a predetermined position in an OFDM transmission frame to detect the start timing of the OFDM transmission frame. The frame synchronization circuit 18 identifies a symbol number assigned to each OFDM symbol on the basis of the start timing of the OFDM transmission frame, and supplies the symbol number to the equalization circuit 19 etc.

The equalization circuit 19 makes a so-called equalization of the OFDM frequency-domain signal. The equalization circuit 19 detects, based on the symbol number supplied from the frame synchronization circuit 18, a pilot signal called "scattered pilots (SP)" inserted in the OFDM frequency-domain signal. The OFDM frequency-domain signal equalized by the equalization circuit 19 is supplied to the demapping circuit 20.

The demapping circuit 20 makes a data demapping of the equalized OFDM frequency-domain signal (complex signal), corresponding to the technique of demodulation such as QPSK, 16QAM or 64QAM, used for the OFDM frequency-domain signal, to restore the transmission data. The transmission data from the demapping circuit 20 is supplied to the transmission-channel decoding circuit 21.

The transmission-channel decoding circuit 21 makes transmission-channel decoding of the supplied transmission data, corresponding to the broadcasting method by which the transmission data has been broadcast. For example, the transmission-channel decoding circuit 21 makes a time deinterleaving corresponding to a time-directional interleaving, frequency deinterleaving corresponding to a frequency-directional interleaving, deinterleaving corresponding to a bit interleaving for distributing multi-valued symbol error, depucturing corresponding to a pucturing for reduction of transmission bits, Viterbi decoding for decoding a convolution-encoded bit string, deinterleaving in bytes, energy despreading corresponding to the energy spreading, error correction corresponding to the RS (Reed-Solomon) coding, etc.

The transmission data having undergone the above transmission-channel decoding is outputted as a transport stream defined in the MPEG-2 Systems, for example.

The transmission-control information decoding circuit 22 decodes transmission-control information such as TMCC, TPS or the like, modulated in a predetermined position in the OFDM transmission frame.

Guard correlation/peak detection circuit

Next, the guard correlation/peak detection circuit 12 will be illustrated and described.

Note that constants $Nu$, $Ng$ and $Ns$ (natural numbers) will be used in the following illustration and description. The constant $Nu$ is the number of samples in one effective symbol. The constant $Ng$ is the number of samples in the guard interval. For example, when the length of the guard interval is 1/4 of that of the effective symbol, $Ng = Nu/4$. The constant $Ns$ is the number of samples in one OFDM symbol. That is, $Ns = Nu + Ng$.

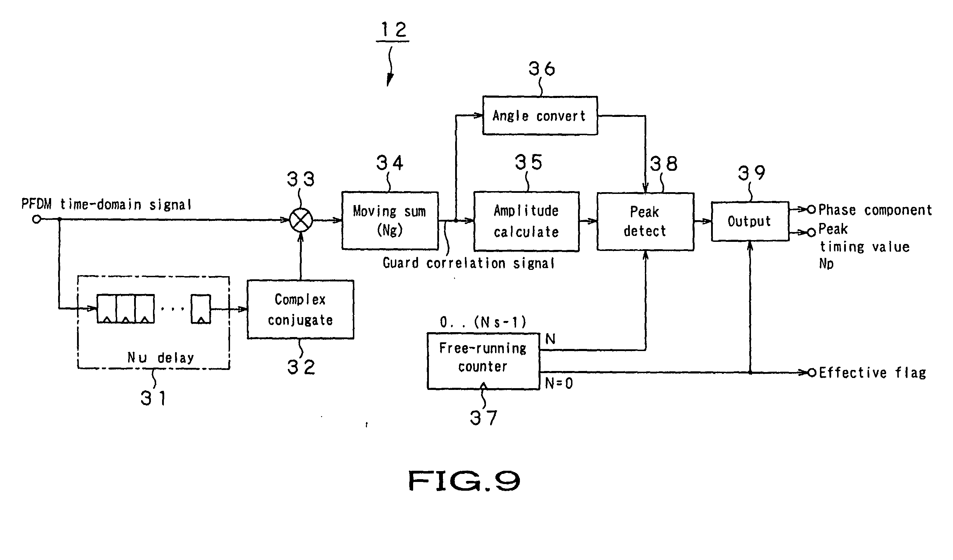

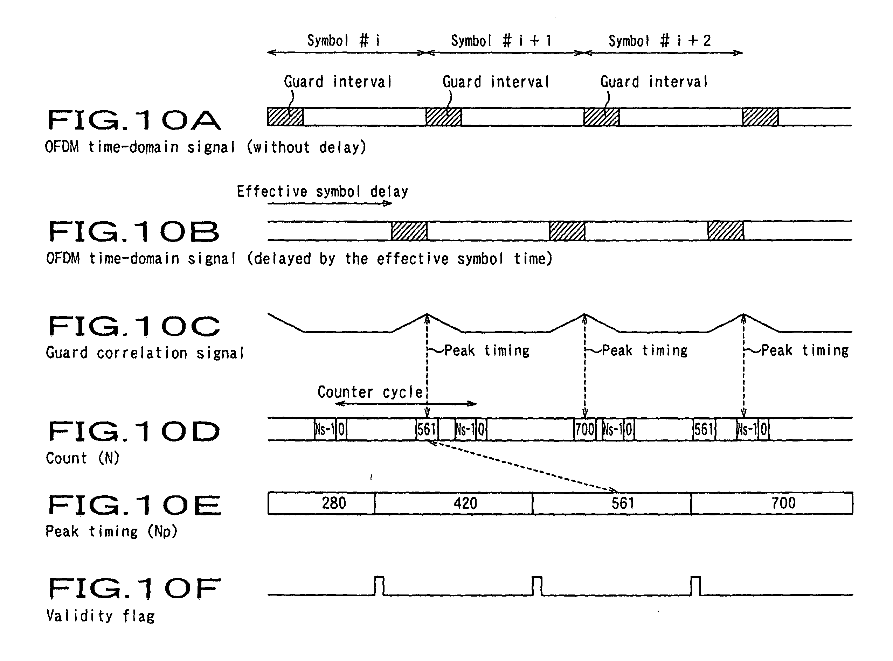

FIG. 9 is a block diagram of the guard correlation/peak detection circuit 12, and FIG. 10 is a timing diagram of various signals in the guard correlation/peak detection circuit 12.

As shown in FIG. 9, the guard correlation/peak detection circuit 12 includes a delay circuit 31, complex conjugate circuit 32, multiplication circuit 33, moving-sum circuit 34, amplitude calculation circuit 35, angle conversion circuit 36, free-running counter 37, peak detection circuit 38, and an output circuit 39.

The OFDM time-domain signal (see FIG. 10A) from the carrier-frequency error correction circuit 9 is supplied to the delay circuit 31 and multiplication circuit 33. The delay circuit 31 is a shift register formed from $Nu$ register groups to delay the input OFDM time-domain signal by the effective symbol time. The OFDM time-domain signal (see FIG. 10B) delayed by the effective symbol by the delay circuit 31 is supplied to the complex conjugate circuit 32.

The complex conjugate circuit 32 calculates a complex conjugate of the OFDM time-domain signal delayed by the effective symbol time, and supplies it to the multiplication circuit 33.

The multiplication circuit 33 multiplies the OFDM time-domain signal (see FIG. 10A) and the complex conjugate of the OFDM time-domain signal delayed by the effective symbol time (see FIG. 10B) at every one sample. The result of the multiplication is supplied to the moving-sum circuit 34.

The moving-sum circuit 34 includes a shift register formed for $Ng$ register groups and an adder to calculate a sum of values in the registers, for example. For each of the $Ng$ samples, it makes moving-sum calculation of the results of multiplication sequentially supplied at every one sample. The moving-sum circuit 34 will output a guard correlation signal (see FIG. 10C) indicating the correlation between the OFDM time-domain signal and the OFDM time-domain signal delayed by the effective symbol ($Nu$ samples). The guard correlation signal from the moving-sum circuit 34 is supplied to the amplitude calculation circuit 35 and angle conversion circuit 36.

The amplitude calculation circuit 35 determines an amplitude component of the guard correlation signal by squaring the real-number part and imaginary-number part, respectively, of the guard correlation signal, and adding the squares and calculating a square root of the result of the addition. The amplitude component of the guard correlation signal is supplied to the peak detection circuit 38.

The angle conversion circuit 36 determines a phase component of the guard correlation signal by making Tan-1 calculation of the real-number part and imaginary-number part of the guard correlation signal. The phase component of the guard correlation signal is supplied to the peak detection circuit 38.

The free-running counter 37 counts the operation clock. The count N of the free-running counter 37 is incremented in steps of one in a range from 0 to $Ns$-1, and will return to zero when it exceeds $Ns$-1 (as in FIG. 10D). That is to say, the free-running counter 37 is a cyclic counter whose cycle is the number of samples ($Ns$) in the OFDM symbol period. The count N of the free-running counter 37 is supplied to the peak detection circuit 38.

The peak detection circuit 38 detects a point where the amplitude of the guard correlation signal is highest in one cycle (0 to *Ns*-1) of the free-running counter 37, and detects a count at that point. When the count of the free-running counter 37 shifts to a next cycle, the peak detection circuit 38 will detect a new point where the guard correlation signal has a high amplitude. The count detected by the peak detection circuit 38 is a peak timing Np indicative of a time at which the guard correlation signal attains its peak (peak time). Also, the peak detection circuit 38 detects a phase component of the guard correlation signal at the peak time, and supplies the detected phase component to the output circuit 39.

The output circuit 39 takes in the count from the peak detection circuit 38 and stores it into an internal register in a timing when the count N of the free-running counter 37 becomes zero, and sets the count to a state in which is can be outputted to outside (see FIG. 10E). The count stored in the register is supplied as information indicative of the peak time of the guard correlation signal (peak timing Np) to the timing synchronization circuit 13 located downstream. Similarly, the output circuit 39 takes in the phase component from the peak detection circuit 38 in a timing when the count N of the free-running counter 37 becomes zero, and stores it into the internal register, and sets the phase component to a state in which it can be outputted to outside. The phase component stored in the register is supplied to the narrow-band carrier-error calculation circuit 14 located downstream.

Also, the free-running counter 37 issues a valid flag that becomes High when the count N becomes zero (see FIG. 10F). The valid flag indicates a timing of issuing the peak timing Np and phase value to the downstream circuit.

Note that in the guard correlation/peak detection circuit 12, the free-running counter 37 has the cyclic timing thereof adjusted such that the timing in which the count N changes from the maximum value (*Ns*-1) to zero and timing in which the guard correlation signal attains its peak (boundary timing of the OFDM symbol) will be about a half period off the OFDM symbol time. That is, the cyclic timing is adjusted for the peak timing Np to be about 1/2 of the maximum count (*Ns*-1).

The reason for the above adjustment will be explained herebelow. The peak detection cycle of the peak detection circuit 38 ranges from a timing in which the count of the free-running counter 37 becomes zero to a timing in which the count becomes *Ns*-1. The peak detection circuit 38 outputs the count when the amplitude of the guard correlation signal has attained its maximum value in the period as a peak timing Np. If the timing in which the cycle of the free-running counter 37 is updated (the count becomes zero) and the timing in which the amplitude of the guard correlation signal attains its maximum value are temporarily near each other, a highly correlative portion (peak-shaped portion), which would normally be caused by a preceding OFDM symbol, will be involved in the peak detection in the period of a next OFDM symbol. In such a case, the peak of the guard correlation signal is not always constant because of various noises and errors but will possibly vary for each symbol, and so the highly correlative portion caused by the guard interval of the preceding OFDM symbol will possibly be determined as the position of the next OFDM symbol boundary. On this account, the peak timing Np is pre-adjusted to about 1/2 of the maximum value (*Ns*-1) of the count, thereby preventing the highly correlative portion (peak-shaped) caused by the guard interval of the preceding OFDM symbol from being determine as the guard interval of the next OFDM symbol. Thus, it is possible to assure a stable peak position detection.

However, when there is a clock frequency error (difference between the transmission clock for the received OFDM signal and the operation clock), the peak timing Np will gradually move (for which the reason will be described in detail later). In such a case, the cyclic timing of the count N may appropriately be adjusted correspondingly to the clock frequency error.

Although in the guard correlation/peak detection circuit 12, the peak timing Np is generated in each OFDM symbol period, the peak timing Np may be generated in M (natural number) OFDM symbol periods, not in one OFDM symbol period. In this case, however, the valid flag should be made High (1) only once in the M OFDM symbol periods.

Variation of the peak timing Np

Note here that the peak timing Np from the guard correlation/peak detection circuit 12 should ideally take a constant value at all times.

Actually, however, the peak timing Np will vary containing a noise under the influence of a disturbance caused in the transmission channel due to a multipath, flat fading, frequency-selective fading or the like and also of a clock frequency error caused by a difference in clock between the receiver and transmitter.

The variation of the peak timing Np caused under the influence of such disturbances will be explained according to each of various situations.

(Multipath)

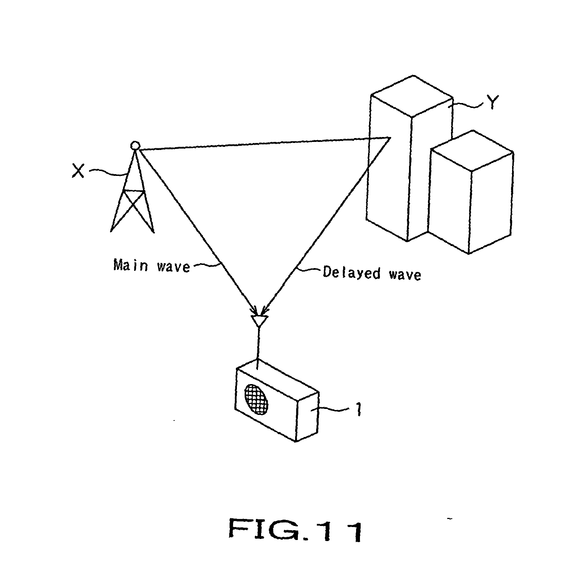

An environment in which a radiated wave arrives at a receiver via a plurality of channels or paths is called "multipath environment". A typical multipath environment is shown in FIG. 11. In the multipath environment shown in FIG. 11, there are two wave paths from a transmitter X to the OFDM receiver 1, one on which a wave reaches directly the OFDM receiver 1, and one a wave reaches the OFDM receiver 1 after being reflected by a tall-building group Y. A wave reaching directly the OFDM receiver 1 from the transmitter X is called "main wave", and a wave reaching the OFDM receiver 1 after being reflected by the tall-building group Y is called "delayed wave".

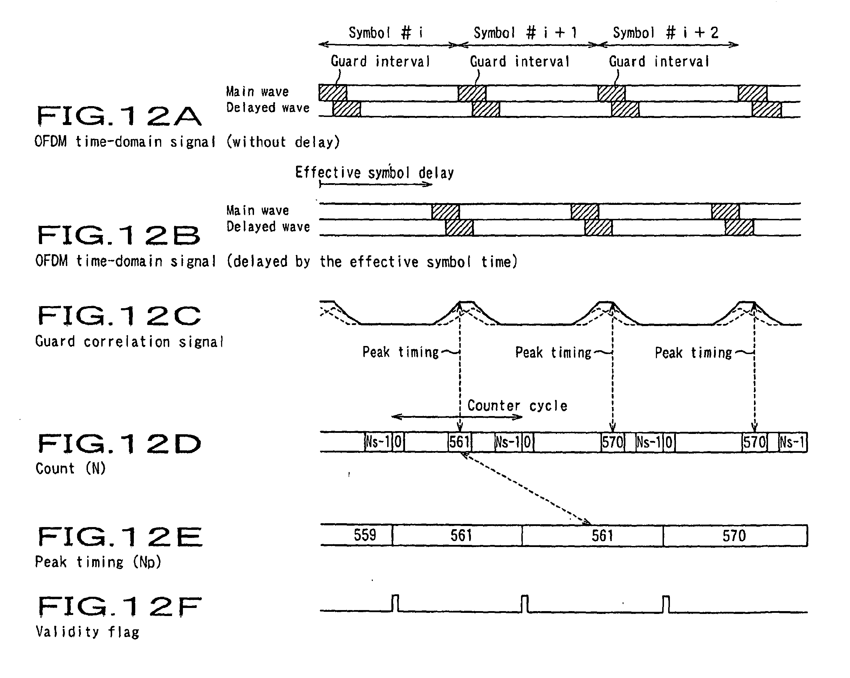

In the above multipath environment, a wave in which the main and delayed wave are superposed one on the other is supplied to the receiver 1. FIG. 12A shows an OFDM time-domain signal in which the main and delayed waves are superposed one on the other (with no delay between them). FIG. 12B shows a signal resulted from delaying, by the effective symbol, of the OFDM time-domain signal in which the main and delayed waves are superposed one on the other.

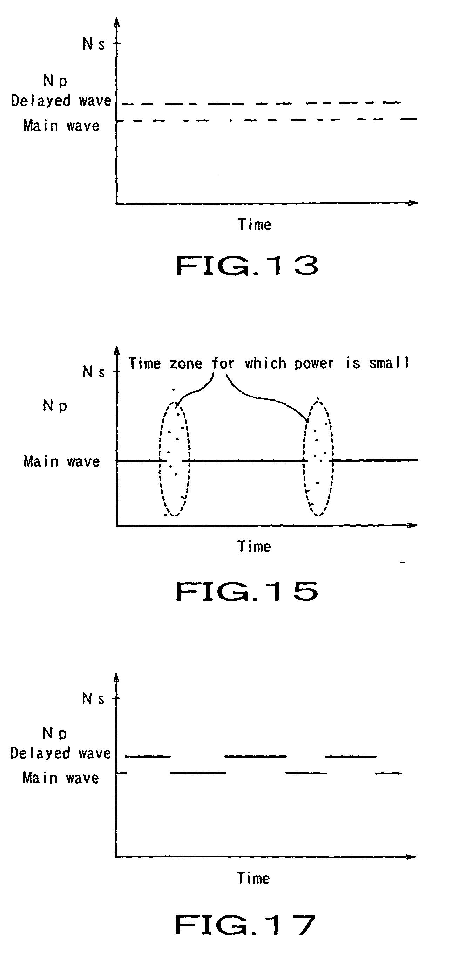

When the above signal is received, the guard correlation signal will have the correlation value of the main wave and that of the delayed wave superposed one on the other as shown in FIG. 12C. In peak detection of this guard correlation signal, a symbol-boundary position of the main wave and a symbol- boundary position of the delayed wave will be selected at random as peak timings Np (however, both boundary positions will not be selected at a time) as shown in FIGS. 12D, 12E and 12F. Therefore, with the peak timing Np viewed in the time direction, a count of the main-wave symbol-boundary position and a count of delayed-wave symbol-boundary position will appear at random as shown in FIG. 13, so that it will be difficult to accurately synchronize the symbols.

(Flat fading)

An environment in which the power of a radiated wave varies periodically is called "flat fading environment". The flat fading will take place in case all the waves arriving at the receiver 1 are reflected ones, for example.

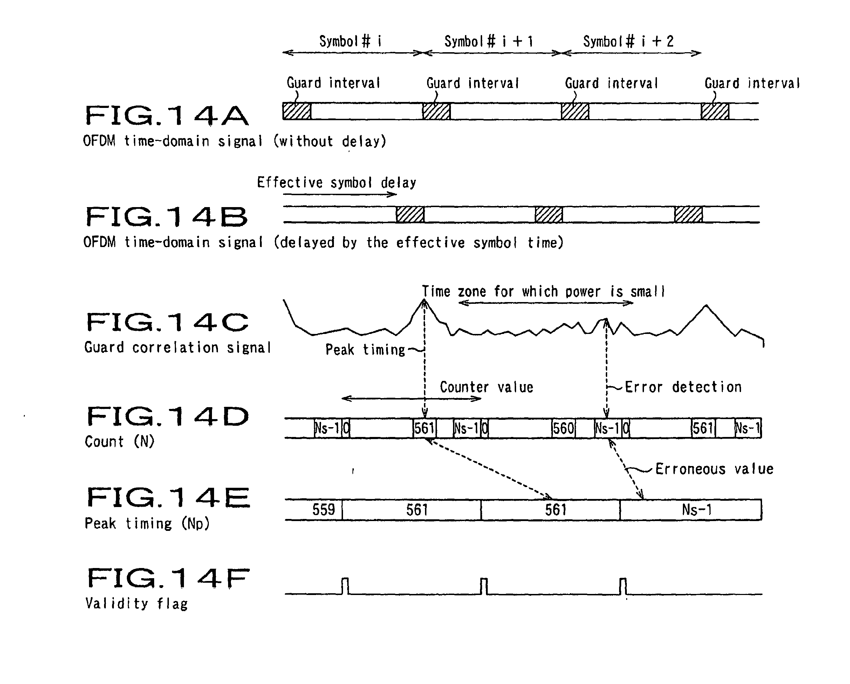

In the above flat fading environment, a signal whose power varies periodically is supplied to the receiver 1. FIG. 14A shows an OFDM time-domain signal (not delayed) in the flat fading environment. FIG. 14B shows a signal resulted from delaying, by the effective symbol, of the OFDM time-domain signal in the flat fading environment.

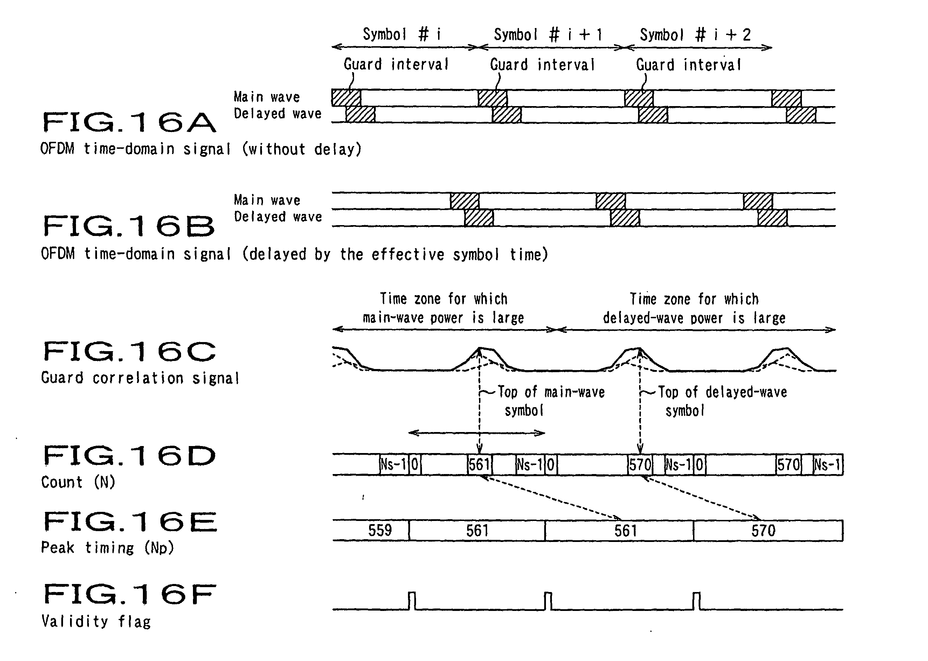

When the receiver 1 has received the above signal, the guard correlation signal will show a correct value in a time zone for which the signal power is large, but it will have a relatively large noise in a time zone for which the signal power is small, as shown in FIG. 14C. Assume that a peak is detected of such a guard correlation signal. In the time zone for which the signal power is large, a correct symbol-boundary position is selected as a peak timing Np, but in the time zone for which the signal power is small, an erroneous value will be selected, as shown in FIGS. 14D, 14E and 14F. Therefore, with the peak timing Np being viewed in the time direction, an erroneous count takes place at random in the time zone for which the signal power is smaller and no accurate symbol synchronization is difficult, as shown in FIG. 15.

(Frequency selection-caused fading)

An environment in which a multipath environment and flat fading environment are combined together is called "frequency-selective fading environment". The frequency-selective fading will take place when all the waves arriving at the receiver 1 are delayed ones and the arrival times of the waves are sorted into a plurality of groups, for example.

In the above frequency-selective fading environment, the receive 1 is supplied with main and delayed waves whose powers vary periodically. FIG. 16A shows an OFDM time-domain signal (not delayed) in the flat fading environment, and FIG. 16B shows a signal resulted from delaying, by the effective symbol, of the OFDM time-domain signal in the flat fading environment. In the frequency-selective fading environment, there will periodically appear a time zone for which the main wave is larger in power than the delayed wave and a time zone for which the delayed wave is larger in power than the main wave.

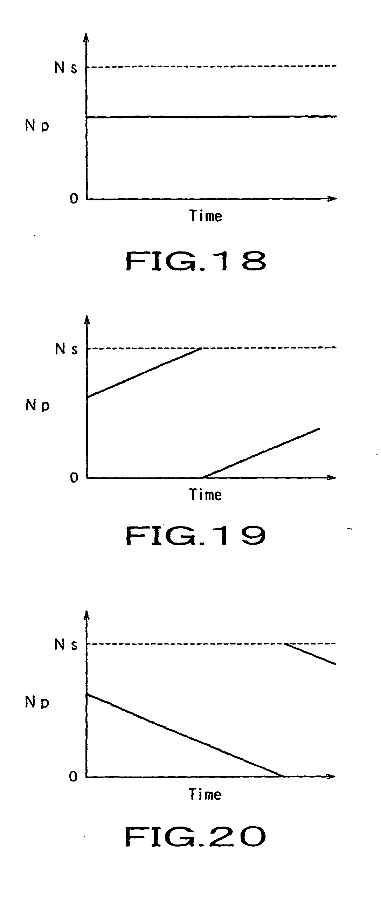

As shown in FIG. 16C, the guard correlation signal thus received has a peak at the main-wave symbol boundary in a time zone for which the main-wave power is large and at the delay-wave symbol boundary in a time zone for which the delayed-wave power is large. The main-wave symbol boundary of such a guard correlation signal detected is selected as the peak timing Np in a time zone for which the main-wave power is large, and the delayed-wave boundary is selected as the peaking timing Np in a time zone for which the delayed-wave power is large, as shown in FIGS. 16D, 16E and 16F. Therefore, with the peak timing Np being viewed in the time direction, the counts are alternately swapped with each other for a generally constant period as shown in FIG. 17, and it is difficult to assure any accurate symbol synchronization.

(Clock-frequency error)

The clock-frequency error is an error caused by a difference in frequency between the oscillators in the transmitter and receiver, respectively. That is, it is an error caused by a difference in frequency between the transmission clock for the supplied OFDM signal and an internal clock in the receiver 1.

The peak timing Np from the guard correlation/peak detection circuit 12 is a count by the free-running counter 37 at the peak timing of the guard correlation signal. The free-running counter 37 is a cyclic counter circuit whose number of counts per cycle is preset to the number of samples of one OFDM symbol.

Therefore, when the transmission clock for the received OFDM signal perfectly coincides in frequency with the operation clock for the free-running counter 37, the peak timing Np will be contact as shown in FIG. 18.

On the other hand, when the frequency of the operation clock for the free-running counter 37 is higher than that of the transmission clock for the received OFDM signal, namely, when the transmission clock is earlier than the operation clock for the free-running counter 37, the peak timing Np will gradually be larger in value as shown in FIG. 19. Also, when the frequency of the operation clock for the free-running counter 37 is lower than that of the transmission clock for the received OFDM signal, namely, when the operation clock for the free-running counter 37 is later than the transmission clock, the peak timing Np will gradually be smaller in value as shown in FIG. 20.

Therefore, in case there is a clock-frequency error as above, the peak timing Np will vary in value, and so it will be difficult to make any accurate symbol synchronization.

(Necessity of the timing synchronization circuit)

On this account, the timing synchronization circuit 13 which will be explained herebelow is adapted to cancel various disturbances and errors having been described above for assuring an accurate symbol synchronization.

Timing synchronization circuit

Next, the timing synchronization circuit 13 will be illustrated and described.

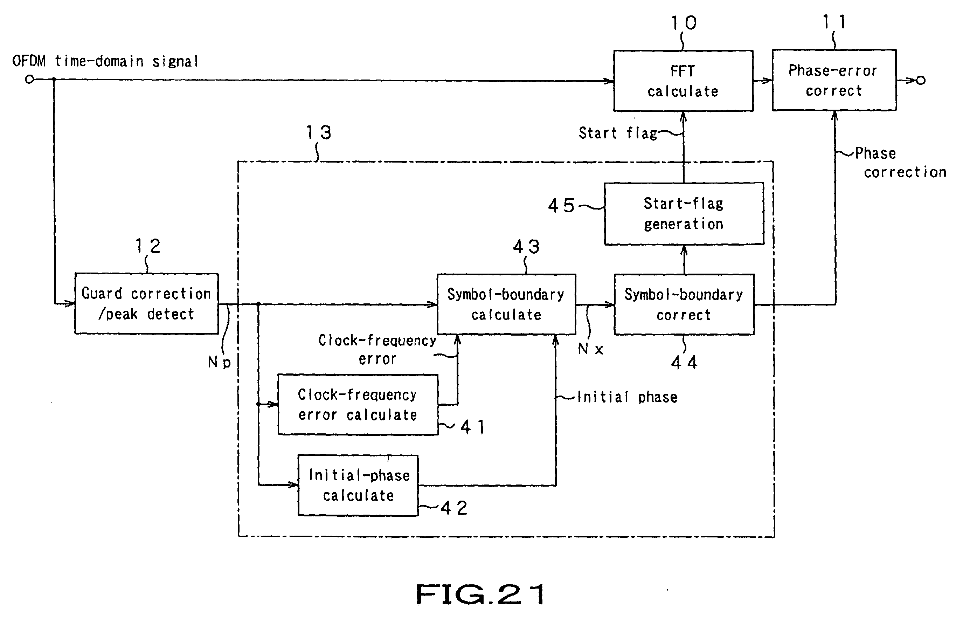

FIG. 21 shows the internal construction of the timing synchronization circuit 13.

As shown in FIG. 21, the timing synchronization circuit 13 includes a clock-frequency error calculation circuit 41, initial-value phase calculation circuit 42, symbol-boundary calculation circuit 43, symbol-boundary correction circuit 44, and a start-flag generation circuit 45.

The timing synchronization circuit 13 is supplied with the peak timing Np from the guard correlation/peak detection circuit 12 at every M OFDM symbols (M is a natural number). Each circuit in the timing synchronization circuit 13 has its operation controlled in an input timing of the peak timing Np (at every M OFDM symbols).

The clock-frequency error calculation circuit 41 estimates a clock-frequency error on the basis of the peak timing Np supplied at every M OFDM symbols, and supplies the estimated clock-frequency error to the symbol- boundary calculation circuit 43.

The initial-value phase calculation circuit 42 calculates an initial value of the peak timing Np on the basis of the peak timing Np supplied at every $M$ OFDM symbols. The initial value is supplied to the symbol-boundary calculation circuit 43.

The symbol-boundary calculation circuit 43 filters the peak timing Np supplied at every M OFDM symbols, and calculates a symbol-boundary position Nx indicative of the boundary position of the OFDM symbol. The symbol-boundary position Nx is represented by a range of 0 to $Ns$ as a cycle of the free-running counter 37 in the guard correlation/peak detection circuit 12. However, the symbol-boundary position Nx has a precision that is after the decimal point while the free-running counter 37 and peak timing Np have a precision of an integer. The symbol-boundary calculation circuit 43 calculates a phase difference between an output (symbol-boundary position Nx) and input (peak timing Np), and filters it on the basis of the phase error component to stabilize the output (symbol-boundary position Nx). The initial value from the initial-value phase calculation circuit 42 provides an initial output at the start of filtering, for example.

Also, the symbol-boundary calculation circuit 43 corrects a variation of the output (symbol-boundary position Nx) based on the clock-frequency error by adding the clock-frequency error calculated by the clock-frequency error calculation circuit 41 to the phase error component. By determining a symbol-boundary position as well as a clock-frequency error as above, a symbol-boundary position can be determined with a higher accuracy.

The symbol-boundary position Nx from the symbol-boundary calculation circuit 43 is supplied to the symbol-boundary correction circuit 44.

The symbol-boundary correction circuit 44 detects an integer component of the symbol-boundary position Nx supplied at every M symbols, and calculates a start time for the FFT calculation. The calculated start time is supplied to the start-flag generation circuit 45. Also, the symbol-boundary correction circuit 44 determines a time lag, whose precision is smaller than the operation-clock cycle, between the symbol-boundary time and FFT-calculation start timing by detecting a component of the symbol-boundary position Nx, which is after the decimal point, and calculates, on the basis of the determined time lag, a phase rotation of a signal component included in each sub-carrier having undergone the FFT calculation. The calculated phase rotation is converted into a complex signal, and then supplied to the phase correction circuit 11.

The start-flag generation circuit 45 generates, based on the start time supplied from the symbol-boundary correction circuit 44, a start flag with which a timing of signal extraction (that is, an FFT-calculation start timing) for the FFT calculation is identified. This start flag is generated at each OFDM symbol. It should be noted that the start flag may be generated with a delay of a predetermined margin time from the supplied symbol-boundary position Nx. However, the margin time should never exceed at least the length of time of the guard interval. By generating the start flag with a delay of the predetermined margin time from the symbol-boundary time as above, it is possible to cancel an inter-symbol interference caused by the detection of a preceding symbol boundary which is a ghost, for example.

Each of the circuits included in the timing synchronization circuit 13 is constructed as will be described in detail below.

Clock-frequency error calculation circuit

The clock-frequency error calculation circuit 41 detects a time change rate (gradient $S$) of the peak timing Np, and calculates a clock-frequency error on the basis of the detected gradient S. Namely, a clock-frequency error can be calculated from the gradient S for the latter is proportional with the clock-frequency error. First, the reason for the above will be explain herebelow.

The peak timing Np from inside the guard correlation/peak detection circuit 12 is an output provided by the free-running counter 37 in a timing in which the guard correlation signal attains its peak. The free-running counter 37 is a cyclic counter circuit whose number of counts per cycle is preset to the number of samples ($Ns$) of one OFDM symbol.

Thus, in case the symbol period of a received OFDM signal has a perfect coincidence with that of the free-running counter 37, namely, when the transmission clock of the received OFDM signal is completely coincident in frequency with the operation clock for the free-running counter 37, the peak timing Np will be constant.

On the contrary, in case the symbol period of the received OFDM signal is shorter than that of the free-running counter 37, namely, if the operation clock for the free-running counter 37 is earlier than the transmission clock of the received OFDM signal, the peak timing Np will gradually increase. Also, if the cycle of the free-running counter 37 is longer than the symbol period of the received OFDM signal, that is, when the operation clock for the free-running counter 37 is later than the transmission clock for the received OFDM signal, the peak timing Np will gradually decrease.

The time change rate of the peak timing Np will be proportional with a clock-frequency error between the transmission clock for the received OFDM signal and the operation clock for the signal reception.

The clock-frequency error calculation circuit 41 detects a gradient S of the peak timing Np proportional with the clock-frequency error. It should be noted that in other words, the gradient S of the peak timing Np is a value of the symbol interval in the received OFDM signal, measured with the operation clock for the signal reception.

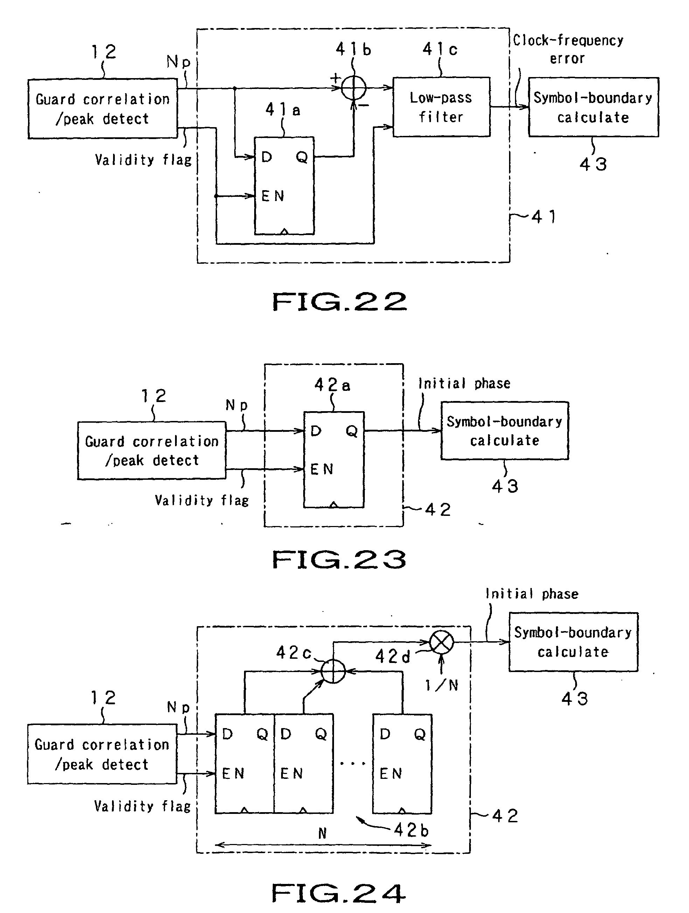

FIG. 22 is a circuit diagram of the clock-frequency error calculation circuit 41.

As shown in FIG. 22, the clock-frequency error calculation circuit 41 includes a register 41a to delay the peak timing Np by one sample, subtracter 41b, and a low-pass filter 41c.

The clock-frequency error calculation circuit 41 is supplied with the peak timing Np synchronously with a valid flag that is High (1) at every M OFDM symbols (M is a natural number). That is, at every constant input intervals (M OFDM symbols), the clock-frequency error calculation circuit 41 is supplied with the peak timing Np from the guard correlation/peak detection circuit 12. The register 41a delays the peak timing Np by one sample (M symbol periods). The subtracter 41a subtracts the one-sample earlier peak timing Np, stored in the register 41 a, from the peak timing Np supplied to the guard correction/peak detection circuit 12, and calculates a change of the peak timing Np. The low-pass filter 41c averages the changes of the peak timing Np, and determines a time change rate (gradient S) of the peak timing Np.

Note that the register 41a is an enable register. The enable register functions as shown in Table 1. In Table 1, "k" indicates an arbitrary timing and "k+1" indicates a timing one clock later. Also, "EN[x] indicates the value of an enable port (0 or 1), "D[x] indicates the value of an input port of the register at a time x, "Q[x]" indicates the value of an output port at the time x, and "A" indicates an arbitrary value.

Table 1

| EN[k] | D[k] | Q[k+1] |
|-------|------|--------|
| 0 | A | Q[k] |
| 1 | A | A |

That is, the enable register is a circuit which holds the input port value in a timing of asserting a flag to the enable port (set to "1"), and delivers the internally held value at the output port. The other enable register, referred to herein, works as in Table 1.

The clock-frequency error calculation circuit 41 supplies the time change rate (gradient $S$) of the peak timing Np thus determined, as a clock-frequency error, to the symbol-boundary calculation circuit 43.

Initial-phase calculation circuit

The initial-phase calculation circuit 42 calculates an initial value (initial phase) used in filtering in the symbol-boundary calculation circuit 43.

The initial-phase calculation circuit 42 may be formed from an enable register 42a as shown in FIG. 23, for example. The register 42a is supplied at an input port D thereof with the peak timing Np, while being supplied at an enable port EN thereof with the valid flag. In this case, the initial-phase calculation circuit 42 delays the peak timing Np by one sample (M symbols), and outputs it as an initial phase directly to the symbol-boundary calculation circuit 43.

Also, the initial-phase calculation circuit 42 may be constructed as shown in FIGS. 24 to 26 for the purpose of improving the precision of the initial phase.

The initial-phase calculation circuit 42 shown in FIG. 24 includes a shift register 42b formed from N stages of enable registers, an adder 42c to sum outputs from all the registers in the shift registers 42b, and a multiplier 42d to multiply the output from the adder 42c by $1/N$. The shift register 42b is supplied at an input port D of the first-stage register thereof with the peak timing Np from the guard correlation/peak detection circuit 12. Also, the shift register 42b is supplied at an enable port EN of each of the registers included therein with the valid flag from the guard correlation/peak detection circuit 12. The initial-phase calculation circuit 42 shown in FIG. 24 outputs the output from the multiplier 42d as an initial phase. That is, the initial-phase calculation circuit 42 shown in FIG. 24 calculates a moving average of the peak timing Np at every N samples, and outputs it as an initial phase.

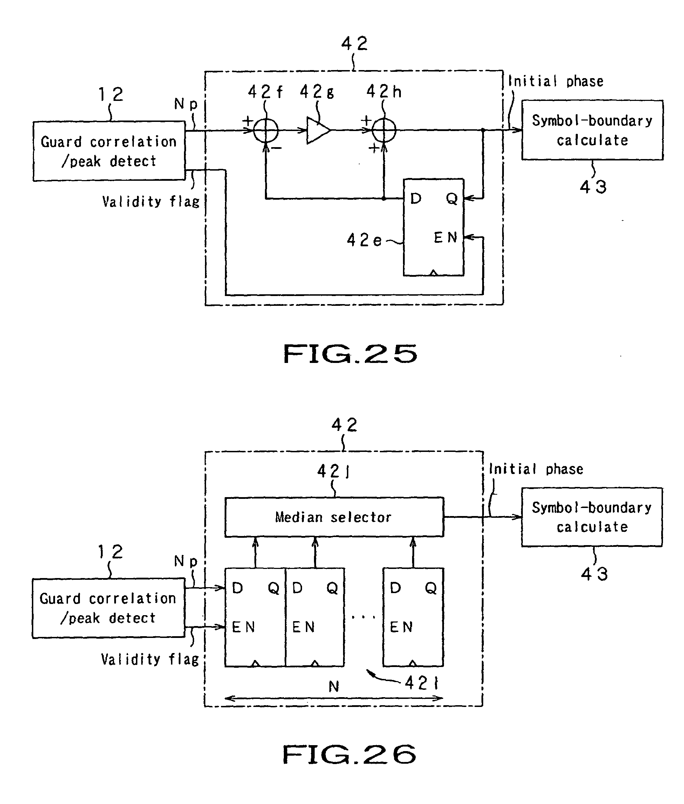

The initial-phase calculation circuit 42 shown in FIG. 25 includes an enable register 42e which holds the output for one sample, a subtracter 42f to subtract the output from the register 42e from the peak timing Np supplied from the guard correlation/peak detection circuit 12, a multiplier 42g to multiply the output from the output from the subtracter 42f by a predetermined gain, and an adder 42h to add the output from the multiplier 42g and output from the register 42e. The register 42 is supplied at an input port D thereof with the output from the adder 42h and at enable port EN thereof with the valid flag from the guard correlation/peak detection circuit 12. The initial-phase calculation circuit 42 shown in FIG. 25 outputs the output from the adder 42h as an initial phase. That is, the initial-phase calculation circuit 42 shown in FIG. 25 averages the peak timing Np by low-pass filtering by an IIR type filter, and outputs a mean value as an initial phase.

The initial-phase calculation circuit 42 shown in FIG. 26 includes a shift register 42i formed from N stages of enable registers, and a median selector 42j to select one median from the values stored in all the registers in the shift register 42i. The shift register 42i is supplied at an input port D of the first-state register with the peak timing Np from the guard correlation/peak detection circuit 12. The shift register 42i is supplied at an enable port EN of each register stage with the valid flag from the guard correlation/peak detection circuit 12. The median selector 42j accepts N inputs from the registers in the shift register 42i, and outputs an N/2-th one of the N inputs arranged in the descending order. Therefore, the initial-phase calculation circuit 42 shown in FIG. 26 outputs, as an initial phase, the output from the median selector 42j. Namely, the initial-phase calculation circuit 42 calculates a median of the peak timing Np at every N samples by a so-called median selection filter, and outputs it as an initial phase. Thus, in the initial-phase calculation circuit 42, it is possible to effectively suppress a variation due to an extremely large error of a certain peak timing Np of the input to the initial-phase calculation circuit 42, for example.

Symbol-boundary calculation circuit

Next, the symbol-boundary calculation circuit 43 will be illustrated and explained.

The symbol-boundary calculation circuit 43 is supplied with the peak timing Np from the guard correlation/peak detection circuit 12, and estimates a symbol-boundary position Nx by making DLL (delay locked loop) filtering on the basis of the peaking timing Np.

(Peak timing Np, and symbol-boundary position Nx)

First, the peak timing Np and symbol-boundary position Nx will be explained.

The peak timing Np indicates a peak position of the guard correlation signal detected by the guard correlation/peak detection circuit 12, and the symbol-boundary position Nx indicates a boundary position of the OFDM symbol of the received OFDM signal.

The peak timing Np and symbol-boundary position Nx take values, respectively, within a range of a value counted by the free-running counter 37 in the guard correlation/peak detection circuit 12. That is, each of the peak timing Np and symbol-boundary position Nx takes a value ranging from 0 to $Ns$. Since the peak timing Np is a count output from the free-running counter 37, so it takes a value ranging from 0 to *Ns* whose precision is an integer. The symbol-boundary position Nx is a value ranging from 0 to *Ns* whose precision is after the decimal point as well.

Since the free-running counter 37 in the guard correlation/peak detection circuit 12 runs freely counting the operation clock for the OFDM receiver 1, so the count therefrom may be regarded as a reference time for the OFDM receiver 1. Also, the count per cycle of the free-running counter 37 is set to the number *Ns* of samples (sum of the number *Nu* of samples in the effective symbol and number *Ng* of samples in the guard interval) in one symbol of the OFDM signal. Therefore, each of the peak timing Np and symbol-boundary position Nx represents a time synchronous with the free-running counter 37. In other words, they represent a phase relative to the symbol period of the OFDM signal.

Since in the OFDM receiver 1, a value within the range of the number *Ns* of samples in one symbol of the OFDM signal is used to generate a peak timing Np and symbol-boundary position Nx, so it is possible to easily control the synchronization of the symbol-boundary positions taking place repeatedly.

(Internal construction of the symbol-boundary calculation circuit)

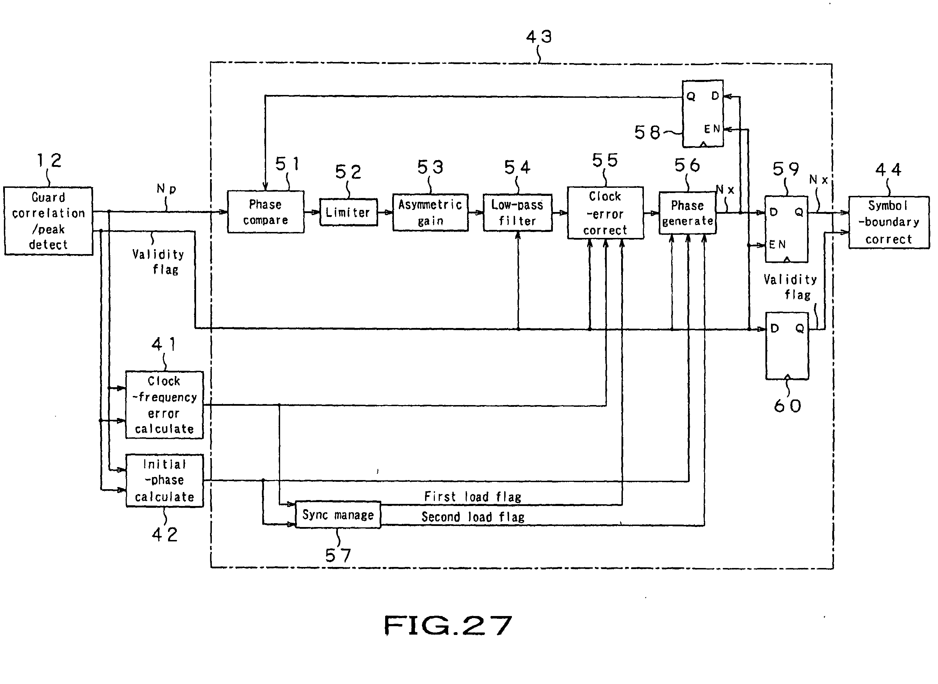

Next, the internal construction of the symbol-boundary calculation circuit 43 will be described. FIG. 27 is a circuit diagram of the symbol-boundary calculation circuit 43.

As shown in FIG. 27, the symbol-boundary calculation circuit 43 includes a phase comparison circuit 51, limiter 52, asymmetric gain circuit 53, low-pass filter 54, clock-error correction circuit 55, phase generation circuit 56, synchronization management circuit 57, first register 58, second register 59, and a third register 60.

The symbol-boundary calculation circuit 43 is supplied with the peak timing Np and valid flag. The valid flag becomes High (1) at every M symbols (M is a natural number) synchronously with the cyclic timing of the free-running counter 37. The symbol-boundary calculation circuit 43 calculates a symbol-boundary position Nx in each timing when the valid flag becomes High.

(Phase comparison circuit)

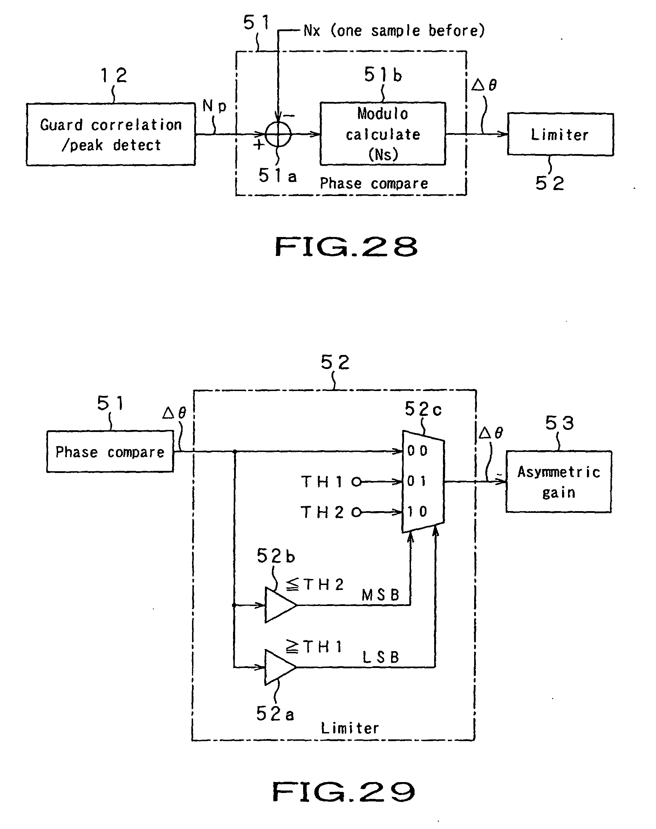

FIG. 28 is a circuit diagram of the phase comparison circuit 51.

The phase comparison circuit 51 includes a subtracter 51a and modulo calculator 51b. The phase comparison circuit 51 is supplied with the peak timing Np from the guard correlation/peak detection circuit 12, and also with the symbol-boundary position Nx from the symbol-boundary calculation circuit 43 by feed-back. The symbol-boundary position Nx supplied to the phase comparison circuit 51 is outputted from the symbol-boundary calculation circuit 43 one sample before the input timing of the peak timing Np outputted from the guard correlation/peak detection circuit 12 (namely, in the last timing when the valid flag has become High). The symbol-boundary position Nx is supplied to the phase comparison circuit 51 via the first register 58.

The subtracter 51a subtracts the symbol-boundary position Nx from the peak timing Np. The modulo calculator 51b calculates the output from the subtracter 51a to determine a subtraction residual per *Ns* (number of samples from one symbol). That is, the modulo calculator 51b divides the output from the subtracter 51a by *Ns* (number of samples from one symbol) and outputs the residual of the division.

The phase comparison circuit 51 constructed as above calculates a difference $\Delta\theta$ between a symbol-boundary phase being currently estimated and the peak phase of a current guard correlation signal on the assumption that the count of the free-running counter 37 is regarded as a symbol period. Namely, it calculates a difference between a current estimated symbol-boundary time and the peak time of a current guard correlation signal on the assumption that the count of the free-running counter 37 is regarded as a reference time.

The phase difference $\Delta\theta$ calculated by the phase comparison circuit 51 is supplied to the limiter 52.

(Limiter)

FIG. 29 is a circuit diagram of the limiter 52.

The limiter 52 is supplied with the phase difference $\Delta\theta$ from the phase comparison circuit 51. The limiter 52 includes a first comparator 52a to make a comparison between an upper limit TH1 and phase difference $\Delta\theta$, a second comparator 52b to make a comparison between a lower limit TH2 and phase difference $\Delta\theta$, and a selector 52c to select any one of the phase difference $\Delta\theta$, upper value TH1 and lower value TH2. The relation in magnitude between the upper and lower limits TH1 and TH2 is TH1 > TH2,

The first comparator 52a outputs Low (0) when the phase difference $\Delta\theta$ is smaller than the upper limit TH1, or High (1) when the phase difference $\Delta\theta$ is larger than the upper limit TH1. The second comparator 52b outputs Low (0) when the phase difference $\Delta\theta$ is larger than the lower limit TH2, or High (1) when the phase difference $\Delta\theta$ is smaller than the lower limit TH2.

The selector 52c outputs the phase difference Δθ from the phase comparison circuit 51 as it is when the output from the first comparator 52a is Low (0) and output from the second comparator 52b is Low (0). The selector 52c outputs the upper limit TH1 when the output from the first comparator 52a is High (1), and the lower limit TH2 when the output from the second comparator 52b is High (1). Namely, the limiter 52 outputs the phase difference Δθ as it is when the supplied phase difference Δθ is between the upper and lower limits TH1 and TH2. It clips the output with the upper limit TH1 when the supplied phase difference Δθ is over the upper limit TH1, or with the lower limit TH2 when the supplied phase difference Δθ is below the lower limit TH2. Thus, the limiter 52 limits the level of the phase difference Δθ within a range of TH1 > TH2.

Note that since the phase difference Δθ varies in the positive- and negative-going directions about "0", so the limiter 52 sets the upper limit TH1 to be equal to or larger than 0 and lower limit TH2 to smaller than or equal to 0.

Because of this limiter 52, the symbol-boundary calculation circuit 43 can cancel a large impulse noise caused in a fading environment, for example, to improve the synchronization holding performance.

The phase difference Δθ whose level has been limited by the limiter 52 is supplied to the asymmetric gain circuit 53.

(Asymmetric gain circuit)

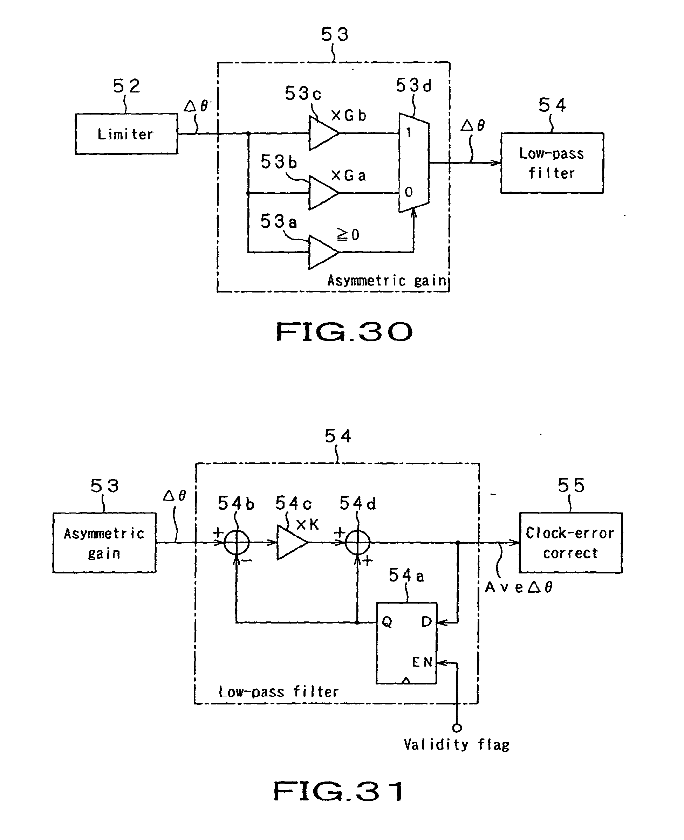

FIG. 30 shows a circuit diagram of the asymmetric gain circuit 53.

The asymmetric gain circuit 53 is supplied with the phase difference Δθ which is an output from the limiter 52 and has been limited in level. The asymmetric gain circuit 53 includes a comparator 53a to determine the polarity of the phase difference Δθ, a first multiplier 53b to multiply the phase difference Δθ by a first gain Ga, a second multiplier 53c to multiply the phase difference Δθ by a second gain Gb, and a selector 53d to select an output from either the first or second multiplier 53b or 53c. The relation in magnitude between the first and second gains Ga and Gb is Ga > Gb.

The comparator 53a compares the phase difference Δθ with 0, and outputs Low (0) when the phase difference Δθ < 0, and High (1) when the phase difference Δθ > 0. The selector 53d selects and outputs an output (a product of the phase difference Δθ and Ga) from the first multiplier 53b when the output from the comparator 53a is Low (0), and an output (product of the phase difference Δθ and Gb) from the second comparator 53c when the output from the comparator 53a is High (1).

That is, the asymmetric gain circuit 53 judges whether the peak timing Np is earlier or later than the symbol-boundary position Nx. When the judgment is that the peak timing Np is earlier than the symbol-boundary position Nx, the asymmetric gain circuit 53 multiplies the phase difference Δθ by a smaller gain (Gb). When the peak timing Np is later than the symbol-boundary position Nx, the asymmetric gain circuit 53 multiplies the phase difference Δθ by a larger gain (Ga). Namely, in case a plurality of peak values is detected due to a multipath or the like, the asymmetric gain circuit 53 will multiply the phase difference Δθ by a different gain for synchronization with a temporarily earlier signal (main wave).

The phase difference Δθ multiplied by a gain by the asymmetric gain circuit 53 is supplied to the low-pass filter 54.

(Low-pass filter)

FIG. 31 is a circuit diagram of the low-pass filter 54.

The low-pass filter 54 is supplied with the phase difference Δθ multiplied by a gain by the asymmetric gain circuit 53 and valid flag from the guard correlation/peak detection circuit 12. The low-pass filter 54 includes an enable register 54a, subtracter 54b, multiplier 54c, and an adder 54d.

The enable register 54a is supplied at an enable port EN thereof with the valid flag, and at an input port D thereof with the output (mean phase difference Ave Δθ) from the low-pass filter 54.

The subtracter 54b subtracts an output from the register 54a from the phase difference Δθ from the asymmetric gain circuit 53. That is, the subtracter 54b subtracts the output (mean phase difference Ave Δθ) supplied from the low-pass filter 54 from the supplied phase difference Δθ in a one-sample earlier timing (the last timing in which the valid flag becomes High) to calculate a residual of the phase difference Δθ.

The multiplier 54c multiplies the residual of the phase difference Δθ from the subtracter 54b by a predetermined coefficient K. The adder 54d adds the residual multiplied by the predetermined coefficient K and the output from the register 54a. The output from the adder 54d is an output from the low-pass filter 54 (mean phase difference Ave Δθ).

That is, the low-pass filter 54 is an IIR type low-pass filter to average the supplied phase difference Δθ and calculate the mean phase difference Ave Δθ.

The mean phase difference Ave Δθ calculated by the low-pass filter 54 is supplied to the clock-error correction circuit 55.

(Clock-error correction circuit)

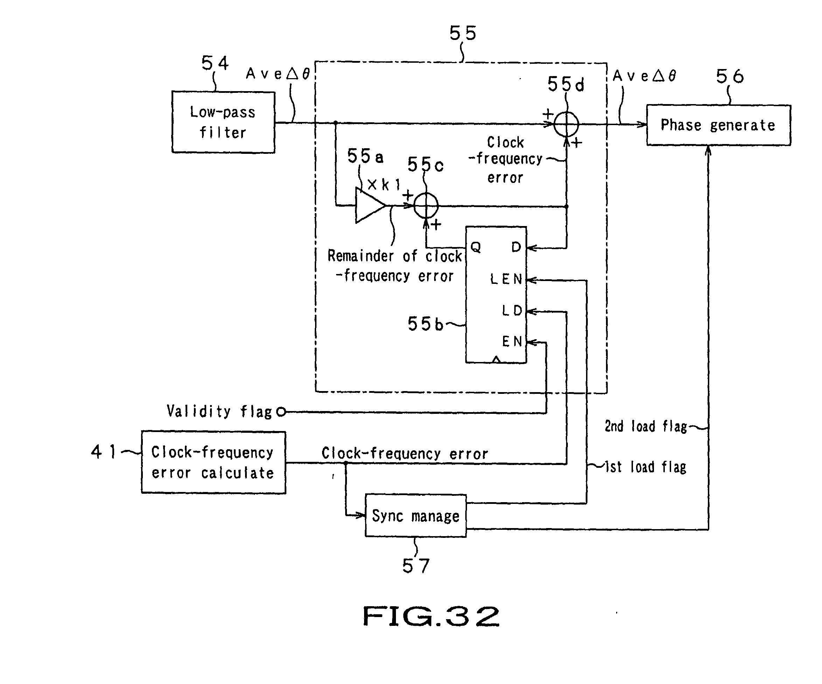

Fig. 32 is a circuit diagram of the clock-error correction circuit 55, and shows the synchronization management circuit 57 that controls the clock-error correction circuit 55.

The clock-error correction circuit 55 is supplied with the mean phase difference Ave $\Delta\theta$ from the low-pass filter 54, and the valid flag from the guard correlation/peak detection circuit 12.

The clock-error correction circuit 55 includes a multiplier 55a, register 55b, first adder 55c and a second adder 55d.

The multiplier 55a multiplies the mean phase difference Ave $\Delta\theta$ from the low-pass filter 54 by a predetermined coefficient K1. The output from the multiplier 55a represents a residual component resulted from subtraction of a clock-frequency error from a specific symbol being processed from an estimated clock-frequency error. The residual component of the clock-frequency error can be calculated with the coefficient K1 being taken as a reciprocal of the number of samples for n samples (n is an interval of symbols for which the valid flag takes place), for example, that is, as $1/(n \times Ns)$. The register 55b stores a current estimated clock-frequency error. The adder 55c adds together the current estimated clock-frequency error stored in the register 55b and residual component from the multiplier 55a to calculate a new clock-frequency error.

The second adder 55d adds the clock-frequency error from the first adder 55c to the mean phase difference Av $\Delta\theta$ from the low-pass filter 54. The mean phase difference Ave $\Delta\theta$ having the clock-frequency error added thereto is supplied to the phase generation circuit 56.

The clock-error correction circuit 55 makes clock-frequency error correction of the mean phase difference Ave $\Delta\theta$ by adding the clock-frequency error to the mean phase difference Ave $\Delta\theta$ as above. Thus, the symbol-boundary calculation circuit 43 can synchronize symbols with an improved accuracy.

A current estimated clock-frequency error is stored into the register 55b. Any one of two estimated clock-frequency errors is thus stored. One of the two estimated clock-frequency errors is an estimated value from the first adder 55c, and the other is an estimated value from the external clock-frequency error calculation circuit 41.

The clock-frequency error can be calculated by making cumulative addition of the residual components. That is, outputs from the multiplier 55a are cumulatively added together until the cumulated value becomes stable. The stable value is an estimated clock-frequency error. Also, the clock-frequency error can also be calculated from a gradient of the peak timing Np as mentioned above. The clock-frequency error calculation circuit 41 outputs a clock-frequency error calculated from the gradient of the peak timing Np. The above two values can be used as the clock-frequency error to be added to the mean phase difference Ave $\Delta\theta$. However, the clock-frequency error from the clock-frequency error calculation circuit 41 permits a quicker response because it is not necessary to make cumulative addition of the residuals and only the clock-frequency error can be calculated through any other path. Therefore, a correct clock-frequency error can be determined without being influenced by any phase error.

On this account, the clock-error correction circuit 55 judges whether the output from the clock-frequency error calculation circuit 41 is stable or not. When the output is stable, the clock-error correction circuit 55 supplies the output from the clock-frequency error correction circuit 41 to the register 55b. On the other hand, when the output is not stable, the clock-error correction circuit 55 supplies, by feedback, the output from the first adder 55c to the register 55b.

More specifically, the output stability is managed by the synchronization management circuit 57. The synchronization management circuit 57 manages the stability of the output from the clock-frequency error calculation circuit 41 by a state machine. The state machine of the synchronization management circuit 57 will shift the output to an unstable state first after the system is put into operation. When the output from the clock-frequency error calculation circuit 41 is unstable, the state machine will shift the output to the stable state if the output is within a constant range continuously through a predetermined number of times. At this time, the state machine holds the output when shifted to the stable state as a current estimated value. In the stable state, the state machine will detect a difference between the output from the clock-frequency error calculation circuit 41 and current estimated value, and shift the output to the unstable state if the difference exceeds a predetermined range continuously through the predetermined number of times. The synchronization management circuit 57 sets the first load flag to High (1) when the state machine is stable, or to Low (0) when the state machine is unstable.

Also, an input path is switched to the register 55b by forming the latter from a load-enable register.

The load-enable register functions as shown in Table 2. In Table 2, "k" represents an arbitrary timing, and "k+1" indicates a one clock-later timing. "EN[x]" indicates the value at an enable port (0 or 1) at a time x, "LEN[x]" indicates the value at a load-enable port (0 or 1) at the time x, "D[x]" indicates the value at an input port of the register at the time x, "LD[x]" indicates the value at a load port of the register at the time x, "Q[x]" indicates the value at an output port of the register at the time x, and "A" and "B" indicate arbitrary values, respectively.

Table 2

| EN[k] | LEN[k] | D[k] | LD[k] | Q[k+1] |
|-------|--------|------|-------|--------|
| 0 | 0 | A | B | Q[k] |
| 1 | 0 | A | B | A |
| 0 | 1 | A | B | Q[k] |
| 1 | 1 | A | B | B |

That is, the load-enable register holds the value at the input port D or load port LD in a timing when the signal is asserted (set to "1") to the enable port EN, and outputs the value held inside from the output port Q. Any of the value at the input port D or load port LD is selected depending upon whether the load-enable port LEN is High (1) or Low (0). Other load-enable registers, referred to herein, function as in Table 2.

The load-enable register 55b is supplied at an enable portion EN thereof with the valid flag, at an input port D with the output from the first adder 55c, at a load-enable port LEN with the first load flag from the synchronization management circuit 57, and at a load terminal LD thereof with the clock-frequency error from the clock-frequency error calculation circuit 41.

Therefore, when the output from the clock-frequency error calculation circuit 41 has been determined by the synchronization management circuit 57 to be stable, the register 55b takes in the output from the clock-frequency error calculation circuit 41. When the output from the clock-frequency error calculation circuit 41 has been determined to unstable, the register 55b will take in the output from the first adder 55c.

Because of the clock-error correction circuit 55 provided_as above, it is possible to correct a symbol-boundary position calculated on another path when calculating the symbol-boundary position, which will contribute to a more speedy and accurate calculation of a symbol boundary.

(Phase generation circuit)

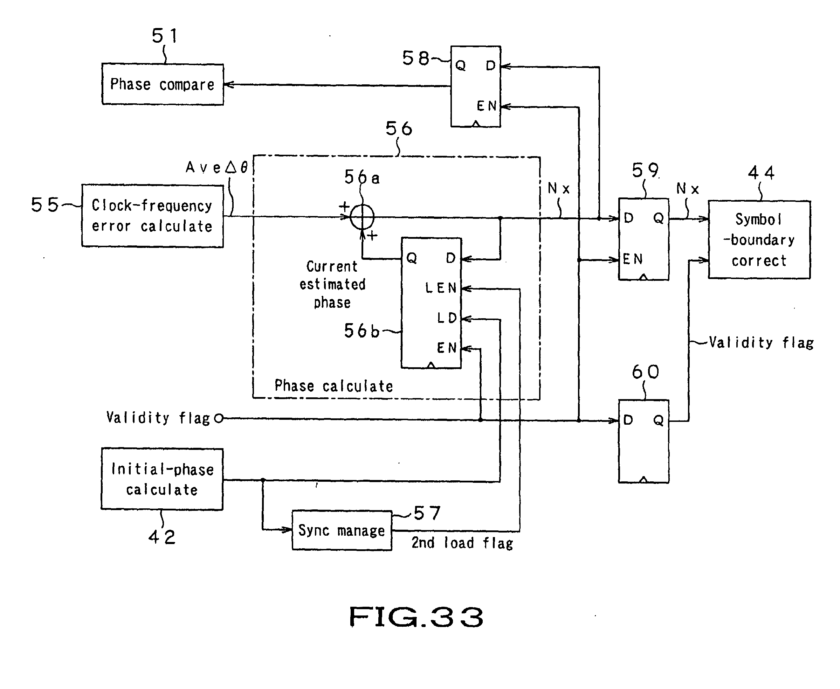

FIG. 33 is a circuit diagram of the phase generation circuit 56, showing the synchronization management circuit 57 which controls the phase generation circuit 56.

The phase generation circuit 56 is supplied with the mean phase difference Ave $\Delta\theta$ after a clock-frequency error component from the clock-error correction circuit 55 is corrected and valid flag from the guard correlation/peak detection circuit 12. Also, the phase generation circuit 56 is supplied with the initial phase from the initial-phase calculation circuit 42 and second load flag from the synchronization management circuit 57.

The phase generation circuit 56 includes an adder 56a and register 56b.

The register 56b has a current estimated phase stored therein.

The adder 56a is supplied with the mean phase difference Ave $\Delta\theta$ from the clock-error correction circuit 55, and the current estimated phase from the register 56b. The adder 56a adds the mean phase difference Ave $\Delta\theta$ and current estimated phase to provide a symbol-boundary position Nx.

The phase generation circuit 56 calculates a symbol-boundary position Nx by adding the current estimated phase to the mean phase difference Ave $\Delta\theta$. That is, the phase generation circuit 56 generates an output phase (symbol-boundary position Nx) indicating a final symbol-boundary position by adding a phase error component calculated on the path from the phase comparison circuit 51 to the clock-error correction circuit 55 to the current estimated phase. It should be noted that since the output phase (symbol-boundary position Nx) represents a phase of the period of the count (0 to *Ns*) generated by the free-running counter 37, so a value modulo-calculated with the count period (*Ns*) of the free-running counter 37 when the calculated output phase is over *Ns* or under 0.

The current estimated phase is stored into the register 56b. The estimated phase is a selected one of two estimated phases. The one estimated phase is an estimated value from the adder 56a, while the other is from an external initial-phase calculation circuit 42. The current estimated phase can be calculated by making cumulative addition of the phase residuals. That is, the output from the adder 56a is cumulatively added until the value becomes stable. The stable value is taken as a current estimated phase. Also, the current estimated phase may be the peak timing Np itself or a filtered peak timing Np.

The two values can be used as the current estimated phase as above. However, the initial phase from the initial-phase calculation circuit 42 permits a quicker response because it is not necessary to make cumulative addition of the phase errors.

On this account, the phase generation circuit 56 judges whether the output from the initial-phase calculation circuit 42 is stable or not. When the output is stable, the phase generation circuit 56 stores the output from the initial-phase calculation circuit 42 into the register 56b. If the output is not stable (unstable), the phase generation circuit 56 will feed back the output from the adder 56a and store the output from the initial-phase calculation circuit 42 into the register 56b.

More specifically, the state, stable or unstable, is managed by the synchronization management circuit 57. The synchronization management circuit 57 manages the state of the output from the initial-phase calculation circuit 42 by a state machine. The state machine of the synchronization management circuit 57 first shifts the state to an unstable one when the system is put into operation. When the output from the initial-phase calculation circuit 42 is unstable, it is shifted to a stable state if it is within a constant range continuously a predetermined number of times. At this time, the output when the output is shifted to the stable state is taken as a current estimated value. When the output is stable, a difference between the output from the initial-phase calculation circuit 42 and the current estimated value is detected, and the output is shifted to the unstable state if the difference exceeds the constant range continuously the predetermined number of times. When the state machine is stable, the synchronization management circuit 57 sets the second load flag to High (1). If the state machine is unstable, the synchronization management circuit 57 will set the second load flag to Low (0).

Also, an input path is switched to the register 56b by forming the latter from a load-enable register.

The load-enable register 56b is supplied at an enable port EN thereof with the valid flag, at an input port D with the output from the adder 56a, and at a load-enable port LEN with the second load flag from the synchronization management circuit 57, and at a load terminal LD thereof with the initial phase from the initial-phase calculation circuit 42.

Therefore, if the output from the initial-phase calculation circuit 42 has been determined by the synchronization management circuit 57 to be stable, the register 56b takes in the output from the initial-phase calculation circuit 42. When the output has been determined to be unstable, the register 56b takes in the output from the adder 56a.

Because of the phase generation circuit 56 provided as above, it is possible to correct a symbol-boundary position calculated on another path when calculating the symbol-boundary position, which will contribute to a more speedy and accurate calculation of a symbol boundary.

The symbol-boundary position Nx from the phase generation circuit 56 is supplied to the first and second registers 58 and 59.

(Output circuit, and feed-back circuit)

Each of the first and second registers 58 and 59 of the symbol-boundary calculation circuit 43 is an enable register.

The first register 58 is supplied at an enable portion EN thereof with the valid flag, and at an input port D with the output (symbol-boundary position Nx) from the phase generation circuit 56. The first register 58 is connected at the output port Q thereof to the phase comparison circuit 51. The first register 58 delays the symbol-boundary position Nx by one sample (one effective symbol), and supplies it to the phase comparison circuit 51.

The second register 59 is supplied at an enable port EN thereof with the valid flag, and at an input port D with the output (symbol-boundary position Nx) from the phase generation circuit 56. The second register 59 is connected at an output port Q thereof to the symbol-boundary correction circuit 44. Therefore, the second register 59 delays the symbol-boundary position Nx by one sample (one effective symbol), and supplies it to the symbol-boundary correction circuit 44.

The third register 60 is a normal register which delays a signal input to the input port D by one clock, and delivers it at the output port Q. The third register 60 is supplied at an input port D thereof with the valid flag from the guard correlation/peak detection circuit 12, and has the output port Q thereof connected to the symbol-boundary correction circuit 44. Therefore, the third register 60 makes timing synchronization with the symbol-boundary position Nx, and supplies a valid flag to the symbol-boundary correction circuit 44.

Symbol-boundary correction circuit

Next, the symbol-boundary correction circuit 44 will be illustrated and described.

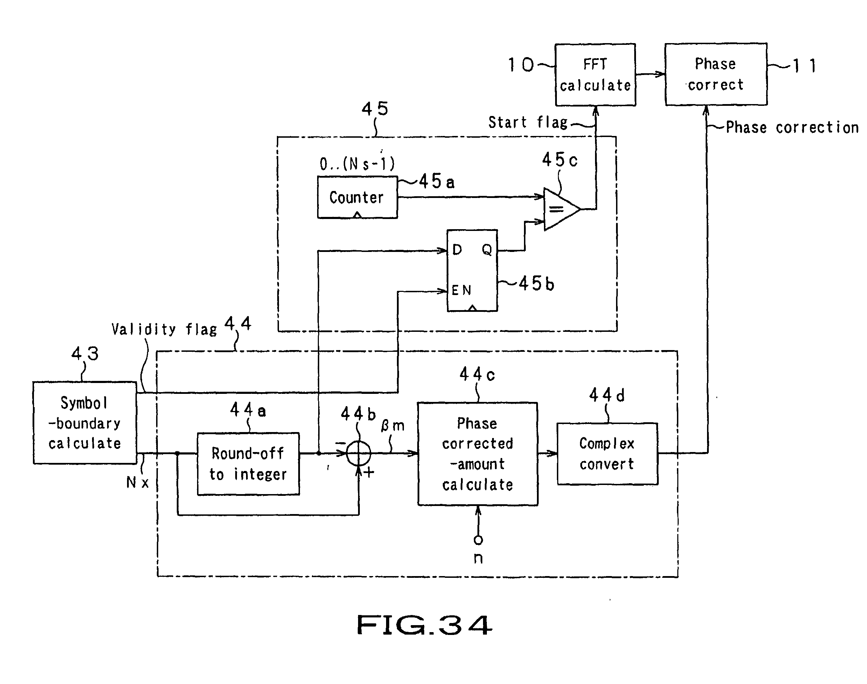

FIG. 34 is a block diagram of the symbol-boundary correction circuit 44.

The symbol-boundary correction circuit 44 is supplied with the symbol-boundary position Nx from the symbol-boundary calculation circuit 43. The symbol-boundary position Nx has a value within the count period (0 to $Ns$) of the free-running counter 37 in the guard correlation/peak detection circuit 12. That is, the symbol-boundary position Nx is a value representing the symbol-boundary position of the PFDM signal by a phase relative to the period of the free-running counter 37. In other words, the symbol-boundary position Nx is a value represented by a reference time when it is assumed that the reference time is generated by the free-running counter 37.

Further, the symbol-boundary position Nx is filtered by the aforementioned symbol-boundary calculation circuit 43 to have the precision thereof expressed to less than the operation-clock cycle of the free-running counter 37. Namely, the symbol-boundary position Nx is a value ranging from 0 to *Ns* whose precision includes a value after the decimal point as well.

The symbol-boundary correction circuit 44 rewrites the symbol-boundary position Nx with an integer precision (that is the precision of the operation-clock cycle) to calculate the symbol-boundary position with the precision of the operation clock. Also, the symbol-boundary correction circuit 44 calculates a phase-error magnitude $\beta_m$ indicating a difference in precision smaller than the operation-clock cycle between the FFT-extraction timing and symbol-boundary timing on the basis of a precision, after the decimal point, of the symbol-boundary position Nx, and generates a phase correction signal for supply to the phase correction circuit 11 on the basis of the phase-error magnitude $\beta_m$.

The symbol-boundary correction circuit 44 is internally constructed as will be described below.

As shown in FIG. 34, the symbol-boundary correction circuit 44 includes an integral-rounding circuit 44a, subtracter 44b, phase-correction amount calculation circuit 44c, and a complex conversion circuit 44d.

The integral-rounding circuit 44a is supplied with the symbol-boundary position Nx calculated by the symbol-boundary calculation circuit 43. The integral-rounding circuit 44a rounds the supplied symbol-boundary position Nx to the value of operation-clock precision. That is, it rounds the symbol-boundary position Nx to an integer included in a range of 0 to *Ns*. For example, the integral-rounding circuit 44a makes integral rounding such as rounding down the symbol-boundary position Nx to a value after the decimal point, rounding up the symbol-boundary position Nx to a value after the decimal point or rounding off the symbol-boundary position Nx in relation to a value the decimal point. The integral-rounded symbol-boundary position Nx is supplied to the subtracter 44b. Further, the integral-rounded symbol-boundary position Nx is supplied as symbol-start information to the start-flag generation circuit 45 as well.

The subtracter 44b subtracts the symbol-boundary position Nx (integral-precision symbol-boundary position Nx) from the integral-rounding circuit 44a from the symbol-boundary position Nx (symbol-boundary position Nx expressed down to after the decimal point) from the symbol-boundary calculation circuit 43. The output from the subtracter 44b is a difference in a precision smaller than the operation-clock cycle between the FFT-extraction timing and symbol-boundary timing, that is, a phase-error magnitude $\beta_m$. The phase-error magnitude $\beta_m$ from the subtracter 44b is supplied to the phase-correction amount calculation circuit 44c.

The phase-correction amount calculation circuit 44c is supplied with the phase-error magnitude $\beta_m$ and the sub-carrier number for each sub-carrier as well. The sub-carrier number *n* is supplied from the frame synchronization circuit 18 or the like, for example. The phase-correction amount calculation circuit 44c calculates, from the phase-error magnitude $\beta_m$, a correction amount $\theta_{clk}(n)$ for each sub-carrier as given by the following equation:

$$\theta_{clk}(n) = 2\pi n \beta_m / N_u$$

where *n* indicates a sub-carrier number, $N_u$ indicates the number of effective symbols (that is, the number of sub-carriers).

The sub-carrier number n takes the number for a sub-carrier positioned at the center frequency of the OFDM signal as zero (0), for example. Sub-carriers are positioned at intervals of a frequency $\Delta f$ ($\Delta f = 1/T$: T is an effective symbol length) and a number is assigned to each of the sub-carriers. Sub-carriers positioned at lower frequencies than the center frequency are assigned numbers -1 to -512, respectively, while sub-carriers positioned at higher frequencies than the center frequency are assigned numbers 1 to 511, respectively.

Also, the correction amount is different from one sub-carrier for the reason that since the phase-correction amount $\beta_m$ is represented by a delay between the FFT-extraction timing and symbol-boundary timing, so a phase rotation taking place for the delay time is different from one frequency to another.

As above, the phase-correction amount calculation circuit 44c determines a phase-correction amount $\theta_{clk}(n)$ and supplies it to the complex conversion circuit 44d.

The complex conversion circuit 44d converts the supplied phase-correction amount $\theta_{clk}(n)$ into a complex signal by calculating a sine and cosine of the phase-correction amount $\theta_{clk}(n)$. The complex conversion circuit 44d supplies the complex-converted phase-correction amounts (cos ($\theta_{clk}(n)$) and sin ($\theta_{clk}(n)$) as phase-correction signals to the phase correction circuit 11.

Supplied with the phase-correction signals, the phase correction circuit 11 makes complex multiplication of data corresponding to each sub-carrier in the OFDM frequency-domain signal from the FFT calculation circuit 10 by the phase-correction signals (cos ($\theta_{clk}(n)$) and sin ($\theta_{clk}(n)$) from the complex conversion circuit 44d. More specifically, the phase correction circuit 11 makes a matrix calculation as follows:

$$\begin{pmatrix} I_{out}(n) \\ \overline{Q_{out}(n)} \end{pmatrix} = \begin{pmatrix} \cos\theta_{clk}(n) & -\sin\theta_{clk}(n) \\ \sin\theta_{clk}(n) & \cos\theta_{clk}(n) \end{pmatrix} \begin{pmatrix} I_{in}(n) \\ \overline{Q_{in}(n)} \end{pmatrix}$$

where $I_{in}(n)$ and $Q_{in}(n)$ indicate results of calculation of the sub-carrier number $n$ from the FFT calculation circuit 10, $I_{in}(n)$ indicates a real part and $Q_{in}(n)$ indicates an imaginary part, and $I_{out}(n)$ and $Q_{out}(n)$ indicate results of phase correction of the sub-carrier number n from the phase correction circuit 11. The $I_{out}(n)$ indicates a real-number component, and $Q_{out}(n)$ indicates an imaginary-number component.

Thus, the symbol-boundary correction circuit 44 has a very simple circuit construction and can correct an error accurately. Further, since the symbol-boundary correction circuit 44 calculates an error amount using a guard correlation/peak signal not yet FFT-calculated, so the synchronization can be pulled in very fast than in case the correction is made by feeding back a pilot signal or the like, for example.

Start-flag generation circuit

The start-flag generation circuit 45 is supplied with symbol start information (integrally-rounded symbol-boundary position Nx) supplied at every M symbols from the symbol-boundary correction circuit 44, and generates a start flag indicative of a signal extraction timing for the FFT calculation (that is, an FFT-calculation start timing). A start flag is generated at each OFDM symbol.

As shown in FIG. 34, the start-flag generation circuit 45 includes a counter 45a, register 45b, and a comparator 45c.

The counter 45a is a same-cycle synchronization counter which operates synchronously with the free-running counter 37 in the guard correlation/peak detection circuit 12. Namely, the counter 45a counts values 0 to $Ns$. Further, the counter 45a takes a phase delayed by a delay time in the aforementioned symbol-boundary calculation circuit 43 from the count in the free-running counter 37.

The register 45b stores the symbol start information (integrally-rounded symbol-boundary position Nx) from the symbol-boundary correction circuit 44 each time a valid flag is asserted (timing "1").

The comparator 45c make a comparison between the count from the counter 45a and the symbol start information stored in the register 45b to generate a start flag that becomes High (1) in a timing of the coincidence between the count and symbol start information.

The start flag generated by the comparator 45c is supplied to the FFT calculation circuit 10. The FFT calculation circuit 10 parallelizes a supplied serial data series in a timing in which the start flag has become High (1) to extract $Nu$ pieces of data for the FFT calculation.

As above, the start-flag generation circuit 45 converts a timing indicated by the symbol-boundary position Nx calculated by the symbol-boundary calculation circuit 43 into a start flag synchronous with the serial data series supplied to the FFT calculation circuit 10, and supplies it to the FFT calculation circuit 10.

Note that although the counter 45a is provided in the start-flag generation circuit 45 according this embodiment, the count by the free-running counter 37 may be adjusted by delaying and supplied to the comparator 45c.

Also, the delay of the counter 45a in relation to the count by the free-running counter 37 may be a value resulted from adding a margin to a processing delay of the symbol-boundary calculation circuit 43 to adjust the extraction range for the FFT calculation so that an inter-symbol interference due to a preceding ghost will be canceled.

Effect of the first embodiment

As having been described in the foregoing, the OFDM receiver 1 as the first embodiment of the present invention is provided with the symbol-boundary calculation circuit 43 constructed as the so-called DLL circuit. Therefore, the OFDM receiver 1 according to the first embodiment can estimate an accurate symbol-boundary position on the basis of a symbol-boundary position calculated using a correlation of a guard interval.

Also, there is provided in the symbol-boundary calculation circuit 43 the limiter 52 that limits the level of a phase difference $\Delta\theta$ that is a residual component of DLL within a predetermined range of TH1 > TH2. Therefore, the OFDM receiver 1 as the first embodiment of the present invention can cancel the impulse noise which will occur in a fading environment, for example, to improve the synchronization retention.

Also, there is provided in the symbol-boundary calculation circuit 43 the asymmetric gain circuit 53 that multiplies the phase difference $\Delta\theta$ being the residual component of the DLL by a gain. The asymmetric gain circuit 53 judges whether the symbol-boundary position (peak timing Np) supplied to the DLL is earlier or later than the DLL-estimated symbol-boundary position (Nx). When the peak timing Np is earlier than the symbol-boundary position Nx, the asymmetric gain circuit 53 multiplies the phase difference $\Delta\theta$ by a small gain. If the peak timing Np is later than the symbol-boundary position Nx, the asymmetric gain circuit 53 will multiply the phase difference $\Delta\theta$ by a large gain. Therefore, in case a plurality of peaks is detected due to a multipath or the like, the OFDM receiver 1 according to the first embodiment, can track an earlier signal (main wave) more positively.

Also, the symbol-boundary calculation circuit 43 has provided therein the clock-error correction circuit 55 that adds a clock-frequency error amount to the phase difference $\Delta\theta$ being the residual component of the DLL. Therefore, the OFDM receiver 1 as the first embodiment of the present invention can estimate a symbol-boundary position with an improved accuracy. Further, the OFDM receiver 1 as the first embodiment can make an appropriate selection between a clock-frequency error converted from the phase difference $\Delta\theta$ as the clock-frequency error for addition to the phase difference $\Delta\theta$, and a clock-frequency error calculated from the peak timing Np. Thus, the OFDM receiver 1 according to the first embodiment can pull in the synchronization in a reduced time by adding the clock-frequency error converted from the peak timing Np.

Also, there is provided in the symbol-boundary calculation circuit 43 the phase generation circuit 56 which adds a phase difference $\Delta\theta$ being the DLL residual component to a current estimated symbol-boundary position and updates the estimated symbol-boundary position. The phase generation circuit 56 can make an appropriate selection between a symbol-boundary position generated by making cumulative addition of the residual components and an initial position calculated from the peak timing Np and take the selected one as a current estimated symbol-boundary position. In the OFDM receiver 1 according to the first embodiment of the present invention, the synchronization can be pulled in a reduced time by adding the initial position resulted from the conversion from the peak timing Np, as a current estimated symbol-boundary position, to the phase difference $\Delta\theta$.

Second embodiment

Next, the second embodiment of the present invention will be illustrated and described.

The OFDM receiver as the second embodiment of the present invention is designed similarly to the OFDM receiver 1 according to the aforementioned first embodiment except for a symbol-boundary calculation circuit that is a modified version of the symbol-boundary calculation circuit 43. Therefore, the OFDM receiver according to the second embodiment will be illustrated and described concerning only the symbol-boundary calculation circuit. The same or similar components as or to those in the first embodiment will be indicated with the same or similar references as or to those used in the drawings to which reference has been made in the description of the first embodiment, and will not be described in detail any more.

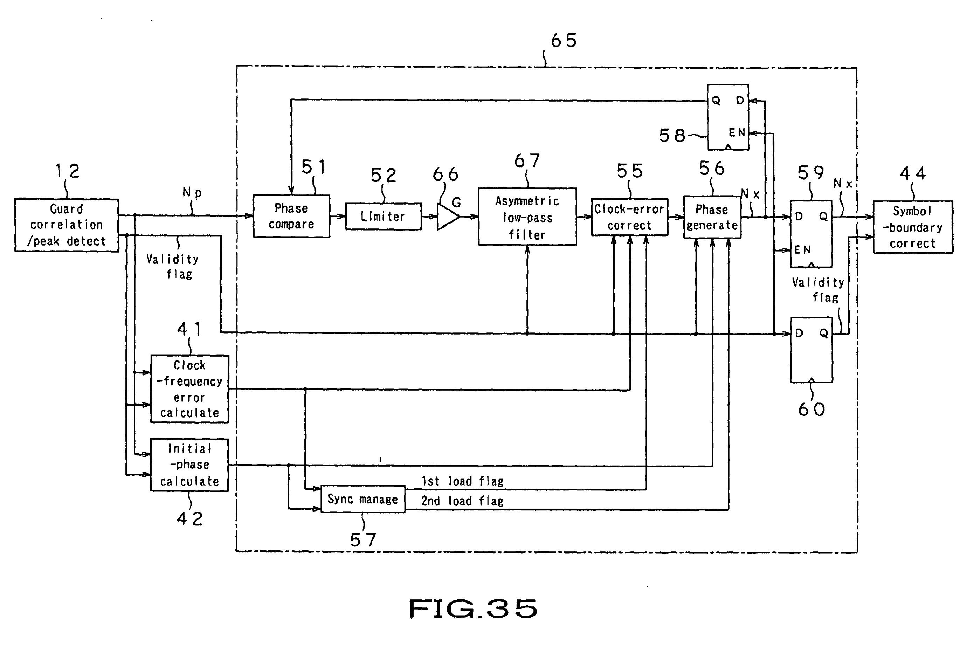

FIG. 35 is a block diagram of the symbol-boundary calculation circuit provided in the OFDM receiver as the second embodiment. The symbol-boundary calculation circuit is indicated with a reference 65.

As shown in FIG. 35, the symbol-boundary calculation circuit 65 includes a phase comparison circuit 51, limiter 52, gain circuit 66, asymmetric low-pass filter 67, clock-error correction circuit 55, phase generation circuit 56, synchronization management circuit 57, first register 58, second register 59, and a third register 60.

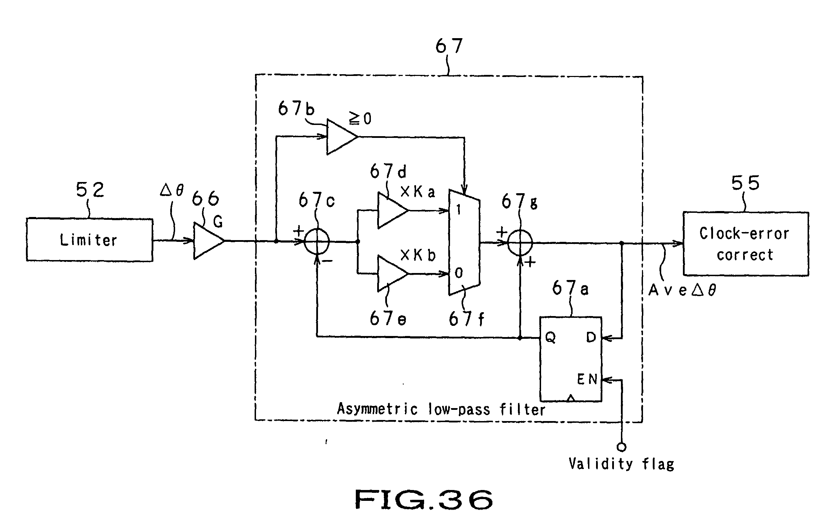

FIG. 36 is a circuit diagram of the gain circuit 66 and asymmetric low-pass filter 67.

The gain circuit 66 is supplied with the phase difference $\Delta\theta$ that is an output from the limiter 52 and has been limited in level. The gain circuit 66 multiplies the supplied phase difference $\Delta\theta$ by a predetermined gain G. The phase difference $\Delta\theta$ multiplied by the gain G is supplied to the asymmetric low-pass filter 67.

The asymmetric low-pass filter 67 is supplied with the phase difference $\Delta\theta$ multiplied by the gain in the gain circuit 66 and valid flag from the guard correlation/peak detection circuit 12.

As shown, the asymmetric low-pass filter 67 includes a load-enable register 67a, comparator 67b, subtracter 67c, first multiplier 67d, second multiplier 67e, selector 67f, and an adder 67g.

The load-enable register 67a is supplied at an enable port EN thereof with the valid flag, and at an input port D with the output (mean phase difference Ave $\Delta\theta$) from the asymmetric low-pass filter 67.

The comparator 67b makes comparison between the phase difference $\Delta\theta$ and 0. When the phase difference $\Delta\theta$ is smaller than 0, the comparator 67b outputs Low (0). On the contrary, if the phase difference $\Delta\theta$ is larger than 0, the comparator 67b outputs High (1).

The subtracter 67c subtracts the output from the register 67a from the phase difference $\Delta\theta$ from the gain circuit 66. More specifically, the subtracter 67c subtracts the output (mean phase difference Ave $\Delta\theta$) from the asymmetric low-pass filter 67 one sample before (in the last timing when the valid flag has become High) from the supplied phase difference $\Delta\theta$ to provide a residual of the phase difference $\Delta\theta$.

The first multiplier 67d multiplies the residual of the phase difference $\Delta\theta$ from the subtracter 67c by a first coefficient Ka. The second multiplier 67e multiplies the residual of the phase difference $\Delta\theta$ from the subtracter 67c by a second coefficient Kb. It should be noted that the first and second coefficients Ka and Kb are in a relation of Ka > Kb. When the output from the comparator 67b is Low (0), the selector 67f selects and outputs the output (product of the residual of the phase difference $\Delta\theta$ and first coefficient Ka) from the first multiplier 67b. If the output from the comparator 67b is High (1), the selector 67f will select and output the output (product of the residual of the phase difference $\Delta\theta$ and second coefficient Kb) from the second multiplier 67e.

The adder 67g adds together the residual multiplied by the first or second coefficient Ka or Kb and the output from the register 67a. The output from the adder 67g is also the output (mean phase difference Ave $\Delta\theta$) from the asymmetric low-pass filter 67.

The mean phase difference Ave $\Delta\theta$ calculated by the asymmetric low-pass filter 67 is supplied to the clock-error correction circuit 55.

As mentioned above, the asymmetric low-pass filter 67 uses an IIR type filter to average the supplied phase difference $\Delta\theta$ and thus provide the mean phase difference Ave $\Delta\theta$. Further, the asymmetric low-pass filter 67 judges whether the peak timing Np is earlier or later than the symbol-boundary position Nx. If the peak timing Np is earlier than the symbol-boundary position Nx, the asymmetric low-pass filter 67 will set a higher-frequency pass band. When the peak timing Np is later than the symbol-boundary position Nx, the asymmetric low-pass filter 67 will set a lower-frequency pass band. That is, in case a plurality of peaks is detected as in a multipath environment, the asymmetric low-pass filter 67 changes the pass band for a quicker response to a temporarily earlier signal (main wave).

Third embodiment

Next, the third embodiment of the present invention will be illustrated and described.

The OFDM receiver as the third embodiment of the present invention is similar to the OFDM receiver 1 as the first embodiment except for a guard correlation/peak detection circuit and symbol-boundary calculation circuit which are modified versions of the guard correlation/peak detection circuit 12 and symbol-boundary calculation circuit 43, respectively, in the first embodiment. Therefore, the OFDM receiver according to the third embodiment will be described concerning only the guard correlation/peak detection circuit and symbol-boundary calculation circuit. The same or similar components as or to those in the first embodiment will be indicated with the same or similar references as or to those used in the drawings to which reference has been made in the description of the first embodiment, and will not be described in detail any more.

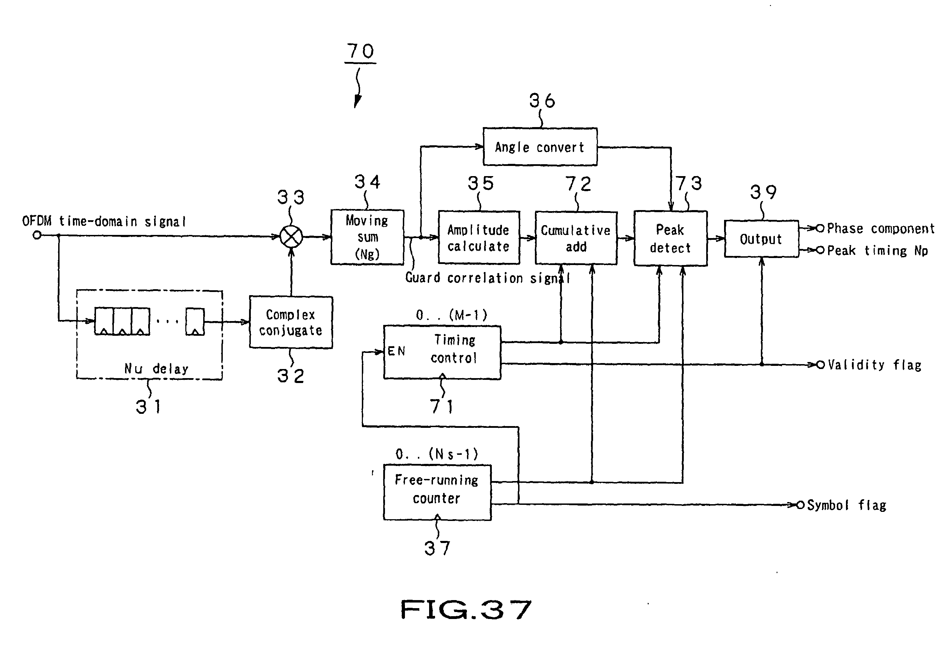

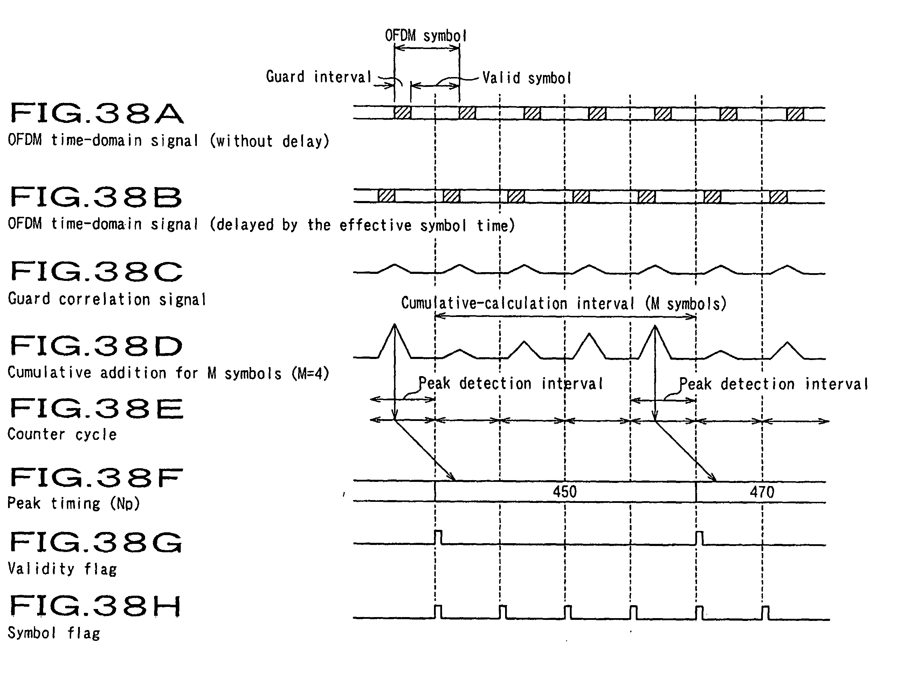

FIG. 37 is a block diagram of the guard correlation/peak detection circuit provided in the OFDM receiver as the third embodiment. The guard correlation/peak detection circuit is indicated with a reference 70. Also, FIG. 38 is a timing diagram of various signals in the guard correlation/peak detection circuit 70.

As shown in FIG. 37, The OFDM receiver as the third embodiment of the present invention uses the guard correlation/peak detection circuit 70 in place of the guard correlation/peak detection circuit 12 in the first embodiment.

The guard correlation/peak detection circuit 70 includes a delay circuit 31, complex conjugate circuit 32, multiplier circuit 33, moving-sum circuit 34, amplitude calculation circuit 35, angle conversion circuit 36, free-running counter 37, output circuit 39, timing control counter 71, cumulative-addition circuit 72, and a peak detection circuit 73.

The delay circuit 31, complex conjugate circuit 32, multiplier circuit 33, moving-sum circuit 34, amplitude calculation circuit 35, angle conversion circuit 36, free-running counter 37 and output circuit 39 operate as in the first embodiment. FIG. 38A shows an OFDM time-domain signal from the carrier-frequency error correction circuit 9, FIG. 38B shows an OFDM time-domain signal delayed by an effective symbol time by the delay circuit 31, and FIG. 38C shows a guard correlation signal indicative of a correlation between the OFDM time-domain signal and the OFDM time-domain signal delayed by the effective symbol (*Nu* samples).

The timing control counter 71 counts a symbol flag (High (1) when the count N becomes zero) from the free-running counter 37. The timing control counter 71 has a cycle of *M* cumulative-added symbols (M is a natural number larger than 1). That is, the timing control counter 71 cyclically counts symbols from 0 to M-1. The timing control counter 71 generates a valid flag (High (1) when the count becomes zero), and supplies it to the cumulative-addition circuit 72, peak detection circuit 73 and output circuit 39.

The cumulative-addition circuit 72 makes cumulative addition of amplitude components of the guard correlation signal from the amplitude calculation circuit 35 in the symbol period as shown in FIG. 38D. More specifically, the cumulative-addition circuit 72 makes cumulative addition of the amplitude components for one cycle (0 to M-1) of the timing control counter 71 (from a timing in which the valid flag becomes High (1) until a timing in which the valid flag becomes High (1) next). It should be noted that the cumulative-addition circuit 72 refers to the counter N from the free-running counter 37 and makes cumulative addition of the values each time the same count N is reached. That is, the signal components in the same timing in the OFDM symbol are cumulatively added. The cumulative-addition circuit 72 supplies the cumulation signal indicative of the cumulative-added amplitude components of the guard correlation signal to the peak detection circuit 73.

The peak detection circuit 73 detects a point where the cumulative-addition value is high in one cycle (0 to *Ns*-1) of the timing control counter 71, and detects the count of the free-running counter 37 at that point. The peak detection circuit 73 detects a new point where the cumulative-addition value is high again when the count of the timing control counter 71 shifts to a next cycle. The count detected by the peak detection circuit 73 is a peak timing Np indicative of the peak time of the guard correlation signal. Also, the peak detection circuit 73 detects a phase component of the guard correlation signal at that peak time, and supplies it to the output circuit 39.

The output circuit 39 takes in the count from the peak detection circuit 73 in a timing when the count of the timing control counter 71 becomes zero (in a timing in which the valid flag becomes High (1)) and stores it into an internal register, and sets the count to a state in which it can be provided to outside (as in FIG. 38E). The count stored in the register is supplied, as information (peak timing Np) indicative of the peak time of the guard correlation signal, to a timing synchronization circuit provided downstream. Similarly, the output circuit 39 takes in a phase component from the peak detection circuit and stores it into the internal register in a timing when the count of the timing control counter 71 becomes zero (0), and set the phase component to a state in which it can be provided to outside. The phase component stored in the register is supplied to a narrow-band carrier-error calculation circuit 14 provided downstream.

The above guard correlation/peak detection circuit 70 make cumulative addition of the guard correlation signals for M symbols to calculate a peak position on the basis of the result of the cumulative addition. Therefore, it is possible to detect a boundary position with a higher precision than in case a peak position is detected at each symbol.

The guard correlation/peak detection circuit 70 outputs the peak timing Np (as in FIG. 38F), phase component, valid flag (as in FIG. 38G) and symbol flag (as in FIG. 38H). The peak timing Np and phase component are provided to outside when the valid flag becomes High (1). That is, the peak timing Np and phase component are outputted at every M symbols. The symbol flag (as in FIG. 38H) becomes High (1) at each cycle of the free-running counter 37 (in a timing when the count of the free-running counter 37 becomes zero).

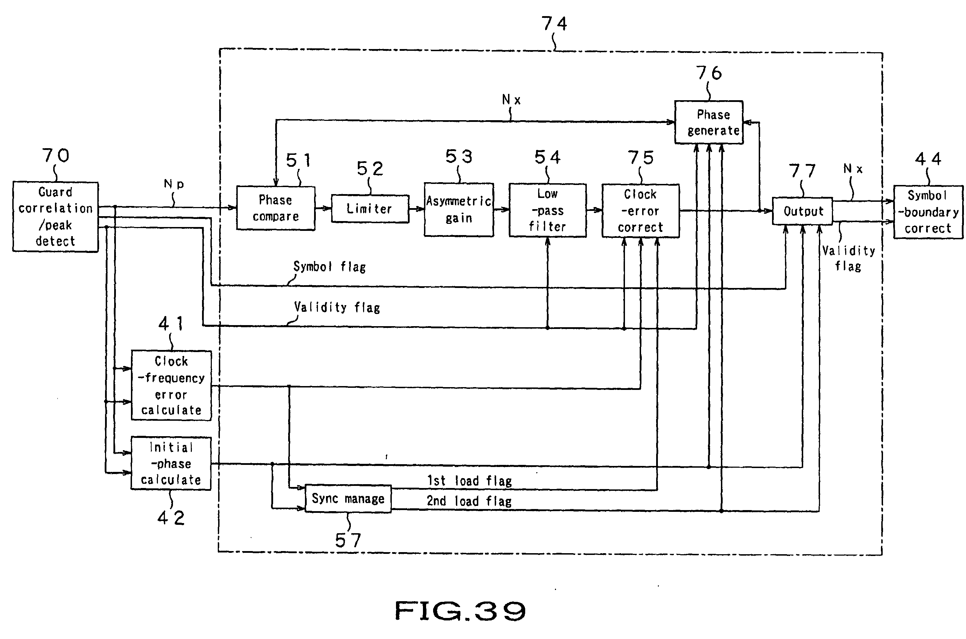

FIG. 39 is a block diagram of the symbol-boundary calculation circuit 74 included in the OFDM receiver as the third embodiment.

The OFDM receiver according to the third embodiment uses the symbol-boundary calculation circuit 74 (as in FIG. 39) instead of the symbol-boundary calculation circuit 43 included in the OFDM receiver 1 in the first embodiment.

The symbol-boundary calculation circuit 74 includes a phase comparison circuit 51, limiter 52, asymmetric gain circuit 53, low-pass filter 54, clock-error correction circuit 55, synchronization management circuit 57, clock-error correction circuit 75, phase generation circuit 76, and an output circuit 77.

The phase comparison circuit 51, limiter 52, asymmetric gain circuit 53, low-pass filter 54 and synchronization management circuit 57 operate as in the first embodiment.

The symbol-boundary calculation circuit 74 is supplied with the peak timing Np, valid flag and symbol flag from the guard correlation/peak detection circuit 70. The valid flag becomes High (1) at every M symbols. The symbol flag becomes High (1) at each symbol. The symbol-boundary calculation circuit 43 can calculate a symbol-boundary position Nx at each symbol in response to the peak timing Np supplied at every M symbols.

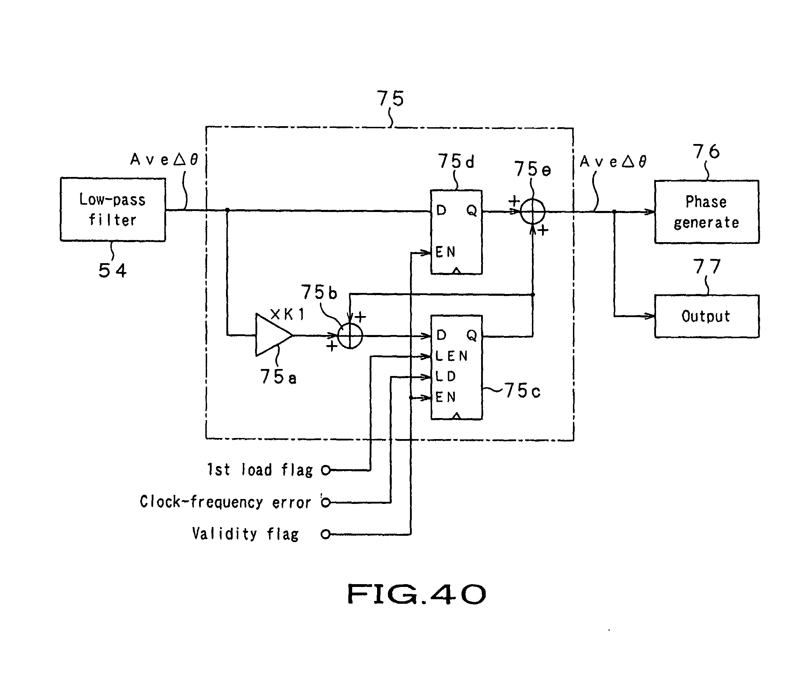

FIG. 40 is a circuit diagram of the clock-error correction circuit 75.

The clock-error correction circuit 75 is supplied with the mean phase difference Ave $\Delta\theta$ from the low-pass filter 54 and valid flag from the guard correlation/peak detection circuit 70. Also, the clock-error correction circuit 75 is supplied with the clock-frequency error from the clock-frequency error calculation circuit 41, and the first load flag from the synchronization management circuit 57.

As shown, the clock-error correction circuit 75 includes a multiplier 75a, first adder 75b, first register 75c, second register 75d, and a second adder 75e.

The multiplier 75a multiplies the mean phase difference Ave $\Delta\theta$ from the low-pass filter 54 by a predetermined coefficient K1. The output from the multiplier 75a represents a residual component of a clock-frequency error.

The first adder 75b adds together a current estimated clock-frequency error stored in the first register 75c and the residual component from the multiplier 75a to calculate a clock-frequency error which is to be corrected in relation to the mean phase difference Ave $\Delta\theta$.

The first register 75c stores the current estimated clock-frequency error from the first adder 75b. The first register 75c is a so-called load-enable register, and is supplied at an enable port EN thereof with the valid flag, at an input port D with the output from the first adder 75b, at a low-enable port LEN with the first load flag from the synchronization management circuit 57, and at a load terminal LD thereof with the clock-frequency error from the clock-frequency error calculation circuit 41. Therefore, when the synchronization management circuit 57 determines that the output from the clock-frequency error calculation circuit 41 is stable, the first register 75c takes in the output from the clock-frequency error calculation circuit 41. If the output is determined to be unstable, the first register 75c will take in the output from the first adder 75b.

The second register 75d stores the mean phase difference Ave $\Delta\theta$ from the low-pass filter 54. The second register 75d is also a load-enable register, and supplied at an enable port EN thereof with the valid flag. That is, the second register 75d delays the mean phase difference Ave $\Delta\theta$ one valid-flag period (*M* symbols).

The second adder 75e adds the clock-frequency error from the first register 75c to the mean phase difference Ave $\Delta\theta$ from the second register 75d. The mean phase difference Ave $\Delta\theta$ having the clock-frequency error added thereto is supplied to the phase generation circuit 76 and output circuit 77.

The above clock-error correction circuit 75 can correct the clock-frequency error component in relation to the mean phase difference Ave $\Delta\theta$, and hold the output mean phase difference Ave $\Delta\theta$ for the period of one valid flag (*M* symbols).

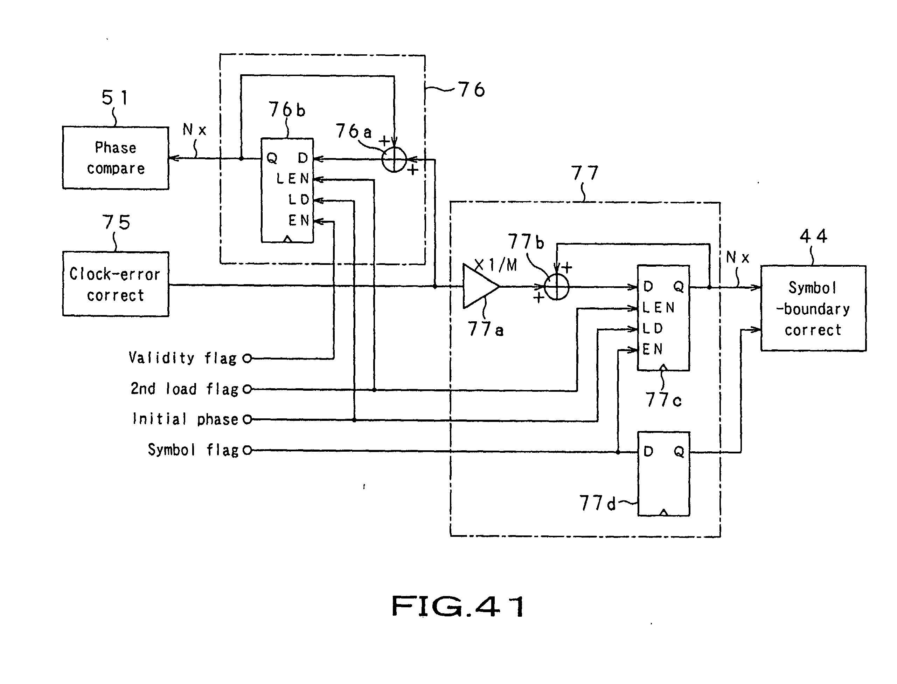

FIG. 41 shows the circuit construction of the phase generation circuit 76 and that of the output circuit 77.

The phase generation circuit 76 is supplied with the mean phase difference Ave $\Delta\theta$ from the clock-error correction circuit 75, and the valid flag from the guard correlation/peak detection circuit 70. Also, the phase generation circuit 76 is supplied with the initial phase from the initial-phase calculation circuit 42 and second load flag from the synchronization management circuit 57.

The phase generation circuit 76 includes an adder 76a and register 76b.

The adder 76a is supplied with the mean phase difference Ave $\Delta\theta$ from the clock-error correction circuit 75 and current estimated phase stored in the register 76b. The adder 76a adds together the mean phase difference Ave $\Delta\theta$ and current estimated phase to provide a symbol-boundary position Nx.

The register 76b is a so-called load-enable register, and supplied at an enable port EN thereof with the valid flag, at an input port D with the output from the first adder 76a, at a load-enable port LEN with the second-load flag from the synchronization management circuit 57, and a load terminal LD with the initial phase from the initial-phase calculation circuit 42. Therefore, when the synchronization management circuit 57 determines that the output from the initial-phase calculation circuit 42 is stable, the register 76b takes in the output from the initial-phase calculation circuit 42. If the output is determined to be unstable, the register 76b will take in the output from the adder 76a.

The symbol-boundary position Nx from the phase generation circuit 76 is supplied to the phase comparison circuit 51.

The aforementioned phase generation circuit 76 calculates a symbol-boundary position Nx by adding a current estimated phase to the mean phase difference Ave $\Delta\theta$. That is, the phase generation circuit 76 generates an output phase indicative of a final symbol-boundary position Nx by adding an error component of the phase calculated on the path extending from the phase comparison circuit 51 to the clock-error correction circuit 75 to the current estimated phase.

Also, in the phase generation circuit 76, the value in the register 76b is updated at each valid flag period (at every M symbols).

The output circuit 77 is supplied with the mean phase difference Ave $\Delta\theta$ from the clock-error correction circuit 75, and the symbol flag from the guard correlation/peak detection circuit 70. Also, the output circuit 77 is supplied with the initial phase from the initial-phase calculation circuit 42 and second load flag from the synchronization management circuit 57.

The output circuit 77 includes a multiplier 77a, adder 77b, first register 77c and second register 77d.

The multiplier 77a is supplied with the mean phase difference Ave $\Delta\theta$ from the clock-error correction circuit 75. The mean phase difference Ave $\Delta\theta$ is updated at every *M* symbols. The multiplier 77a multiplies the mean phase difference Ave $\Delta\theta$ by 1/*M* to interpolate it to a value corresponding to one symbol.

The adder 77b is supplied with the output from the multiplier 77a and current estimated phase stored in the register 77c. The adder 77b adds together the mean phase difference Ave $\Delta\theta$ interpolated to a value corresponding to one symbol and current estimated phase to output a symbol-boundary position Nx.

The first register 77c is also a so-called enable register, and supplied with at an enable port EN thereof with the symbol flag, at an input port D with the output from the adder 77b, at a load-enable port LEN with the second load flag from the synchronization management circuit 57, and at a load terminal LD thereof with the initial phase from the initial-phase calculation circuit 42. Therefore, when the synchronization management circuit 57 determines that the output from the initial-phase calculation circuit 42 is stable, the register 76b takes in the output from the initial-phase calculation circuit 42. If the output is determined to be unstable, the register 76b will take in the output from the adder 76a.

The symbol-boundary position Nx from the phase generation circuit 76 is supplied to the symbol-boundary correction circuit 44.

The second register 77d delays the signal supplied at an input port D thereof by one clock. The register 77d is also supplied at an input port D thereof with the valid flag from the guard correlation/peak detection circuit 70, and has connected to an output port Q thereof the symbol-boundary correction circuit 44. Therefore, the register 77d makes synchronization with the symbol-boundary position Nx to supply a symbol flag to the symbol-boundary correction circuit 44. The symbol flag supplied from the register 77d is a valid flag for the symbol-boundary position Nx supplied to the symbol-boundary correction circuit 44.

The aforementioned output circuit 77 sets the mean phase difference Ave $\Delta\theta$ calculated at every *M* symbols to 1/*M* on a path extending from the phase comparison circuit 51 to the clock-error correction circuit 75, and makes cumulative addition of the value at each symbol. Therefore, even if the peak timing Np is generated by the guard correlation/peak detection circuit 70 at every M symbols, it is possible to generate a symbol-boundary position Nx at each symbol.

Fourth embodiment

Next, the fourth embodiment of the present invention will be illustrated and described.

In some of the standards for transmission of OFDM signals, it is defined that the period of an OFDM symbol and guard interval may be varied. For example, in the ISDB-T Standard, modes 1 to 3 are defined, and the ratio between the symbol length and guard interval may be changed. In the ISDB-T Standard, it is also defined any of 1/4. 1/8. 1/16 and 1/32 may be selected as a ratio between the effective symbol length and guard interval.

The OFDM receiver as the fourth embodiment has a function to make a selection among various control parameters correspondingly to the symbol period and guard interval of a received OFDM signal.

The OFDM receiver as the fourth embodiment of the present invention is similar to the OFDM receiver 1 as the first embodiment except for a timing synchronization circuit having a mode generation circuit and controller. Therefore, the OFDM receiver according to the fourth embodiment will be described concerning only the timing synchronization circuit, mode generation circuit and controller. The same or similar components as or to those in the first embodiment will be indicated with the same or similar references as or to those used in the drawings to which reference has been made in the description of the first embodiment, and will not be described in detail any more.

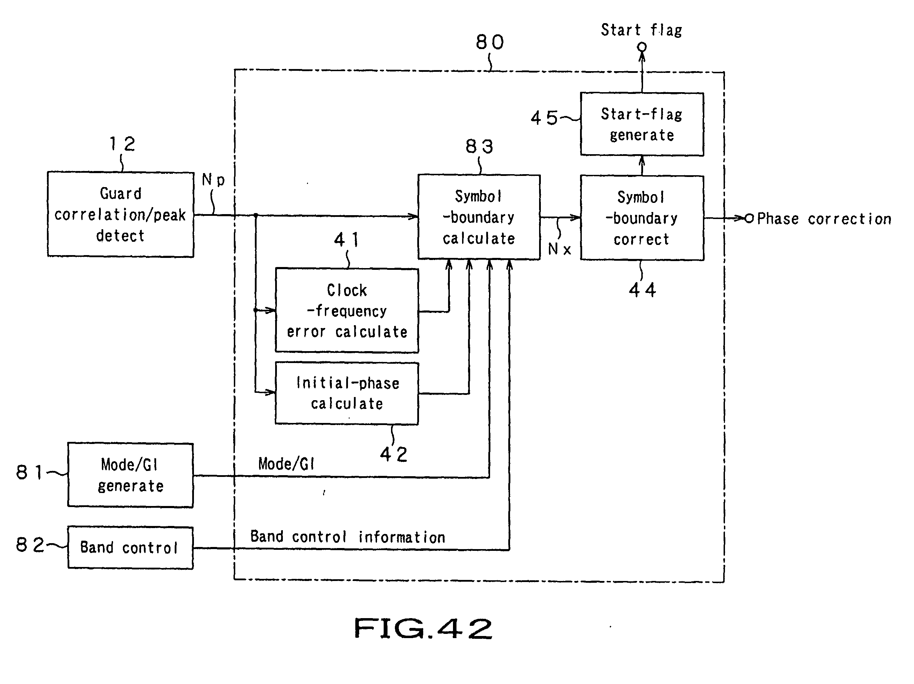

FIG. 42 is a circuit diagram of the timing synchronization circuit, indicated with a reference 80, in the OFDM receiver according to the fourth embodiment of the present invention.

The OFDM receiver as the fourth embodiment includes the timing synchronization circuit 80, a mode/GI generation circuit 81, and a band control circuit 82.

The timing synchronization circuit 80 is provided in place of the timing synchronization circuit 13 in the OFDM receiver 1 as the first embodiment of the present invention.

The mode/GI generation circuit 81 generates information (mode) indicative of an effective symbol length of a received OFDM signal, and information (GI) indicative of a guard interval. Information for setting a mode and information for setting GI are given from an external controller, user or the like, for example. The mode/GI generation circuit 81 detects setting information from the controller or user, and supplies the information to a symbol-boundary calculation circuit 83.

The band control circuit 82 generates information (band-control information) indicative of each filter factor and gain coefficient in the symbol-boundary calculation circuit 83. The setting information for the band control is supplied from the external controller or user, for example. The band control circuit 82 detects setting information from the controller or user, and supplies the information to the symbol-boundary calculation circuit 83.

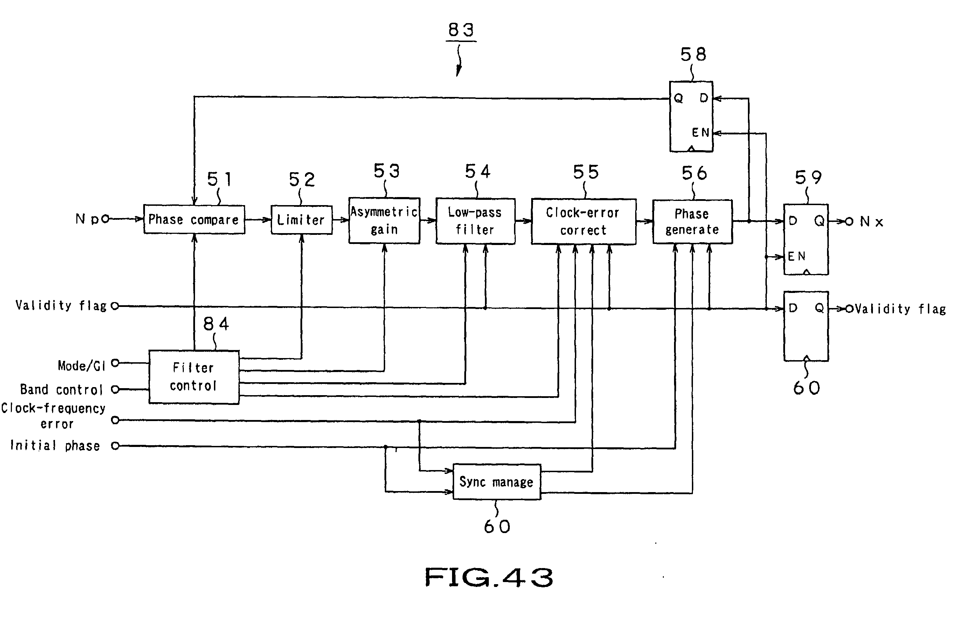

As shown in FIG. 43, the symbol-boundary calculation circuit 83 includes a phase comparison circuit 51, limiter 52, asymmetric gain circuit 53, low-pass filter 54, clock-error correction circuit 55, phase generation circuit 56, synchronization management circuit 57, first register 58, second register 59, third register 60, and a filter control circuit 84.

The phase comparison circuit 51, limiter 52, asymmetric gain circuit 53, low-pass filter 54 and clock-error correction circuit 55 are the same in internal circuit construction and operation as in the first embodiment, but various parameters such as filter factor, symbol coefficient and thresholds can be changed by the filter control circuit 84.

The filter control circuit 84 controls, on the basis of the mode/GI and band control information, the parameters such as filter factor, gain coefficient and thresholds for the phase comparison circuit 51, limiter 52, asymmetric gain circuit 53, low-pass filter 54 and clock-error correction circuit 55.

The filter control circuit 84 controls the parameters as will be described below:

The symbol-boundary calculation circuit 43 in the OFDM receiver 1 as the first embodiment makes a single loop-filtering at each input interval (each time a valid flag is generated) of the peak timing Np. The loop-filtering cycle is the cycle of the free-running counter 37. That is, it is synchronous with the symbol period of a received OFDM signal. Therefore, in the first embodiment, when the mode and guard interval (GI) of the received OFDM signal are varied, the cycle of the free-running counter 37 varies correspondingly. As the cycle of the free-running counter 37 is varied, the filter band will vary correspondingly to the symbol length even when the filter factor or the like in the symbol-boundary calculation circuit 43 is not varied.

However, the filter band set inside the symbol-boundary calculation circuit 43 should desirably be changed correspondingly to an environment where the IFDM signal is received, such as Doppler frequency or the like, not depending upon a symbol length.

On this account, the filter control circuit 84 in the OFDM receiver as the fourth embodiment controls various parameters such as filter factor, gain coefficient and thresholds correspondingly to a mode/GI, so that the basic filter band will not vary even if the symbol length varies. For example, the parameters are controlled so that when the mode is set to the mode 3, all the filter factors are changed to 1/2 on the assumption that the filter factor in the mode 3 is a basic one. Further, the filter control circuit 84 controls the parameters such as filter factor, gain coefficient and thresholds correspondingly to a mode/GI so that the basic filter band is varied under a band change order from the user.

Thus, the OFDM receiver according to the fourth embodiment of the present invention can make an optimum demodulation correspondingly to a setting of a received OFDM signal.

Note that although in the fourth embodiment, the filter factor itself is varied so that the filter band will not vary even if the setting of a received OFDM signal is changed, the interval at which the peak timing Np of the guard correlation/peak detection circuit 12 may be controlled. More specifically, the peak timing Np may be generated less frequently or the interval at which the peak timing Np is generated by the guard correlation/peak detection circuit 12 may be controlled, for example, so that even if the symbol length varies, the peak timing Np will be generated at constant intervals.

Fifth embodiment

Next, the fifth embodiment of the present invention will be illustrated and described.

The OFDM receiver as the fifth embodiment uses a feed-forward type filter, not the DLL-construction feedback type filter used in the OFDM receiver 1 as the first embodiment of the present invention.

The OFDM receiver as the fifth embodiment of the present invention is similar to the OFDM receiver 1 as the first embodiment except for a timing synchronization circuit corresponding to the timing synchronization circuit 13 in the OFDM receiver 1 according to the first embodiment. Therefore, the OFDM receiver according to the fifth embodiment will be described concerning only the timing synchronization circuit, and the same or similar components as or to those in the first embodiment will be indicated with the same or similar references as or to those used in the drawings to which reference has been made in the description of the first embodiment, and will not be described in detail any more.

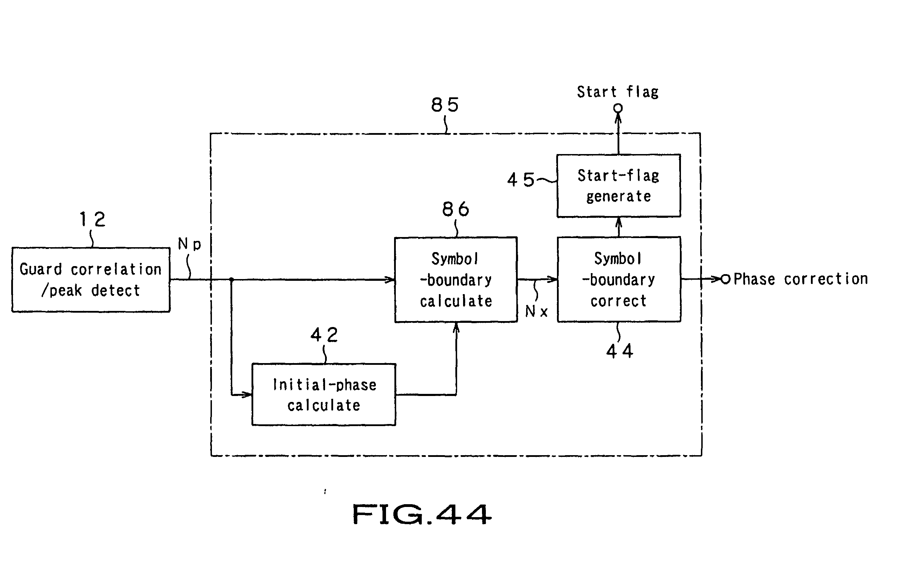

The OFDM receiver as the fifth embodiment includes a timing synchronization circuit 85 as shown in FIG. 44. The timing synchronization circuit 85 is provided in place of the timing synchronization circuit 13 in the first embodiment.

The timing synchronization circuit 85 includes an initial-phase calculation circuit 42, symbol-boundary calculation circuit 86, symbol-boundary correction circuit 44, and a start-flag generation circuit 45.

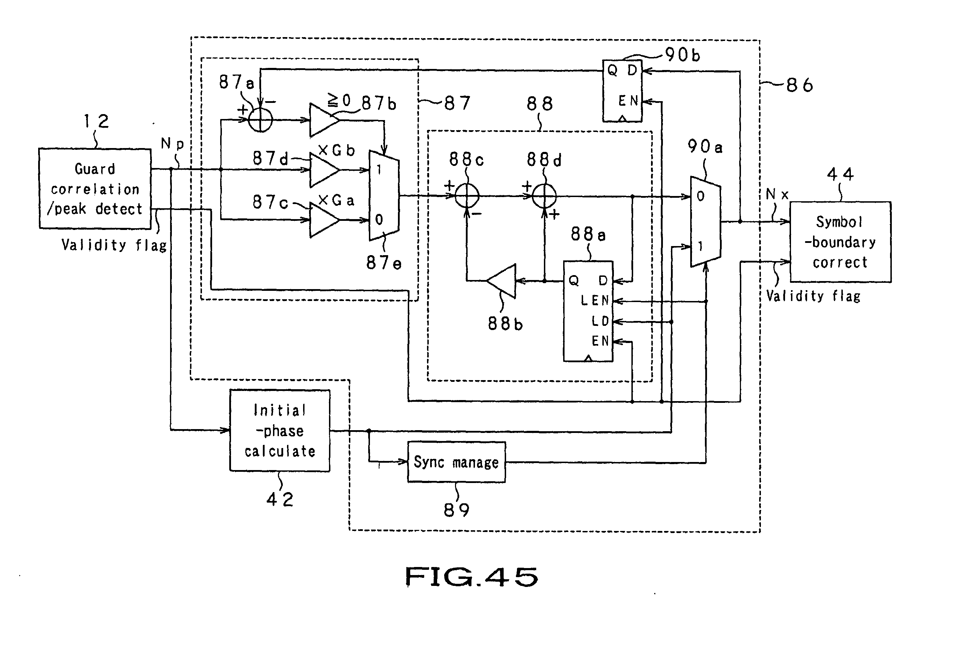

FIG. 45 shows the internal construction of the symbol-boundary correction circuit 44.

As shown in FIG. 45, the symbol-boundary calculation circuit 86 includes an asymmetric gain circuit 87, low-pass filter 88, synchronization management circuit 89, selector 90a, and an enable register 90b.

The symbol-boundary calculation circuit 86 is supplied with the peak timing Np and valid flag, and with the initial phase from the initial-phase calculation circuit 42.

(Asymmetric gain circuit)

The asymmetric gain circuit 87 is supplied with the peak timing Np from the guard correlation/peak detection circuit 12, and the symbol-boundary position Nx from the symbol-boundary calculation circuit 86, which has been delayed by one valid flag by the register 90b.

The asymmetric gain circuit 87 includes a subtracter 87a, comparator 87b, first multiplier 87c to multiply the peak timing Np by a first gain Ga, second multiplier 87d to multiply the peak timing Np by a second gain Gb, and a selector 87e to select an output from either the first or second multiplier 87c or 87d. The first and second gains Ga and Gb are in a relation of Ga > Gb. However, the relation is set so that Ga + Gb = 1.

The subtracter 87a subtracts the symbol-boundary error Nx from the peak timing Np supplied from the guard correlation/peak detection circuit 12 to calculate a difference between them.

The comparator 87b makes a comparison between the residual from the subtracter 87a and zero (0). When the residual is smaller than 0, the comparator 87b outputs Low (0). If the residual is larger than 0, the comparator 87b will output High (1). When the comparator 87b outputs Low (0), the selector 87e selects and outputs a product of the peak timing Np and Ga from the first multiplier 87c. If the comparator 87b outputs High (1), the selector 87c will select and output a product of the peak timing Np and Gb from the second multiplier 87d.

More specifically, the asymmetric gain circuit 87 judges whether the peak timing Np is earlier or later than the symbol-boundary position Nx. When the peak timing Np is earlier than the symbol-boundary position Nx, it is multiplied by the smaller gain Gb in the asymmetric gain circuit 87. On the contrary, if the peak timing Np is later than the symbol-boundary position Nx, it is multiplied by the larger gain Ga. That is, in case a plurality of peaks is detected due to a multipath environment or the like, the asymmetric gain circuit 87 selects a gain as a multiplier for the peak timing Np so that synchronization can easily be made with a temporarily earlier signal (main wave).

The peak timing Np multiplied by a gain in the asymmetric gain circuit 87 is supplied to the low-pass filter 88.

(Low-pass filter and selector)

The low-pass filter 88 is supplied with the peak timing Np multiplied by the gain in the asymmetric gain circuit 87 and the valid flag from the guard correlation/peak detection circuit 12. Also, the low-pass filter 88 is supplied with the initial phase from the initial-phase calculation circuit 42 and load flag from the synchronization management circuit 89.

The low-pass filter 88 includes a register 88a, multiplier 88b, subtracter 88c and adder 88d.

The register 88a stores the current estimated phase. The multiplier 88b multiplies the current estimated phase stored in the register 88a by a predetermined coefficient. The subtracter 88c subtracts the output from the multiplier 88b from the output from the asymmetric gain circuit 87. The adder 88d adds together the current estimated phase stored in the register 88a and output from the subtracter 88c to provide an estimated phase. The output from the adder 88d is provided as an output from the low-pass filter 88.

The selector 90a makes a selection between the output from the low-pass filter 88 and output from the initial-phase calculation circuit 42 to provide a symbol-boundary position Nx. The selector 90a makes a selection according to the load flag from the synchronization management circuit 89. When the load flag is High (1), the initial phase from the initial-phase calculation circuit 42 is outputted as a symbol-boundary position Nx. If the load flag is Low (0), the output from the low-pass filter 88 will be outputted as the symbol-boundary position Nx.

Note here that the register 88a is a load-enable register, and supplied at an enable port EN thereof with the valid flag, at an input port D with the output from the adder 88d, at a load-enable port LEN with the load flag from the synchronization management circuit 89, and at a load terminal LD thereof with the initial phase from the initial-phase calculation circuit 42. That is, the register 88a can be supplied with two estimated values, one being an estimated value as a current estimated phase from the adder 88d and the other being an estimated value from the external initial-phase calculation circuit 42.

The above two values may be used as current estimated phases for supplied to the register 88a. The initial phase from the initial-phase calculation circuit 42 permits a quicker response because it is not necessary to make cumulative addition of phase errors.

On this account, in the low-pass filter 88, the synchronization management circuit 89 manages the two states: synchronization pull-in and steady state.

When in the synchronization pull-in state, the synchronization management circuit 89 stores the initial phase from the initial-phase calculation circuit 42 into the register 88a with the load flag being set to High (1) in order to reduce the pull-in period, and delivers the output from the initial-phase calculation circuit 42 as a symbol-boundary position Nx at the selector 90a. On the other hand, when in the steady state, the synchronization management circuit 89 stores the output from the low-pass filter 88, delivered at the adder 88d, into the register 88a with the load flag being set to Low (0), and delivers the output from the low-pass filter 88 as a symbol-boundary position Nx at the selector 90a.

Also, the synchronization management circuit 89 manages the pull-in state and steady state by a state machine, for example. For example, the synchronization management circuit 89 uses a timer to take, as the pull-in state, the state after start of the system operation until a predetermined time elapses, while taking, as the steady state, the state after the predetermined time elapses, or monitors the output from the initial-phase calculation circuit 42 to take, as the pull-in state, the state until the variation of the output from the initial-phase calculation circuit 42 falls within a predetermined range, while taking the state after the output variation falls within the range.

In the aforementioned fifth embodiment, synchronization of symbol-boundary positions is pulled in rapidly by forming the symbol-boundary calculation circuit from a feed-forward type filter.

(Variant of the fifth embodiment)

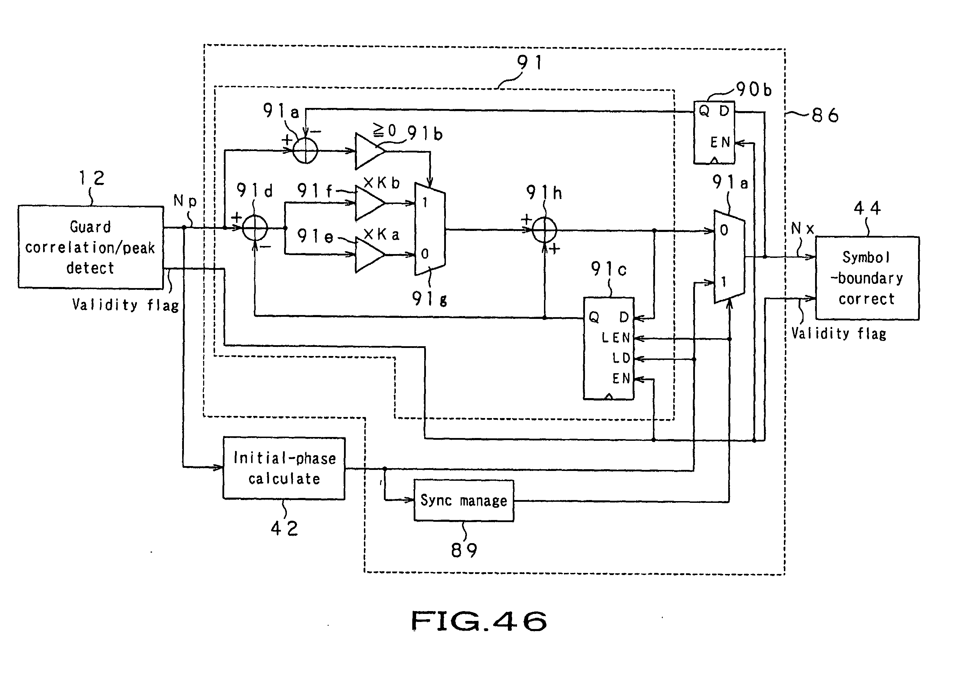

According to the fifth embodiment, the symbol-boundary calculation circuit 86 may be designed like a circuit shown in FIG. 46.

As shown in FIG. 46, the symbol-boundary calculation circuit 86 includes an asymmetric low-pass filter 91, synchronization management circuit 89, selector 90a, and an enable register 90b.

The asymmetric low-pass filter 91 is supplied with the peak timing Np and valid flag from the guard correlation/peak detection circuit 12. Also, the asymmetric low-pass filter 91 is supplied with the initial phase from the initial-phase calculation circuit 42 and load flag from the synchronization management circuit 89.

As shown, the asymmetric low-pass filter 91 includes a first subtracter 91a, comparator 91b, register 91c, second subtracter 91d, first multiplier 91 e to multiply the residual from the second subtracter 91d by a first gain Ka, second multiplier 91f to multiply the residual from the second subtracter 91d by a second gain Kb, and a selector 91g.

The first and second gains Ka and Kb are in a relation of Ka > Kb.

The first subtracter 91a subtracts the symbol-boundary position Nx from the peak timing Np supplied from the guard correlation/peak detection circuit 12 to provide a residual.

The comparator 91b makes a comparison between the residual from the first subtracter 91a and 0. When the residual is smaller than 0, the comparator 91b outputs Low (0). If the residual is larger than 0, the comparator 91b will output High (1).

The register 91c stores a current estimated phase. The second subtracter 91d subtracts the current estimated phase stored in the register 91c from the peak timing Np from the guard correlation/peak detection circuit 12 to provide a residual component.

The first multiplier 91e multiplies the residual component from the second subtracter 91d by the first coefficient Ka. The second multiplier 91f multiplies the residual from the second subtracter 91d by the second coefficient Kb.

When the output from the comparator 91b is Low (0), the selector 91g selects and outputs the output from the first multiplier 91e (product of the residual component and Ka). If the output from the comparator 91b is High (1), the selector 91g will select and output the output from the second multiplier 91f (product of the residual component and Kb).

An adder 91h also included in the asymmetric low-pass filter 91 adds the current estimated phase stored in the register 91c and output from the selector 91g to provide an estimated phase. The output from the adder 91h is an output from the asymmetric low-pass filter 91.

In the aforementioned variant of the fifth embodiment, synchronization of symbol-boundary positions is pulled in rapidly by forming the symbol-boundary calculation circuit from a feed-forward type IIR filter.

Also in the variant of the fifth embodiment, the asymmetric low-pass filter 91 judges whether the peak timing Np is earlier or later than the symbol-boundary position Nx. When the peak timing Np is earlier than the symbol-boundary position Nx, the asymmetric low-pass filter 91 sets a higher-frequency pass band. If the peak timing Np is later than the symbol-boundary position Nx, the asymmetric low-pass filter 91 will set a lower-frequency pass band. That is, in case a plurality of peaks is detected due to a multipath environment or the like, the asymmetric low-pass filter 91 selects a pass band for a quicker response to a temporarily earlier signal (main wave).

Sixth embodiment

Next, the sixth embodiment of the present invention will be illustrated and described.

The OFDM receiver as the sixth embodiment of the present invention is similar to the OFDM receiver 1 as the first embodiment except for a timing synchronization circuit not including any clock-frequency error calculation circuit and initial-phase calculation circuit corresponding to the clock-frequency error calculation circuit 41 and initial-phase calculation circuit 42, respectively, as in the timing synchronization circuit 13 of the OFDM receiver 1 according to the first embodiment. Therefore, the OFDM receiver according to the sixth embodiment will be described concerning only the timing synchronization circuit. The same or similar components as or to those in the first embodiment will be indicated with the same or similar references as or to those used in the drawings to which reference has been made in the description of the first embodiment, and will not be described in detail any more.

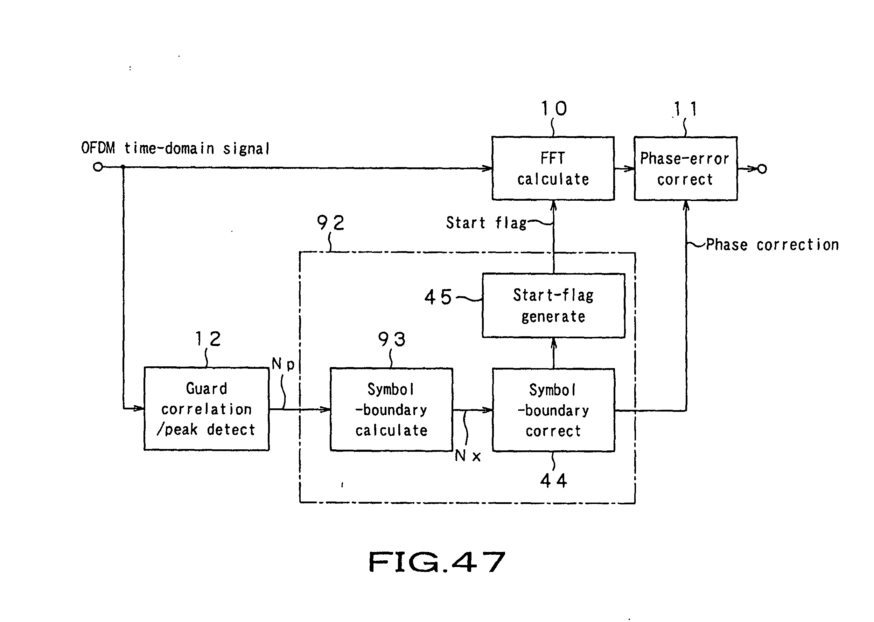

The OFDM receiver as the sixth embodiment includes a timing synchronization circuit 92 as shown in FIG. 47. The timing synchronization circuit 92 is provided in place of the timing synchronization circuit 13 in the first embodiment.

The timing synchronization circuit 92 includes a symbol-boundary correction circuit 93, symbol-boundary correction circuit 44, and a start-flag generation circuit 45. That is, the timing synchronization circuit 92 corresponds to a version of the timing synchronization circuit 13 in the first embodiment, from which the clock-frequency error calculation circuit 41 and initial-phase calculation circuit 42 are omitted.

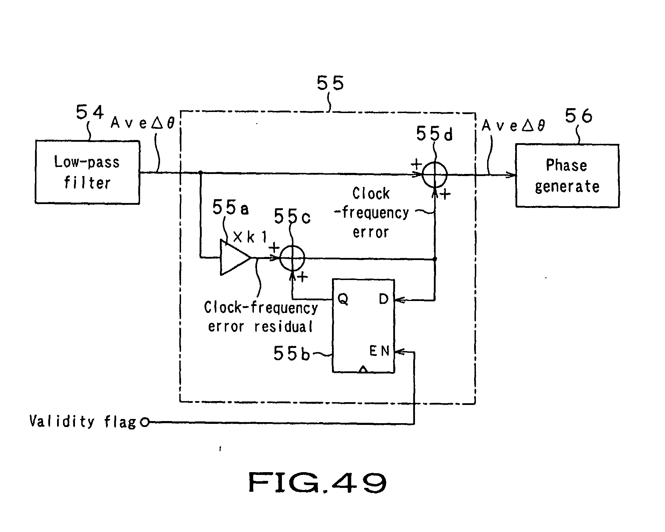

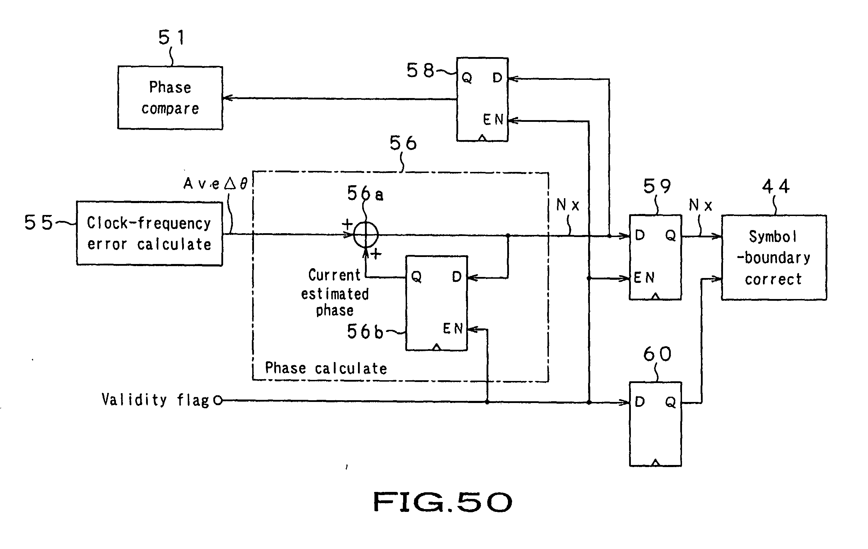

Because of this construction, the symbol-boundary calculation circuit 93 includes a phase comparison circuit 51, limiter 52, asymmetric gain circuit 53, low-pass filter 54, clock-error correction circuit 55, phase generation circuit 56, first register 58, second register 59, and a third register 60. Namely, the symbol-boundary calculation circuit 93 corresponds to a version of the symbol-boundary calculation circuit 43 included in the first embodiment, from which the synchronization management circuit 57 is omitted. Also, along with the omission of the synchronization management circuit 57, the register 55b in the clock-error correction circuit 55 may be an enable register as shown in FIG. 49, and the register 55b in the phase generation circuit 56 may be an enable register as shown in FIG. 50.

Seventh embodiment

Next, the seventh embodiment of the present invention will be illustrated and described.

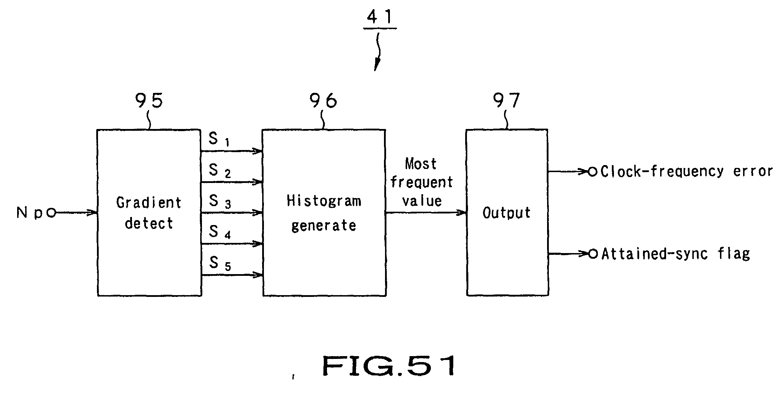

The OFDM receiver as the seventh embodiment uses a circuit shown in FIG. 51 in place of the clock-frequency error calculation circuit 41 in the OFDM receiver 1 as the first embodiment, and thus it is the same as the first embodiment except for this respect. Therefore, the OFDM receiver according to the seventh embodiment will be described concerning only the clock-frequency error calculation circuit also indicated with the same reference 41.

As shown in FIG. 51, the clock-frequency error calculation circuit 41 applied in the seventh embodiment is includes a gradient detection circuit 95, histogram generation circuit 96, and an output circuit 97.

The gradient detection circuit 95 detects a time-change rate of the peak timing Np supplied from the guard correlation/peak detection circuit 12. Namely, it is a circuit to detect a gradient S of the peak timing Np. Inside the gradient detection circuit 95, there is provided a plurality of paths different in detection period, for which a gradient is detected, from each other, and outputs a plurality of gradients S determined on the paths.

For example, in case an OFDM signal is received in a frequency-selective fading environment, the reception levels for main and delayed waves, respectively, vary cyclically. Thus, when a peak position of the guard correlation signal is detected, a symbol-boundary position indicated by the peak position is cyclically switched between the main and delay waves. That is, when the reception level for the main wave is higher, the symbol-boundary position of the main wave is detected. If the reception level for the delayed wave is higher, the symbol-boundary position of the delayed wave is detected.

In a frequency-selective fading state and when a clock-frequency error takes place, the peak timing Np will be increased and decreased by a time difference between the main and delayed waves repeatedly in each generally constant cycle (fading cycle). Also, the cycle in which the reception level is switched between for the main wave and for the delayed wave will differ depending upon the receiving environment, and be longer or shorter.

When a gradient S of the peak timing Np is detected in a receiving environment such as the frequency-selective fading environment, it is not possible as the case may be to accurately detect any gradient depending upon the length of the detection cycle T and detection phase. Therefore, when a gradient S is detected in a fixed detection cycle T and detection phase, an incorrect gradient S will possibly be detected depending upon a fading cycle.

On this account, in the gradient detection circuit 95, there is provided a plurality of gradient detection paths different in detection cycle T for detection of a gradient S of the peak timing Np from each other to make an overall measurement of a clock-frequency error on the basis of the gradient S (S1 to S5 as shown in FIG. 51, for example) detected on the plurality of gradient detection paths. With this detection, a clock-frequency error can be detected with a higher accuracy even if any frequency-selective fading or the like takes place.

The histogram generation circuit 96 is supplied with a plurality of gradients S difference in cycle of detecting the gradient of the peak timing Np. The histogram generation circuit 96 sorts the supplied plurality of gradients S into classes different in level from each other, and generates a histogram representing the detection frequencies of the sorted classes of the gradients S. The histogram generation circuit 96 cumulates the detection frequencies of the gradients S to plot a histogram, and outputs the highest detection-frequency value in the histogram (a gradient of the most frequent gradient class).

By estimating a clock-frequency error on the basis of such a histogram, it is possible to calculate a clock-frequency error accurately and stably.

The output circuit 97 judges whether the most frequent gradient from the histogram generation circuit 96 is stable or not. When the gradient is determined to be stable, the output circuit 97 generates an attained-synchronization flag, and outputs the most frequency gradient as a clock-frequency error.

In the OFDM demodulator according to the seventh embodiment, there is provided the plurality of paths to detect a gradient S of the peak timing Np, and a clock-frequency error is calculated with the detection interval between the paths being different from each other. Thus, even if the receiving environment becomes degraded, it is possible to calculate a clock-frequency error accurately. Also, in the OFDM demodulator according to the seventh embodiment, the frequency with which a gradient of the peak timing Np has been detected is formed into a histogram, and a clock-frequency error is calculated on the basis of the histogram. Thus, it is possible to calculate a clock-frequency error accurately and stably.

In the foregoing, the present invention has been described in detail concerning certain preferred embodiments thereof as examples with reference to the accompanying drawings. However, it should be understood by those ordinarily skilled in the art that the present invention is not limited to the embodiments but can be modified in various manners, constructed alternatively or embodied in various other forms without departing from the scope and spirit thereof as set forth and defined in the appended claims.

**Claims**

1. An OFDM demodulator for demodulating an orthogonal frequency division multiplex (OFDM) signal using, as a unit of transmission, a transmission symbol including an effective symbol generated by making time division of an information series and modulating the information into a plurality of sub-carriers and a guard interval generated by copying the signal waveform of a part of the effective symbol, the apparatus comprising:

   a reference time generating circuit for generating a reference time on the basis of a reference clock;
   a guard correlation peak time detecting circuit for detecting a timing in which the autocorrelation of the guard interval portion of the OFDM signal attains to its peak and generating the timing (peak time) synchronous with the reference time; and
   a symbol-boundary time calculating circuit for calculating, on the basis of the peak time, a symbol-boundary time that is a boundary time of the transmission symbol synchronous with the reference time,
the symbol-boundary time calculating circuit including:

a symbol-boundary time generator for generating a symbol-boundary time synchronous with the reference time;
a time difference detector for detecting a difference between the symbol-boundary time and peak time; and
an averaging unit for calculating a mean time difference by low-pass filtering of the time difference,
the symbol-boundary time generator calculating the symbol-boundary time on the basis of the mean time difference.

2. The apparatus according to claim 1, wherein the symbol-boundary time calculating circuit includes an asymmetric gain unit which multiplies the time difference by a gain and supplies the product to the averaging unit,
the asymmetric gain unit making discrimination between when the peak time is earlier than the symbol-boundary time and when the peak time is later than the symbol-boundary time, and making the gain when the peak time is later than the symbol-boundary time larger than that when the peak time is earlier than the symbol-boundary time.

3. The apparatus according to claim 1, wherein the averaging unit is an IIR-type low-pass filter including a multiplier to multiply the residual resulted from subtraction of the mean time difference from the time difference by a coefficient,
the multiplier making discrimination between when the peak time is earlier than the symbol-boundary time and when the peak time is later than the symbol-boundary time, and making the coefficient when the peak time is later than the symbol-boundary time larger than that when the peak time is earlier than the symbol-boundary time.

4. The apparatus according to claim 1, wherein the symbol-boundary time calculating circuit includes a limiter that limits the level of the time difference and supplies the limited level to the averaging unit,
the limiter having upper and lower limits set therefor, and outputting the upper limit as a time difference when the latter is above the upper limit, the lower limit as a time difference when the latter is below the lower limit, and the time difference when the latter has a value between the lower and upper limits.

5. The apparatus according to claim 1, wherein the symbol-boundary time calculating circuit includes a clock-frequency error adder which adds, to the mean time difference, a clock-frequency error between the OFDM signal transmission clock and reference clock.

6. The apparatus according to claim 5, wherein the symbol-boundary time calculating circuit converts the remaining component of the clock-frequency error on the basis of the mean time difference, calculates the clock-frequency error by making cumulative addition of the remaining component, and adds the calculated clock-frequency error to the mean time difference.

7. The apparatus according to claim 5, further comprising a clock-frequency error calculating circuit for calculating the clock-frequency error on the basis of a change rate of the peak time,
the symbol-boundary time calculating circuit adds, to the mean time difference, a clock-frequency error calculated by the clock-frequency error calculating circuit.

8. The apparatus according to claim 1, further comprising:

a residual converting circuit for converting the remaining component of a clock-frequency error between the OFDM signal transmission clock and reference clock on the basis of the mean time difference;
a first clock-frequency error calculating circuit for calculating a first clock-frequency error by making cumulative addition of the remaining component;
a second clock-frequency error calculating circuit for calculating a second clock-frequency error on the basis of a change rate of the peak time; and
a clock-frequency error selecting circuit for selecting one of the first and second clock-frequency errors,
the symbol-boundary time calculating circuit adding the clock-frequency error selected by the clock-frequency error selecting circuit and the residual converted by the residual converting circuit, and further adding the result of the addition to the mean time difference.

9. The apparatus according to claim 8, wherein the clock-frequency error selecting circuit judges whether the second clock-frequency error is stable or unstable, and selects the first clock-frequency error when the second clock-frequency error is unstable or the second clock-frequency error when the latter is stable.

10. The apparatus according to claim 8, wherein the second clock-frequency error calculating circuit includes:

a plurality of change-rate calculators to calculate a change rate of the peak time; and
an error calculator to calculate the second clock-frequency error on the basis of a plurality of time-change rates from the change-rate calculators,
each of the time-change calculators have a time interval set therefor for calculation of a time-change rate, the time intervals being different from one time-change calculator to another.

11. The apparatus according to claim 8, wherein the second clock-frequency error calculating circuit includes:

a change-rate calculator to calculate the peak-time change rate in units of a transmission symbol;
a histogram generator supplied with the time-change rates in units of a transmission symbol to classify the time-change rates and generate a histogram showing a frequency with which the time-change rate in each class is detected; and
an error calculator to calculate the second clock-frequency error on the basis of the histogram.

12. The apparatus according to claim 1, wherein the symbol-boundary time calculating circuit includes an initial-time selector to select one of a first initial time generated on the basis of a past symbol-boundary time and a second initial time generated on the basis of the peak time,
the symbol-boundary time generator generating a symbol-boundary time by adding the initial time selected by the initial-time selector and the mean time difference.

13. The apparatus according to claim 12, further comprising an initial-time calculating circuit for calculating the second initial time on the basis of the peak time,
the initial-time selector judging whether the second initial time output from the initial-time calculating circuit is stable or unstable, and selecting the first initial time when the second initial time is unstable or the second initial time when the latter is stable.

14. The apparatus according to claim 13, wherein the initial-time calculating circuit calculates the second initial time from the peak time with the use of a low-pass filter.

15. The apparatus according to claim 13, wherein the initial-time calculating circuit calculates the second initial time from the peak time with the use of a moving-averaging filter.

16. The apparatus according to claim 13, wherein the initial-time calculating circuit calculates the second initial time from the peak time with the use of a median-selecting filter.

17. The apparatus according to claim 1, further comprising a setting control circuit for controlling each setting made by the symbol-boundary time calculating circuit correspondingly to a transmission symbol period of the OFDM signal.

18. The apparatus according to claim 1, wherein the symbol-boundary time calculating circuit thins the supplied peak time correspondingly to a transmission symbol period so that the input interval of the peak time will be constant.

19. The apparatus according to claim 1, wherein the guard correlation/peak time detecting circuit cumulates the autocorrelation in units of a predetermined number of symbols and generates a peak time at every cumulated symbol intervals on the basis of the result of the cumulation.

20. The apparatus according to claim 19, wherein the symbol-boundary time calculating circuit is controlled correspondingly to an interval of occurrence of the peak time.

21. The apparatus according to claim 20, wherein the guard correlation/peak time detecting circuit controls the cumulated number of symbols correspondingly to a transmission symbol period so that the interval of occurrence of the peak time will be constant.

**22.** The apparatus according to claim 1, further comprising:

a Fourier transforming circuit for extracting the OFDM signal for every effective symbol period and making Fourier transform of the extracted OFDM signal for the effective symbol period; and
a start signal generating circuit for generating a start signal indicative of a time in which the OFDM signal is to be extracted by the Fourier transforming on the basis of the symbol-boundary time generated by the symbol-boundary time calculating circuit.

**23.** The apparatus according to claim 22, wherein the start signal generating circuit sets a margin smaller than the guard interval period, and generates the start signal at a time delayed by the margin from the symbol-boundary calculation time.

**24.** The apparatus according to claim 1, wherein the symbol-boundary time calculating circuit includes:

an asymmetric gain unit to multiply the time difference by a gain; and
a limiter to limit the level of the time difference,
the asymmetric gain unit making discrimination between when the peak time is earlier than the symbol-boundary time and when the peak time is later than the symbol-boundary time, and making the gain when the peak time is later than the symbol-boundary time larger than that when the peak time is earlier than the symbol-boundary time; and
the limiter having upper and lower limits set therefor, and outputting the upper limit as a time difference when the latter is above the upper limit, the lower limit as a time difference when the latter is below the lower limit, and the time difference when the latter has a value between the lower and upper limits.

**25.** The apparatus according to claim 24, wherein the symbol-boundary time calculating circuit includes a clock-frequency error adder which adds, to the mean time difference, a clock-frequency error between the OFDM signal transmission clock and reference clock.

**26.** The apparatus according to claim 24, further comprising:

a residual converting circuit for converting the remaining component of a clock-frequency error between the OFDM signal transmission clock and reference clock on the basis of the mean time difference;
a first clock-frequency error calculating circuit for calculating a first clock-frequency error by making cumulative addition of the remaining component;
a second clock-frequency error calculating circuit for calculating a second clock-frequency error on the basis of a change rate of the peak time; and
a clock-frequency error selecting circuit for selecting one of the first and second clock-frequency errors,
the symbol-boundary time calculating circuit adding the clock-frequency error selected by the clock-frequency error selecting circuit and the residual converted by the residual converting circuit, and further adding the result of the addition to the mean time difference.

**27.** The apparatus according to claim 24, wherein the symbol-boundary time calculating circuit includes an initial-time selector to select one of a first initial time generated on the basis of a past symbol-boundary time and a second initial time generated on the basis of the peak time,
the symbol-boundary time generator generating a symbol-boundary time by adding the initial time selected by the initial-time selector and the mean time difference.

**28.** The apparatus according to claim 24, further comprising a setting control circuit for controlling each setting made by the symbol-boundary time calculating circuit correspondingly to a transmission symbol period of the OFDM signal.

**29.** The apparatus according to claim 24, wherein the guard correlation/peak time detecting circuit cumulates the autocorrelation in units of a predetermined number of symbols and generates a peak time at every cumulated symbol intervals on the basis of the result of the cumulation.

**30.** The apparatus according to claim 24, further comprising:

a Fourier transforming circuit for extracting the OFDM signal for every effective symbol period and making Fourier transform of the extracted OFDM signal for the effective symbol period; and
a start signal generating circuit for generating a start signal indicative of a time in which the OFDM signal is to be extracted by the Fourier transforming on the basis of the symbol-boundary time generated by the symbol-boundary time calculating circuit.

31. An OFDM demodulator for demodulating an orthogonal frequency division multiplex (OFDM) signal using, as a unit of transmission, a transmission symbol including an effective symbol generated by making time division of an information series and modulating the information into a plurality of sub-carriers and a guard interval generated by copying the signal waveform of a part of the effective symbol, the apparatus including:

a reference time generating circuit for generating a reference time on the basis of a reference clock;
a guard correlation peak time detecting circuit for detecting a timing in which the autocorrelation of the guard interval portion of the OFDM signal attains to its peak and generating the timing (peak time) synchronous with the reference time; and
a symbol-boundary time calculating circuit for calculating, on the basis of the peak time, a symbol-boundary time that is a boundary time of the transmission symbol synchronous with the reference time,
the symbol-boundary time calculating circuit including:

an asymmetric gain unit that makes discrimination between when the peak time is earlier than the symbol-boundary time and when the peak time is later than the symbol-boundary time, makes the gain when the peak time is later than the symbol-boundary time larger than that when the peak time is earlier than the symbol-boundary time, and multiplies the peak time by the gain; and
an averaging unit for calculating a symbol-boundary time by low-pass filtering of the peak time multiplied by the gain by the asymmetric gain unit.

32. The apparatus according to claim 31, wherein the asymmetric gain unit multiplies the remaining component generated by the low-pass filter in the averaging unit by a coefficient.

33. The apparatus according to claim 31, wherein the symbol-boundary time calculating circuit includes an initial-time selector to select one of a first initial time generated on the basis of a past symbol-boundary time and a second initial time generated on the basis of the peak time,
the averaging unit generating a symbol-boundary time by adding the initial time selected by the initial-time selector and a value calculated by the low-pass filter.

Preceding OFDM symbol | OFDM symbol | Next OFDM symbol

Copy

Guard interval | Effective symbol | Time

A B FFT calculation range
(effective symbol length)

# FIG.1

FIG.2

EP 1 492 259 A1

FIG.3A

FIG.3B

FIG.3C

FIG.4

FIG.5

EP 1 492 259 A1

EP 1 492 259 A1

1

2 3 4 5 7 8 9 OFDM time-domain signal 10 11 19 20 21

OFDM frequency-domain signal

3 a
3 b

RF

| BPF | I F | A／D | DC cancel | Digital orthogonal demodulate | Carrier frequency error correct | | FFT calculate | Phase correct | Equalize | Demap | Transmission channel decode |

→O T S

Sampling clock

Carrier frequency error correction

~Start flag

~Symbol No.

17

12

13

NCO

Guard correlate /peak detect

Timing sync

N p

Phase correction

Frame sync ~18

Clock generate

→ Operating clock

6

Phase~

16 ⊕

Narrow-band carrier -frequency error calculate ~14

15

22

Wide-band carrier-frequency error calculate

Transmission control information decode

Transmission control information

FIG.6

EP 1 492 259 A1

**FIG.7**

Symbol

Reception symbol

Operation clock

Start flag

Error smaller than one clock

## FIG.8

FIG.9

12

31 Nu delay
32 Complex conjugate
33
34 Moving sum (Ng)
Guard correlation signal
35 Amplitude calculate
36 Angle convert
37 Free-running counter
0..(Ns-1)
N
N=0
38 Peak detect
39 Output

PFDM time-domain signal

Phase component
Peak timing value Np
Effective flag

EP 1 492 259 A1

Symbol # i        Symbol # i + 1        Symbol # i + 2

Guard interval    Guard interval    Guard interval

# FIG.10A

OFDM time-domain signal (without delay)

Effective symbol delay

# FIG.10B

OFDM time-domain signal (delayed by the effective symbol time)

# FIG.10C

Guard correlation signal        ~Peak timing      ~Peak timing      ~Peak timing

Counter cycle

# FIG.10D

Count (N)        Ns-1 0        561 Ns-1 0        700 Ns-1 0        561 Ns-1 0

# FIG.10E

Peak timing (Np)

| 280 | 420 | 561 | 700 |
|-----|-----|-----|-----|

# FIG.10F

Validity flag

X

Y

Main wave

Delayed wave

1

# FIG.11

FIG.12A
OFDM time-domain signal (without delay)

FIG.12B
OFDM time-domain signal (delayed by the effective symbol time)

FIG.12C
Guard correlation signal

FIG.12D
Count (N)

FIG.12E
Peak timing (Np)

FIG.12F
Validity flag

EP 1 492 259 A1

Ns

Np
Delayed wave
Main wave

Time

# FIG.13

Ns

Np

Main wave

Time zone for which power is small

Time

# FIG.15

Ns

Np
Delayed wave
Main wave

Time

# FIG.17

Symbol #i | Symbol #i+1 | Symbol #i+2

Guard interval    Guard interval    Guard interval    Guard interval

## FIG.14A
OFDM time-domain signal (without delay)

Effective symbol delay

## FIG.14B
OFDM time-domain signal (delayed by the effective symbol time)

Time zone for which power is small

## FIG.14C
Guard correlation signal

Peak timing

Counter value          Error detection

## FIG.14D
Count (N)

| Ns-1 | 0 | 561 | Ns-1 | 0 | 560 | Ns-1 | 0 | 561 | Ns-1 |

Erroneous value

## FIG.14E
Peak timing (Np)

| 559 | 561 | 561 | Ns-1 |

## FIG.14F
Validity flag

**FIG.16A**
OFDM time-domain signal (without delay)

**FIG.16B**
OFDM time-domain signal (delayed by the effective symbol time)

**FIG.16C**
Guard correlation signal

**FIG.16D**
Count (N)

**FIG.16E**
Peak timing (Np)

**FIG.16F**
Validity flag

FIG.18

FIG.19

FIG.20

FIG.21

EP 1 492 259 A1

FIG.22

FIG.23

FIG.24

EP 1 492 259 A1

FIG.25

FIG.26

**FIG.27**

Guard correlation /peak detect 12

Np
Validity flag

Clock -frequency error calculate 41

Initial -phase calculate 42

Phase compare 51
Limiter 52
Asymmetric gain 53
Low-pass filter 54
Clock -error correct 55
Phase generate 56
Sync manage 57

First load flag
Second load flag

43

58
D Q EN

Nx
59 D Q EN
Validity flag
60 D Q

Nx

Symbol -boundary correct 44

FIG.28

FIG.29

FIG.30

FIG.31

FIG.32

EP 1 492 259 A1

FIG.33

**FIG.34**

EP 1 492 259 A1

FIG.35

FIG.36

FIG.37

FIG.38A
OFDM time-domain signal (without delay)

FIG.38B
OFDM time-domain signal (delayed by the effective symbol time)

FIG.38C
Guard correlation signal

FIG.38D
Cumulative addition for M symbols (M=4)

FIG.38E
Counter cycle

FIG.38F
Peak timing (Np)

FIG.38G
Validity flag

FIG.38H
Symbol flag

OFDM symbol

Guard interval — Valid symbol

Cumulative-calculation interval (M symbols)

Peak detection interval    Peak detection interval

450    470

EP 1 492 259 A1

**FIG.39**

FIG.40

EP 1 492 259 A1

FIG.41

FIG.42

FIG.43

FIG.44

FIG.45

FIG.46

FIG.47

93

58

| 12 | 51 | 52 | 53 | 54 | 55 | 56 | 59 | 44 |

Np

Guard correlation /peak detect

Validity flag

Phase compare

Limiter

Asymmetric gain

Low-pass filter

Clock-error correct

Phase generate

Nx

Q D

EN

D Q

EN

Nx

Validity flag

Symbol -boundary correct

D Q

60

**FIG.48**

FIG.49

EP 1 492 259 A1

FIG.50

$\underline{41}$

Np —○→ | Gradient detect | $S_1$ $S_2$ $S_3$ $S_4$ $S_5$ →→→→→ | Histogram generate | Most frequent value → | Output | →○ Clock-frequency error

→○ Attained-sync flag

95   96   97

FIG.51

| INTERNATIONAL SEARCH REPORT | International application No. |
|---|---|
| | PCT/JP03/16260 |

**A. CLASSIFICATION OF SUBJECT MATTER**
Int.Cl$^7$ H04J11/00

According to International Patent Classification (IPC) or to both national classification and IPC

**B. FIELDS SEARCHED**

Minimum documentation searched (classification system followed by classification symbols)
Int.Cl$^7$ H04J11/00

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-141885 A (Mitsubishi Electric Corp.), 17 May, 2002 (17.05.02), Full text; all drawings (Family: none) | 1-33 |
| A | JP 10-190610 A (Fujitsu Ten Ltd.), 21 July, 1998 (21.07.98), Full text; all drawings (Family: none) | 1-33 |
| A | JP 11-163824 A (Advanced Digital Television Broadcasting Laboratory), 18 June, 1999 (18.06.99), Full text; all drawings & JP 2871655 B1 | 1-33 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 March, 2004 (30.03.04) | 13 April, 2004 (13.04.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

EP 1 492 259 A1

**INTERNATIONAL SEARCH REPORT**

| | International application No. |
|---|---|
| | PCT/JP03/16260 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-290371 A (Toshiba Corp.), 04 October, 2002 (04.10.02), Full text; all drawings (Family: none) | 1-33 |
| A | JP 2001-156745 A (Sony Corp.), 08 June, 2001 (08.06.01), Full text; all drawings (Family: none) | 1-33 |
| A | JP 11-355241 A (Matsushita Electric Industrial Co., Ltd.), 24 December, 1999 (24.12.99), Full text; all drawings (Family: none) | 1-33 |

Form PCT/ISA/210 (continuation of second sheet) (July 1998)